(19) Europäisches Patentamt
European Patent Office
Office européen des brevets

(11) EP 4 130 147 A1

(12) EUROPEAN PATENT APPLICATION
published in accordance with Art. 153(4) EPC

(43) Date of publication:
**08.02.2023 Bulletin 2023/06**

(21) Application number: **21779485.8**

(22) Date of filing: **17.02.2021**

(51) International Patent Classification (IPC):
***C08L 33/02*** (1974.07) ***C08L 33/14*** (1974.07)
***C09D 133/04*** (1990.01) ***C09D 201/02*** (1990.01)
***G02B 5/02*** (1968.09) ***C08K 3/22*** (1974.07)
***C09D 7/61*** (2018.01) ***C09D 7/65*** (2018.01)

(52) Cooperative Patent Classification (CPC):
**C08K 3/22; C08L 33/02; C08L 33/14; C09D 7/61; C09D 7/65; C09D 133/04; C09D 201/02; G02B 5/02**

(86) International application number:
**PCT/JP2021/005797**

(87) International publication number:
**WO 2021/199748 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2020 JP 2020060819**

(71) Applicant: **FUJIFILM Corporation**
**Tokyo 106-8620 (JP)**

(72) Inventors:
- **ARAYAMA Kyohei**
  **Haibara-gun, Shizuoka 421-0396 (JP)**
- **KITAJIMA Shunsuke**
  **Haibara-gun, Shizuoka 421-0396 (JP)**

(74) Representative: **HGF**
**HGF Limited**
**1 City Walk**
**Leeds LS11 9DX (GB)**

(54) **COMPOSITION, FILM, AND OPTICAL SENSOR**

(57) The composition of the present invention includes specific white particles, a film-forming component, and a solvent, in which the film-forming component includes two or more kinds of resins, or includes one or more kinds of resins and one or more kinds of polymerizable monomers, and at least one of the resin is a resin A which contains a constitutional unit A having a formula weight of 1,000 or more and including a constitutional unit GF with a specific structure and a constitutional unit B having an acidic group, and satisfies at least one of the following requirement 1 or the following requirement 2.

Requirement 1: the constitutional unit A includes a molecular chain containing two or more kinds of the constitutional units GF.

Requirement 2: the resin A contains two or more kinds of the constitutional units A having different structures of the constitutional unit GF.

FIG. 1

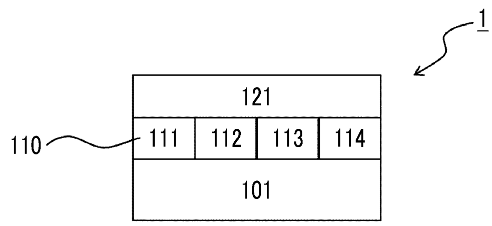




Processed by Luminess, 75001 PARIS (FR)

## Description

### BACKGROUND OF THE INVENTION

1. Field of the Invention

The present invention relates to a composition, a film, and an optical sensor.

2. Description of the Related Art

Titanium oxide is particles having a high refractive index. Attempts to use such particles having a high refractive index for a light scattering film or the like have been studied.

JP2016-161859A discloses an invention of a light scattering sheet including a plurality of polymers having different refractive indexes from each other and including a light scattering layer having a co-continuous phase structure in at least a part of a region, in which an incidence ray is isotropically transmitted and scattered, a scattering angle showing the maximal value of intensity of scattered light is 2° to 40°, and a total light transmittance is 70% to 100%. It is said that any continuous phase forming the co-continuous phase structure may include high refraction fine particles.

In addition, WO2017/150112A discloses a dispersion composition containing a colorant and a resin, in which the resin contains a structural unit A having a polymer chain and a structural unit B having an acidic group, the polymer chain contains two or more kinds of structural units GF, and the structural unit GF is selected from the group consisting of a structural unit composed of an oxyalkylene group and a structural unit composed of an oxyalkylene carbonyl group.

### SUMMARY OF THE INVENTION

In recent years, there has been an increasing demand for a film which appropriately blocks visible light and has high light scattering properties.

In addition, there is room for further improvement in adhesiveness between the film and a support.

An object of the present invention is to provide a composition with which a film having excellent adhesiveness and light scattering properties can be formed, a film consisting of the composition or a film having excellent adhesiveness and light scattering properties, and an optical sensor including the film.

Examples of typical embodiments of the present invention are shown below.

<1> A composition comprising:

white particles having a refractive index of 2.0 or more and an average primary particle diameter of 200 nm or less;
a film-forming component including at least one selected from the group consisting of a resin and a polymerizable monomer; and
a solvent,
in which the film-forming component includes two or more kinds of resins, or includes one or more kinds of resins and one or more kinds of polymerizable monomers,
at least one of the resin is a resin A which contains a constitutional unit A having a formula weight of 1,000 or more and including a constitutional unit GF and a constitutional unit B having an acidic group, and satisfies at least one of the following requirement 1 or the following requirement 2, and
the constitutional unit GF is a constitutional unit selected from the group consisting of a constitutional unit represented by Formula (1-1) and a constitutional unit represented by Formula (1-2),
requirement 1: the constitutional unit A includes a molecular chain containing two or more kinds of the constitutional units GF,
requirement 2: the resin A contains two or more kinds of the constitutional units A having different structures of the constitutional unit GF,

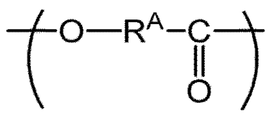 (1-1) 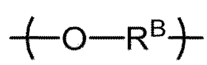 (1-2)

in Formula (1-1) or Formula (1-2), $R^A$ represents a divalent organic group and $R^B$ represents a divalent organic group.

<2> The composition according to <1>,
in which, in a case where the composition is heated to form a film having a thickness of 4 μm, a phase-separated structure between a first phase including the white particles and a second phase with a lower content of the white particles than the first phase is formed in the film.
<3> The composition according to <1> or <2>, in which, in a case where the composition is heated to form a film having a thickness of 4 μm, a maximum value of a transmittance of the film to light having a wavelength in a range of 400 to 1,000 nm is 80% or less.
<4> The composition according to any one of <1> to <3>, in which at least one of the resin satisfies the requirement 1.
<5> The composition according to any one of <1> to <4>, in which the constitutional unit A contains a constitutional unit L1 represented by Formula (1) and a constitutional unit L2 selected from the group consisting of a constitutional unit represented by Formula (2) and a constitutional unit represented by Formula (3),

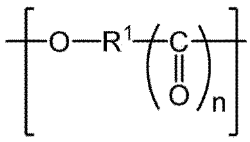 (1) 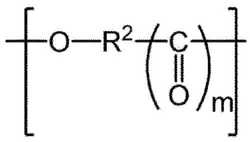 (2)

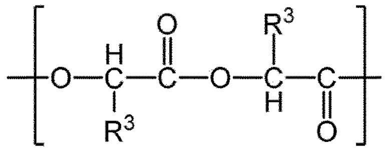 (3)

in Formula (1), $R^1$ represents an alkylene group, and n represents 0 or 1, in Formula (2), $R^2$ represents an alkylene group different from $R^1$, and m represents 0 or 1, in Formula (3), $R^3$'s each independently represent an alkyl group.
<6> The composition according to <5>,

in which the constitutional unit A is a constitutional unit represented by Formula (A), and
the constitutional unit B is a constitutional unit represented by Formula (B),

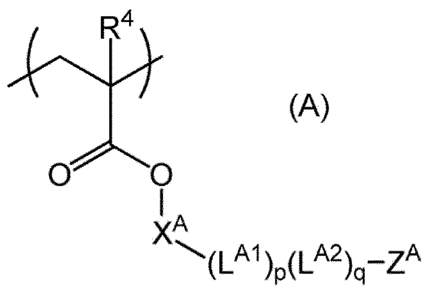 (A) 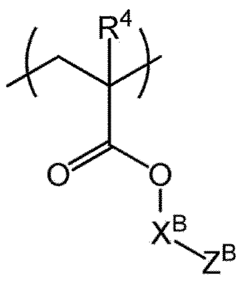 (B)

in Formula (A), $R^4$ represents a hydrogen atom or an alkyl group, $X^A$ represents a single bond or a divalent linking group, p and q each represent an integer of 1 or more, $Z^A$ represents a hydrogen atom or a monovalent organic group, and $L^{A1}$ and $L^{A2}$ each represent the constitutional unit L1 and the constitutional unit L2,
in Formula (B), $R^4$ represents a hydrogen atom or an alkyl group, $X^B$ represents a single bond or a divalent linking group, $Z^B$ represents a hydrogen atom, an acidic group selected from the group consisting of a carboxy group, a phosphoric acid group, a sulfonic acid group, a phenolic hydroxy group, and a thiol group, or a derivative group of these groups, and in a case where $Z^B$ is a hydrogen atom, $X^B$ represents a single bond.

<7> The composition according to <6>, in which a sum of p and q in Formula (A) is more than 5 and less than 120.
<8> The composition according to any one of <5> to <7>, in which a mass ratio of the constitutional unit L1 to the constitutional unit L2 is more than 50/50 and less than 95/5.
<9> The composition according to any one of <5> to <7>,

in which the constitutional unit represented by Formula (2) is included as the constitutional unit L2, and
$R^1$ in Formula (1) and $R^2$ in Formula (2) are each an ethylene group, a propylene group, a 1-ethylethylene group, a trimethylene group, a 1-methyltrimethylene group, a 1-butyltrimethylene group, a tetramethylene group,

a 2-methyltetramethylene group, a 1-tridecyltetramethylene group, a pentamethylene group, a 1-methylpentamethylene group, a 3-methylpentamethylene group, a 1-ethylpentamethylene group, or a 1-decylpentamethylene group.

<10> The composition according to any one of <1> to <9>, in which an acid value of the resin A is 20 to 200 mgKOH/g.
<11> The composition according to any one of <1> to <10>, in which the film-forming component further includes a resin B different from the resin A.
<12> The composition according to <11>, in which one of the resin A and the resin B is a dispersant for the white particles and the other is a binder.
<13> The composition according to <11> or <12>, in which a difference in SP value between the resin A and the resin B is 0.20 $MPa^{0.5}$ or more.
<14> The composition according to any one of <11> to <13>, in which the resin B is a star polymer.
<15> The composition according to any one of <11> to <14>, in which a weight-average molecular weight of the resin B is 5,000 or more.
<16> The composition according to any one of <11> to <15>, in which the resin B is included in an amount of 10 to 250 parts by mass with respect to 100 parts by mass of the resin A.
<17> A film consisting of the composition according to any one of <1> to <16>.
<18> A film comprising:

white particles having a refractive index of 2.0 or more and an average primary particle diameter of 200 nm or less; and
a film-forming component including at least one selected from a resin and a polymerizable monomer or a cured substance of the film-forming component,
in which the film-forming component includes two or more kinds of resins, or includes one or more kinds of resins and one or more kinds of polymerizable monomers,
at least one of the resin is a resin A which contains a constitutional unit A having a formula weight of 1,000 or more and including a constitutional unit GF and a constitutional unit B having an acidic group, and satisfies at least one of the following requirement 1 or the following requirement 2, and
the constitutional unit GF is selected from the group consisting of a constitutional unit represented by Formula (1-1) and a constitutional unit represented by Formula (1-2),
requirement 1: the constitutional unit A includes a molecular chain containing two or more kinds of the constitutional units GF,
requirement 2: the resin A contains two or more kinds of the constitutional units A having different structures of the constitutional unit GF,

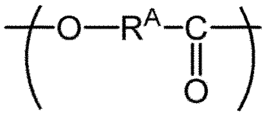 (1-1) 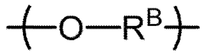 (1-2)

in Formula (1-1) or Formula (1-2), $R^A$ represents a divalent organic group and $R^B$ represents a divalent organic group.

<19> An optical sensor comprising the film according to <17> or <18>.

According to the present invention, it is possible to provide a composition which has excellent storage stability and with which a film having excellent adhesiveness and light scattering properties can be formed, a film consisting of the composition or a film having excellent adhesiveness and light scattering properties, and an optical sensor including the film.

## BRIEF DESCRIPTION OF THE DRAWINGS

Fig. 1 is a schematic diagram showing an embodiment of an optical sensor according to an aspect of the present invention.
Fig. 2 is a schematic diagram showing another embodiment of the optical sensor according to the aspect of the present invention.

## DESCRIPTION OF THE PREFERRED EMBODIMENTS

Hereinafter, the details of the present invention will be described.

The following description regarding configuration requirements has been made based on a representative embodiment of the present invention. However, the present invention is not limited to the embodiment.

In this specification, numerical ranges represented by "to" include numerical values before and after "to" as lower limit values and upper limit values.

In this specification, unless specified as a substituted group or as an unsubstituted group, a group (atomic group) denotes not only a group (atomic group) having no substituent but also a group (atomic group) having a substituent. For example, "alkyl group" denotes not only an alkyl group having no substituent (unsubstituted alkyl group) but also an alkyl group having a substituent (substituted alkyl group).

In this specification, "(meth)acrylate" represents acrylate or methacrylate, "(meth)acryl" represents acryl and methacryl, "(meth)allyl" represents allyl and methallyl, and "(meth)acryloyl" represents acryloyl and methacryloyl.

In this specification, in a chemical formula, Me represents a methyl group, Et represents an ethyl group, Pr represents a propyl group, Bu represents a butyl group, and Ph represents a phenyl group.

In this specification, unless specified otherwise, "exposure" denotes not only exposure using light but also drawing using a corpuscular beam such as an electron beam or an ion beam. Examples of the light used for exposure include an actinic ray or radiation, for example, a bright light spectrum of a mercury lamp, a far ultraviolet ray represented by excimer laser, an extreme ultraviolet ray (EUV ray), an X-ray, or an electron beam.

In this specification, a weight-average molecular weight and a number-average molecular weight are defined as values in terms of polystyrene measured by gel permeation chromatography (GPC). In this specification, the weight-average molecular weight (Mw) and the number-average molecular weight (Mn) can be obtained, for example, by using HLC-8220GPC (manufactured by Tosoh Corporation), using a column in which TOSOH TSK gel Super HZM-H, TOSOH TSK gel Super HZ4000, and TOSOH TSK gel Super HZ2000 are linked to each other, and using tetrahydrofuran as a developing solvent.

In this specification, a value of refractive index is a value of refractive index with refractive index to light at a wavelength of 589 nm at 23°C, unless otherwise specified.

(Composition)

A composition according to an embodiment of the present invention includes white particles having a refractive index of 2.0 or more and an average primary particle diameter of 200 nm or less, a film-forming component including at least one selected from the group consisting of a resin and a polymerizable monomer, and a solvent, in which the film-forming component includes two or more kinds of resins, or includes one or more kinds of resins and one or more kinds of polymerizable monomers, at least one of the resin is a resin A which contains a constitutional unit A having a formula weight of 1,000 or more and including a constitutional unit GF and a constitutional unit B having an acidic group, and satisfies at least one of the following requirement 1 or the following requirement 2, and the constitutional unit GF is a constitutional unit selected from the group consisting of a constitutional unit represented by Formula (1-1) and a constitutional unit represented by Formula (1-2).

Requirement 1: the constitutional unit A includes a molecular chain containing two or more kinds of the constitutional units GF.

Requirement 2: the resin A contains two or more kinds of the constitutional units A having different structures of the constitutional unit GF.

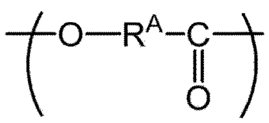 (1-1) 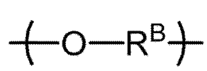 (1-2)

In Formula (1-1) or Formula (1-2), $R^A$ represents a divalent organic group and $R^B$ represents a divalent organic group.

The composition according to the embodiment of the present invention includes, as a film-forming component, two or more kinds of resins or one or more kinds of resins and one or more kinds of polymerizable monomers, in which at least one of the resins is the resin A having a specific structure.

Therefore, it is presumed that a phase-separated structure between a first phase including the above-described white particles and a second phase with a lower content of the above-described white particles than the first phase is formed in the above-described film.

Due to this phase-separated structure, a position of the white particles may be biased in the film, and it is

considered that the first phase which is a region having a large refractive index and the second phase which is a region having a small refractive index coexist in the film. Since light is scattered between these two phases, it is presumed that the film obtained by the composition according to the embodiment of the present invention has excellent light scattering properties.

In addition, the resin A contains the constitutional unit A including a constitutional unit GF and the constitutional unit B having an acidic group, and satisfies the above-described requirement 1 or requirement 2.

Since the resin A contains the constitutional unit GF, it is considered that a film having excellent light scattering properties on a long wavelength side (for example, a wavelength of 940 nm or more) can be obtained. By including the above-described constitutional unit A, crystallinity and phase separability of the resin A are improved, and it is presumed that, regardless of whether the resin A is included in the first phase or the second phase, the size of the above-described first phase is large to some extent.

In addition, since the resin A satisfies at least one of the above-described requirement 1 or requirement 2, it is considered that a film having excellent light scattering properties on a short wavelength side (for example, a wavelength of 450 nm or less) can be obtained. By satisfying at least one of the requirement 1 or requirement 2, the crystallinity and phase separability of the resin A are not too large, and it is presumed that, regardless of whether the resin A is included in the first phase or the second phase, the size of the above-described first phase is small to some extent.

As described above, according to the present invention, since the size of the first phase can be set to an appropriate size, it is presumed that the light scattering properties are excellent. In addition, it is considered that the light scattering properties are excellent particularly in a wide range of wavelengths (for example, 400 nm to 1,000 nm).

In addition, the resin A contains the constitutional unit B having an acidic group. As a result, it is presumed that developability of the film is improved and adhesiveness of the film obtained after development to a support is improved.

In addition, in order to improve the light scattering properties of the film, a method of using particles having a large particle size and a high refractive index has been known. However, the particles having a high refractive index (hereinafter, also referred to as high-refractive particles) generally tend to have a large specific gravity. In a case where such particles having a large specific gravity are contained and used in a composition including a solvent, the particles may settle during storage of the composition. Therefore, with a known composition in the related art, it may be difficult to achieve both storage stability and light scattering properties of the obtained film at a high level.

However, it is considered that the composition according to the embodiment of the present invention has good storage stability.

The composition according to the embodiment of the present invention includes white particles having a refractive index of 2.0 or more and an average primary particle diameter of 200 nm or less. Here, many white particles having a refractive index of 2.0 or more generally have a large specific gravity, but in the composition according to the embodiment of the present invention, since the white particles having a relatively small particle diameter with an average primary particle diameter of 200 nm or less are used as the particles having a refractive index of 2.0 or more, sedimentation of the particles in the composition including a solvent can be suppressed, and as a result, it is presumed that the storage stability of the composition is good.

In addition, since the resin A satisfies at least one of the above-described requirement 1 or requirement 2, it is considered that generation of foreign matter in the film is likely to be suppressed even after the film formed of the composition is formed and then stored in a state of the film (for example, storage for 72 hours). In the present invention, the fact that the generation of foreign matter in the film after storage is suppressed as described above is also referred to as that "generation of foreign matter over time is suppressed". Since the resin A satisfies at least one of the above-described requirement 1 or requirement 2, it is presumed that the crystallinity of the resin A itself is lowered and crystallization in the film is suppressed.

Here, since the light scattering sheet of the invention disclosed in JP2016-161859A is said to have a total light transmittance of 70% to 100%, the light scattering sheet of the invention disclosed in JP2016-161859A is not a member which appropriately blocks visible light, but rather has high visible light transmittance.

In addition, in the invention disclosed in WO2017/150112A, a technical idea of improving the light scattering properties by forming a phase-separated structure is not disclosed.

Hereinafter, characteristics of the composition according to the embodiment of the present invention and details of each component included in the curable composition according to the embodiment of the present invention will be described.

<Phase-separated structure>

In the composition according to the embodiment of the present invention, in a case where the composition is heated to form a film having a thickness of 4 μm, it is preferable that a phase-separated structure between a first phase including the particles and a second phase with a lower content of the particles than the first phase is formed in the film.

By forming such a phase-separated structure in the film, the light scattering properties can be improved, and

angle dependence of the scattered light can be reduced.

A base material of the first phase and the second phase is the film-forming component or a cured substance derived from the film-forming component.

In addition, mere aggregates of the above-described particles are one form of the particles, and the mere aggregates of the above-described particles themselves are not the first phase. The above-described first phase is a phase in which the above-described particles are present in the film-forming component or the cured substance derived from the film-forming component. In addition, it is sufficient that the second phase has a lower content of the above-described particles than the first phase, and the second phase may not substantially include the above-described particles. For the reason that it is easy to obtain more excellent light scattering properties, it is preferable that the second phase does not substantially include the above-described particles.

The formation of the phase-separated structure between the first phase and the second phase in the film can be observed using a scanning electron microscope (SEM), a transmission electron microscope (TEM), or an optical microscope. For example, the composition is applied to a support such as a glass substrate and heated at 200°C for 5 minutes to form a film having a thickness of 4 μm, and then a cross section of the obtained film in a thickness direction is observed using a scanning electron microscope (SEM), a transmission electron microscope (TEM), or an optical microscope. As a result, it is possible to investigate whether or not the phase-separated structure between the first phase and the second phase is formed in the film.

In addition, for example, in a case where the composition includes a polymerizable compound and a photopolymerization initiator as a film-forming component, exposure for curing the polymerizable compound may be performed before the heating.

For example, the above-described phase-separated structure can be formed by appropriately changing the types of resins (for example, the resin A and a resin other than the resin A) and polymerizable monomers used as the film-forming component included in the composition.

Examples of one aspect thereof include a method of using, as the film-forming component, a first resin and a second resin having low compatibility with the first resin. In a case where such a film-forming component is used, a phase-separated structure between a phase including the first resin as a main component and a phase including the second resin as a main component can be formed during film formation. For example, in a case where one of the first resin or the second resin is a resin as a particle dispersant and the other is a binder resin, many particles can be unevenly distributed in the phase including the resin as a dispersant as a main component.

In addition, examples of another aspect thereof include a method of using, as the film-forming component, a first resin and a polymerizable monomer having low compatibility with the first resin. In a case where such a film-forming component is used, a phase-separated structure between a phase including the first resin as a main component and a phase including a cured substance derived from the polymerizable monomer as a main component can be formed during film formation.

In addition, examples of still another aspect thereof include a method in which the type of the resin or the polymerizable monomer used in the film-forming component is appropriately changed, and the film-forming component is spinodally decomposed during film formation to form a phase-separated structure between the first phase and the second phase.

The phase-separated structure in the above-described film preferably has a phase interface isotropically present in the film, and for example, more preferably a sea-island structure or a co-continuous phase structure. By forming these phase-separated structures, light can be effectively scattered between the first phase and the second phase, and particularly excellent light scattering properties can be easily obtained. The sea-island structure is a structure formed by a sea region which is a continuous region and an island region which is a discontinuous region. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence. In addition, the co-continuous phase structure is a network structure in which the first phase and the second phase each form a continuous phase structure intrusive to each other.

<Maximum value of transmittance>

In a case where the composition according to the embodiment of the present invention is heated to form a film having a thickness of 4 μm, the maximum value of the transmittance of the above-described film to light at 400 to 1,000 nm is preferably 80% or less, more preferably 70% or less, still more preferably 60% or less, and particularly preferably 50% or less. The lower limit of the above-described maximum value of the light transmittance is preferably 1% or more, more preferably 5% or more, and still more preferably 10% or more.

In addition, from the viewpoint of dispersibility of visible light, the maximum value of the transmittance of the

film to light having a wavelength in a range of 400 to 700 nm is preferably 80% or less, more preferably 70% or less, still more preferably 60% or less, and particularly preferably 50% or less. The lower limit of the above-described maximum value of the light transmittance is preferably 1% or more, more preferably 5% or more, and still more preferably 10% or more.

Heating conditions for confirming the above-described phase-separated structure or heating conditions for measuring the maximum value of the above-described transmittance may be appropriately set according to components included in the composition, and preferred examples thereof include heating at 200°C for 5 minutes.

<Difference in refractive index between phases>

The average value of a difference in refractive index between the phases in the above-described film is preferably 0.1 or more, more preferably 0.2 or more, still more preferably 0.3 or more, and particularly preferably 0.4 or more.

<Haze>

The haze of the above-described film based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more.

<Method of adjusting spectral characteristics>

The formation of the film having such spectral characteristics can be achieved by appropriately adjusting a shape of the phase-separated structure, a refractive index of the particles, an abundance of the particles in the film, a degree of uneven distribution of the particles in the film, and the like. In this case, from the viewpoint of light dispersibility, it may be better to be a higher refractive index of the particles, abundance of the particles, and degree of uneven distribution of the particles.

<Concentration of solid contents>

For the reason that it is easy to obtain more excellent storage stability, the concentration of solid contents of the composition according to the embodiment of the present invention is preferably 5 to 80 mass%. The upper limit is preferably 75 mass% or less and more preferably 70 mass% or less. The lower limit is preferably 10 mass% or more, more preferably 15 mass% or more, and still more preferably 20 mass% or more.

Hereinafter, each of the components used in the composition according to the embodiment of the present invention will be described.

«Particles P1 (white particles having refractive index of 2.0 or more and average primary particle diameter of 200 nm or less)»

The composition according to the embodiment of the present invention includes white particles (hereinafter, also referred to as particles P1) having a refractive index of 2.0 or more and an average primary particle diameter of 200 nm or less.

The average primary particle diameter of the particles P1 is 200 nm or less, and from the viewpoint of storage stability of the composition, is preferably 100 mn or less. In addition, from the viewpoint of the storage stability of the composition and light scattering properties of a film to be obtained, the average primary particle diameter of the particles P1 is preferably 5 nm to 100 nm, more preferably 10 nm to 100 nm, still more preferably 20 nm to 100 nm, even more preferably 30 nm to 100 nm, even still more preferably 40 nm to 100 nm, and particularly preferably 50 nm to 100 nm.

In this specification, the average primary particle diameter of particles is a value measured by the following method. That is, the primary particle diameter of the particles can be obtained by observing the particles with a transmission electron microscope (TEM) and observing a portion (primary particle) where the particles do not aggregate. A particle size distribution of the particles can be obtained by photographing a transmission electron micrograph of the primary particles using a transmission electron microscope and measuring a particle size distribution with an image processing device using the micrograph. In this specification, the average primary particle diameter of the particles refers to the number average particle size calculated from the particle size distribution. In this specification, an electron microscope (H-7000, manufactured by Hitachi, Ltd.) is used as the transmission electron microscope, and a LUZEX AP (manufactured by Nireco Corporation) is used as the image processing device.

The refractive index of the particles P1 is 2.0 or more, preferably 2.2 or more and more preferably 2.4 or more. The upper limit of the refractive index of the particles P1 is not particularly limited, but may be 5 or less or 4 or less.

In this specification, the refractive index of particles is a value measured by the following method. First, a dispersion liquid is prepared using the particles, a resin (dispersant) having a known refractive index, and propylene glycol monomethyl ether acetate. Next, the prepared dispersion liquid and a resin having a known refractive index are mixed with each other to prepare coating liquids in which the concentrations of the particles is 10 mass%, 20 mass%, 30 mass%, and 40 mass% with respect to the total solid content of the coating liquids. Using each of the coating liquids, a film having a thickness of 300 nm is formed on a silicon wafer, and the refractive index of the obtained film is measured by ellipsometry (LAMBDA ACE RE-3300, manufactured by SCREEN Holdings Co., Ltd.). Next, the refractive index corresponding to the concentration of the particles is plotted on a graph to derive the refractive index of the particles.

The specific gravity of the particles P1 is preferably 1 to 7 g/cm$^3$. The upper limit is preferably 6 g/cm$^3$ or less and more preferably 5 g/cm$^3$ or less. The lower limit of the specific gravity is not particularly limited, but may be 1.5 g/cm$^3$ or more or 2 g/cm$^3$ or more.

In this specification, the specific gravity of particles is a value measured by the following method. First, 50 g of particles are put into a 100 mL volumetric flask. Subsequently, 100 mL of water is weighed using another 100 mL graduated cylinder. Thereafter, first, the weighed water is put into the volumetric flask to the extent that the particles are immersed, and then ultrasonic waves are applied to the volumetric flask to allow the particles and water to blend in. Next, additional water is added thereto until the marked line of the volumetric flask is reached, and the specific gravity is calculated as 50 g/(volume of water remaining in volumetric flask).

The particles P1 are white particles. In addition, the particles P1 are preferably inorganic particles. Examples of the type of the inorganic particles include titanium oxide particles, strontium titanate particles, barium titanate particles, zinc oxide particles, magnesium oxide particles, zirconium oxide particles, aluminum oxide particles, barium sulfate particles, and zinc sulfide particles. The inorganic particles used as the particles P1 are preferably particles having a titanium atom and more preferably titanium oxide particles.

In the titanium oxide particles, the content (purity) of titanium dioxide ($TiO_2$) is preferably 70 mass% or more, more preferably 80 mass% or more, and still more preferably 85 mass% or more. In the titanium oxide particles, the content of lower titanium oxide represented by $Ti_nO_{2n-1}$ (n represents a number of 2 to 4), titanium nitride, or the like is preferably 30 mass% or less, more preferably 20 mass% or less, and still more preferably 15 mass% or less.

The titanium oxide may be rutile type titanium oxide or anatase type titanium oxide. From the viewpoint of colorability and the temporal stability of the dispersion liquid or the composition, rutile type titanium oxide is preferable. In particular, rutile type titanium oxide has a small change in color difference and excellent colorability even under heating. In addition, the rutile transformation rate of the titanium oxide is preferably 95% or more and more preferably 99% or more.

As rutile type titanium oxide, a well-known titanium oxide can be used. As a method of manufacturing rutile type titanium oxide, two methods including a sulfuric acid method and a chlorine method are present, and a titanium oxide manufactured using any one of the methods can be suitably used. Here, the sulfuric acid method refers to a manufacturing method including: dissolving ilmenite ore or titanium slug as a raw material in concentrated sulfuric acid to separate iron as iron sulfate; hydrolyzing the separated solution to obtain a precipitate of hydroxide; and calcinating the precipitate at a high temperature to extract rutile type titanium oxide. In addition, the chlorine method refers to a manufacturing method including: causing synthetic rutile or natural rutile as a raw material to react with chlorine gas or carbon at a high temperature of approximately 1,000°C to synthesize of titanium tetrachloride; and oxidizing the titanium tetrachloride at a high temperature to extract rutile type titanium oxide. It is preferable that rutile type titanium oxide is obtained using the chlorine method.

As the specific surface area of titanium oxide particles, a value measured using a Brunauer, Emmett, Teller (BET) method is preferably 10 to 400 m$^2$/g, more preferably 10 to 200 m$^2$/g, still more preferably 10 to 150 m$^2$/g, particularly preferably 10 to 40 m$^2$/g, and most preferably 10 to 20 m$^2$/g. The pH of titanium oxide is preferably 6 to 8. The oil absorption of titanium oxide is preferably 10 to 60 (g/100 g) and more preferably 10 to 40 (g/100 g).

In the titanium oxide particles, the total content of $Fe_2O_3$, $Al_2O_3$, $SiO_2$, $Nb_2O_5$, and $Na_2O$ is preferably 0.1 mass% or less, more preferably 0.05 mass% or less, still more preferably 0.02 mass% or less, and particularly preferably substantially 0 mass%.

The shape of the titanium oxide particles is not particularly limited. Examples of the shape of titanium oxide include an isotropic shape (for example, a spherical shape and a polyhedral shape), an anisotropic shape (for example, a needle shape, a rod shape, and a plate shape), and an unstructured shape. The hardness (Mohs hardness) of titanium oxide particles is preferably 5 to 8 and more preferably 7 to 7.5.

The inorganic particles such as the titanium oxide particles may be surface-treated with a surface treatment agent such as an organic compound. Examples of the surface treatment agent used for the surface treatment of the titanium oxide include polyol, aluminum oxide, aluminum hydroxide, silica (silicon oxide), water-containing silica, alkanolamine, stearic acid, organosiloxane, zirconium oxide, hydrogen dimethicone, a silane coupling agent, and a titanate coupling agent. In particular, a silane coupling agent is preferable. The surface treatment may be performed using one surface treatment agent alone or a combination of two or more surface treatment agents.

It is also preferable that the inorganic particles such as the titanium oxide particles are covered with a basic

metal oxide or a basic metal hydroxide. Examples of the basic metal oxide or the basic metal hydroxide include a metal compound including magnesium, zirconium, cerium, strontium, antimony, barium, calcium, or the like.

In addition, as the titanium oxide particles, titanium oxide particles described in "Titanium Oxide - Physical Properties and Applied Technology, Manabu Kiyono, pp. 13 to 45, June 25, 1991, published by Gihodo Shuppan Co., Ltd.) can also be suitably used.

As the particles P1, a commercially available product can be preferably used. The commercially available product may be used as it is or may be used after a classification treatment. Examples of the commercially available product of titanium oxide particles include:

products manufactured by ISHIHARA SANGYO KAISHA, LTD. such as trade name TIPAQUE R-550, R-580, R-630, R-670, R-680, R-780, R-780-2, R-820, R-830, R-850, R-855, R-930, R-980, CR-50, CR-50-2, CR-57, CR-58, CR-58-2, CR-60, CR-60-2, CR-63, CR-67, CR-Super 70, CR-80, CR-85, CR-90, CR-90-2, CR-93, CR-95, CR-953, CR-97, PF-736, PF-737, PF-742, PF-690, PF-691, PF-711, PF-739, PF-740, PC-3, S-305, CR-EL, PT-301, PT-401M, PT-401L, PT-501A, PT-501R, UT771, TTO-51, TTO-80A, TTO-S-2, A-220, MPT-136, MPT-140, or MPT-141;
products manufactured by Sakai Chemical Industry Co., Ltd. such as trade names R-3L, R-5N, R-7E, R-11P, R-21, R-25, R-32, R-42, R-44, R-45M, R-62N, R-310, R-650, SR-1, D-918, GTR-100, FTR-700, TCR-52, A-110, A-190, SA-1, SA-1L, STR-100A-LP, STR-100C-LP, or TCA-123EI;
products manufactured by TAYCA Corporation such as trade name JR, JRNC, JR-301, JR-403, JR-405, JR-600A, JR-600E, JR-603, JR-605, JR-701, JR-800, JR-805, JR-806, JR-1000, MT-01, MT-05, MT-10EX, MT-100S, MT-100TV, MT-100Z, MT-100AQ, MT-100WP, MT-100SA, MT-100HD, MT-150EX, MT-150W, MT-300HD, MT-500B, MT-500SA, MT-500HD, MT-600B, MT-600SA, MT-700B, MT-700BS, MT-700HD, or MT-700Z;
products manufactured by Titan Kogyo Ltd. such as trade name KR-310, KR-380, KR-380N, or ST-485SA15;
products manufactured by Fuji Titanium Industry Co., Ltd. such as trade name TR-600, TR-700, TR-750, TR-840, or TR-900; and
products manufactured by Shiraishi Calcium Kaisha Ltd. such as trade name Brilliant 1500. In addition, titanium oxide particles described in paragraphs "0025" to "0027" of JP2015-067794A can also be used.

Examples of a commercially available product of strontium titanate particles include SW-100 (manufactured by Titan Kogyo Ltd.). Examples of a commercially available product of barium sulfate particles include BF-1L (manufactured by Sakai Chemical Industry Co., Ltd.). Examples of a commercially available product of zinc oxide particles include Zincox Super F-1 (manufactured by Hakusui Chemical Co., Ltd.). Examples of a commercially available product of zirconium oxide particles include Z-NX (manufactured by Taiyo Koko Co., Ltd.) and Zirconeo-Cp (manufactured by ITEC Co., Ltd.).

The content of the particles P1 in the total solid content of the composition is preferably 5 to 90 mass%. The upper limit is preferably 85 mass%% or less, more preferably 80 mass% or less, and still more preferably 70 mass% or less. The lower limit is preferably 6 mass% or more, more preferably 10 mass% or more, and still more preferably 15 mass% or more.

The composition according to the embodiment of the present invention may include only one kind of the particles P1 or two or more kinds of the particles P1. In a case where only one kind of the particles P1 is included, more excellent storage stability is easily obtained. In addition, in a case where two or more kinds of the particles P1 are included, the angle dependence of light scattering can be further reduced. In a case where two or more kinds of the particles P1 are included, the total content thereof is preferably within the above-described range.

<Particles P2>

The composition according to the embodiment of the present invention can contain particles (hereinafter, also referred to as particles P2) having a refractive index of less than 2.0, an average primary particle diameter of 500 nm or more, and a specific gravity smaller than that of the particles P1.

In a case where the composition according to the embodiment of the present invention contains P2 in addition to P1, scattering occurs between the particles P1 and the particles P2, so that light irradiated to the film can be efficiently scattered and transmitted. Therefore, by using such a composition, a film having more excellent light scattering properties can be formed.

The average primary particle diameter of the particles P2 is 500 nm or more, preferably 500 nm to 6,000 nm, more preferably 500 nm to 5,000 nm, still more preferably 500 nm or more and less than 3,000 nm, even more preferably 500 nm to 2,500 nm, even still more preferably 500 nm to 2,000 nm, particularly preferably 500 nm to 1,500 nm, and most preferably 500 nm to 1,000 nm.

The refractive index of the particles P2 is less than 2.0, preferably 1.9 or less, more preferably 1.8 or less, and particularly preferably 1.7 or less. The lower limit of the refractive index of the particles P2 is not particularly limited, and

may be 1.0 or more or 1.1 or more.

For the reason that a film having excellent light scattering properties is easily obtained, the difference between the refractive index of the particles P1 and the refractive index of the particles P2 is preferably 0.5 or more, more preferably 0.7 or more, and still more preferably 0.9 or more. In a case where the composition according to the embodiment of the present invention includes two or more kinds of the particles P1, in calculating the difference in refractive index described above, the mass average value of the refractive indexes of two or more kinds of the particles P1 is used as the value of the refractive index of the particles P1. The same applies to a case where the composition according to the embodiment of the present invention includes two or more kinds of the particles P2.

The specific gravity of the particles P2 is preferably 2.5 g/$cm^3$ or less, more preferably 2.4 g/$cm^3$ or less, still more preferably 2.2 g/$cm^3$ or less, and particularly preferably 2.0 g/$cm^3$ or less. The lower limit of the specific gravity of the particles P2 is not particularly limited, but may be 0.5 g/$cm^3$ or more or 0.9 g/$cm^3$ or more.

The particles P2 are preferably transparent or white particles. Examples of the particles P2 include inorganic particles and resin particles. Examples of the type of the inorganic particles include silica particles, hollow titanium oxide particles, and hollow zirconia particles. Among these, silica particles are preferable. Examples of a commercially available product of the inorganic particles include Sylysia series manufactured by FUJI SILYSIA CHEMICAL LTD. (for example, Sylysia 310P and the like) and Seahostar series manufactured by NIPPON SHOKUBAI CO., LTD. (for example, Seahostar KE-S250).

Examples of the resin particles include particles consisting of a synthetic resin such as a (meth)acrylic resin, a styrene resin, a polyamide resin, a polyimide resin, a polyolefin resin, a polyurethane resin, a polyurea resin, a polyester resin, a melanin resin, and a silicone resin, and particles consisting of a natural polymer such as chitin, chitosan, cellulose, crosslinked starch, and crosslinked cellulose. Among these, the synthetic resin particles are preferably used because they have advantages such as easy control of particle size.

As a method of producing the resin particles, in a case of a relatively hard resin such as polymethylmethacrylate (PMMA), fine particles can be formed according to a crushing method, but a method of producing resin particles according to an emulsification and suspension polymerization method is preferable from the viewpoint of case of controlling the particle diameter, and precision. The method of producing the resin particles is described in detail in "Ultrafine Particles and Materials" edited by Materials Science Society of Japan, published by SHOKABO Co., Ltd., published in 1993, "Manufacturing & Application of Microspheres & Powders" supervised by Haruma Kawaguchi, published by CMC Publishing Co., Ltd., published in 2005, and the like.

The resin particles are also available as commercially available products, and examples thereof include MX-40T, MX-80H3wT, MX-150, MX-180TA, MX-300, MX-500, MX-1000, MX-1500H, MR-2HG, MR-7HG, MR-10HG, MR-3GSN, MR-5GSN, MR-7G, MR-10G, MR-5C, and MR-7GC (all manufactured by Soken Chemical & Engineering Co., Ltd., acrylic resin particles); SX-130H, SX-350H, and SX-500H (all manufactured by Soken Chemical & Engineering Co., Ltd., styrene resin particles); MBX-5, MBX-8, MBX-12, MBX-15, MBX-20, MB20X-5, MB30X-5, MB30X-8, MB30X-20, SBX-6, SBX-8, SBX-12, and SBX-17 (all manufactured by Sekisui Plastics Co., Ltd., acrylic resin particles); CHEMIPEARL W100, W200, W300, W308, W310, W400, W401, W405, W410, W500, WF640, W700, W800, W900, W950, and WP100 (all manufactured by Mitsui Chemicals, Inc., polyolefin resin particles); Tospearl 120 (manufactured by Momentive Performance Technologies, silicone resin particles); and Optbeads 2000M (manufactured by Nissan Chemical Corporation, melanin resin particles).

The particles P2 are also preferably hollow particles. The hollow particles refer to particles having voids in which no material constituting the particles exists inside a surface of the particles. The size, shape, and number of voids are not particularly limited. The hollow particles may have an outer shell structure have a void in the central portion, or a structure in which a plurality of fine voids are dispersed inside the particles.

The void ratio of the hollow particles is preferably 1% to 90%. The lower limit of the void ratio is preferably 5% or more and more preferably 10% or more. The upper limit of the void ratio is preferably 85% or less and more preferably 80% or less. The void ratio of the hollow particles refers to a proportion of the volume occupied by the voids to the total volume of the hollow particles. The void ratio of the hollow particles can be obtained by observing hollow particles using a transmission electron microscope, measuring an outer diameter and a void diameter, and calculating "the proportion of the volume occupied by the void to the total volume" according to the following expression.

$$\text{Expression: } \{(\text{Void diameter})^3/(\text{Outer diameter})^3\} \text{ x } 100\%$$

More specific examples thereof include a method in which 100 hollow particles observed by a transmission electron microscope are optionally selected, equivalent circle diameters of an outer and a void of each of these hollow particles are measured to obtain the outer diameter and the void diameter, and a void ratio is calculated according to the above expression and an average value thereof is determined as the void ratio. In addition, in a case where a material of a shell of the particles (refractive index thereof) is known and it is known that the particles are hollow, the void ratio

can be also be known from the measurement of the refractive index of the particles.

The shape of the hollow particles is preferably spherical, but may be a shape other than the spherical shape, such as an amorphous shape.

The hollow particles may be hollow particles formed of an inorganic material (hereinafter, also referred to as hollow inorganic particles), or may be hollow particles formed of a resin material (hereinafter, also referred to as hollow resin particles).

Examples of the material constituting the hollow resin particles include a (meth)acrylic resin, a styrene resin, a polyamide resin, a polyimide resin, a polyolefin resin, a polyurethane resin, a polyurea resin, a polyester resin, a silicone resin, and a melanin resin. Among these, a (meth)acrylic resin or a styrene resin is preferable, and a (meth)acrylic resin is more preferable. Examples of a method for manufacturing the hollow resin particles include a method of containing a forming agent in the resin particles and foaming the forming agent, a method of encapsulating a volatile substance in the resin particles and gasifying the volatile substance to be expanded, a method of melting the resin particles and injecting a gas such as air into the resin particles, and a method (hereinafter, also referred to as a solvent removal method) in which a polymerizable monomer and a non-polymerizable solvent are mixed and polymerized to obtain resin particles encompassing the solvent, and the solvent is removed.

The hollow inorganic particles are preferably hollow silica particles. That is, the hollow inorganic particles are preferably silica particles having a void in the central portion. Specific examples of the hollow silica particles include hollow particles described in JP2013-237593A, WO2007/060884A, and the like.

The content of the particles P2 in the total solid content of the composition is preferably 1 to 90 mass%. The upper limit is preferably 80 mass%% or less, more preferably 70 mass% or less, and still more preferably 60 mass% or less. The lower limit is preferably 2 mass% or more, more preferably 5 mass% or more, and still more preferably 10 mass% or more.

The composition according to the embodiment of the present invention may include only one kind of the particles P2 or two or more kinds of the particles P2. In a case where only one kind of the particles P2 is included, more excellent storage stability is easily obtained. In addition, in a case where two or more kinds of the particles P2 are included, the angle dependence of light scattering can be further reduced. In a case where two or more kinds of the particles P2 are included, the total content thereof is preferably within the above-described range.

The total content of the particles P1 and the particles P2 in the total solid content of the composition is preferably 30 mass% or more, more preferably 35 mass% or more, and still more preferably 40 mass% or more. The upper limit is preferably 90 mass%% or less, more preferably 80 mass% or less, and still more preferably 70 mass% or less.

With regard to the proportion of the particles P1 and the particles P2 in the composition, it is preferable that the particles P1 is 20 to 500 parts by mass with respect to 100 parts by mass of the particles P2. The upper limit is preferably 450 parts by mass or less, more preferably 400 parts by mass or less, and still more preferably 300 parts by mass or less. The lower limit is preferably 25 parts by mass or more, more preferably 30 parts by mass or more, and still more preferably 35 parts by mass or more.

From the viewpoint of light scattering properties, a content of the white particles (for example, total content of the above-described particles P1 and the above-described particles P2 as the white particles) in the composition according to the embodiment of the present invention is preferably 80 mass% or more, more preferably 90 mass% or more, still more preferably 95 mass% or more, particularly preferably 98 mass% or more, and most preferably 99 mass% or more with respect to the total mass of all particles included in the composition. The upper limit of the above-described content thereof is not particularly limited, and may be 100 mass%.

<Film-forming component>

The composition according to the embodiment of the present invention includes a film-forming component including at least one selected from a resin or a polymerizable monomer. The film-forming component used in the present invention includes two or more kinds of resins, or includes one or more kinds of resins and one or more kinds of polymerizable monomers.

In addition the composition according to the embodiment of the present invention includes the resin A as the film-forming component.

[Resin A]

The resin A contains a constitutional unit A having a formula weight of 1,000 or more and including a constitutional unit GF and a constitutional unit B having an acidic group, and satisfies at least one of the following requirement 1 or the following requirement 2, and the constitutional unit GF is a constitutional unit selected from the group consisting of a constitutional unit represented by Formula (1-1) and a constitutional unit represented by Formula (1-2).

Requirement 1: the constitutional unit A includes a molecular chain containing two or more kinds of the constitutional units GF.

Requirement 2: the resin A contains two or more kinds of the constitutional units A having different structures of the constitutional unit GF.

The resin A is blended in, for example, an application for dispersing particles in a composition or an application as a binder. Mainly, a resin which is used for dispersing particles is also referred to as a dispersant. However, such applications of the resin are only exemplary, and the resin can also be used for other purposes in addition to such applications.

The resin A is preferably blended for the purpose of a binder.

-Requirement 1 and requirement 2-

The resin A satisfies at least one of the requirement 1 or the requirement 2.

The requirement 1 means that the constitutional unit A includes a molecular chain containing at least two constitutional units GF. It is sufficient that the type of the constitutional unit GF in the constitutional unit A is 2 or more, and for example, the type thereof can be 2 to 10, preferably 2 to 4.

The requirement 2 means that the resin A has one constitutional unit A and another constitutional unit A, and a constitutional unit GF included in one constitutional unit A and a constitutional unit GF included in another constitutional unit A are different from each other.

The resin A may satisfy both the requirement 1 and the requirement 2. That is, the resin A may have one constitutional unit A and another constitutional unit A, in which a constitutional unit GF included in one constitutional unit A and a constitutional unit GF included in another constitutional unit A are different from each other, and at least one of one constitutional unit A or another constitutional unit A may include a molecular chain containing the constitutional unit GF.

It is preferable that the resin A satisfies at least the requirement 1.

-Constitutional unit A-

The constitutional unit A is a constitutional unit A having a formula weight of 1,000 or more, and includes a constitutional unit GF.

The formula weight of the constitutional unit A is not particularly limited, but is preferably 1,000 to 100,000, more preferably 1,500 to 50,000, still more preferably 2,000 to 50,000, and particularly preferably 2,500 to 30,000.

In a case where the resin A satisfies the requirement 1, the constitutional unit A includes a molecular chain containing two or more kinds of the constitutional units GF.

Here, the two or more kinds of the constitutional units GF are intended to be two or more kinds of constitutional units having different structures from each other. More specific examples of an aspect of the two or more kinds of the constitutional units GF include a case where different types of constitutional units are included in the constitutional unit A, such as a combination of a constitutional unit represented by Formula (1-1) and a constitutional unit represented by Formula (1-2). In addition, examples thereof also include an aspect in which the molecular chain includes two or more kinds of constitutional units represented by Formula (1-1), which have different structures of $R^A$.

In a case where the resin A satisfies the requirement 1, a proportion of a molar amount of the most constitutional unit among constitutional units corresponding to the constitutional unit GF to the total molar amount of the constitutional units corresponding to the constitutional unit GF included in the constitutional unit A is preferably 20% to 98%, more preferably 30% to 95%, and still more preferably 40% to 90%.

In addition, in a case where the resin A satisfies the requirement 1 and the constitutional unit A includes two kinds of constitutional units corresponding to the constitutional unit GF, a proportion of a molar amount of constitutional units most included in the constitutional unit A, which correspond to the constitutional unit GF, to the total molar amount of the constitutional units corresponding to the constitutional unit GF included in the constitutional unit A is preferably 50% to 90%, more preferably 60% to 90%, and still more preferably 70% to 85%.

In a case where the resin A satisfies the requirement 2, the resin A has one constitutional unit A and another constitutional unit A, and a constitutional unit GF included in one constitutional unit A and a constitutional unit GF included in another constitutional unit A are different from each other.

In a case where the resin A satisfies the requirement 2, a proportion of a molar amount of the most constitutional unit among constitutional units corresponding to the constitutional unit GF to the total molar amount of the constitutional units corresponding to the constitutional unit GF included in the resin A is preferably 20% to 98%, more preferably 30% to 95%, and still more preferably 40% to 90%.

In addition, in a case where the resin A satisfies the requirement 2 and the constitutional unit A includes two kinds of constitutional units corresponding to the constitutional unit GF, a proportion of a molar amount of constitutional units most included in the constitutional unit A, which correspond to the constitutional unit GF, to the total molar amount

of the constitutional units corresponding to the constitutional unit GF included in the constitutional unit A is preferably 50% to 90%, more preferably 60% to 90%, and still more preferably 70% to 85%.

«Crystallization temperature of polymer»

The constitutional unit A preferably includes a polymer structure.

The polymer structure included in the constitutional unit A may be a polymer in which the formula weight of the constitutional unit A is within the above-described range, and examples thereof include a molecular chain having a molecular weight (in a case of having a molecular weight distribution, a weight-average molecular weight) of 1,000 or more. The above-described molecular weight is preferably 1,000 to 100,000, more preferably 1,500 to 50,000, still more preferably 2,000 to 50,000, and particularly preferably 2,500 to 30,000.

The polymer structure included in the constitutional unit A is preferably a polymer structure formed by the constitutional unit GF and a constitutional unit constituting the terminal in the constitutional unit A. In addition, the above-described polymer structure is also preferably a polymer structure including all constitutional units GF included in the constitutional unit A and a constitutional unit constituting the terminal.

Examples of the above-described constitutional unit constituting the terminal include the same structure as that described in $Z^A$ of Formula (A) described later, and a preferred aspect thereof is also the same.

Examples of the polymer structure included in the constitutional unit A include a molecular chain formed by a polymer selected from the group consisting of a random copolymer, an alternate copolymer, and a block copolymer.

In addition, in order to further improve the dispersibility of the white particles in the composition, the terminal of the molecular chain of the polymer may be modified with a known modifier.

The above-described polymer structure may have crystallinity. In a case where the polymer structure has crystallinity, a crystallization temperature of the polymer structure is not particularly limited, but from the viewpoint that a composition in which generation of precipitates in a low temperature environment is further suppressed is obtained, the crystallization temperature is preferably lower than 20.0°C and more preferably 17°C or lower.

The lower limit value of the crystallization temperature is not particularly limited, but is preferably higher than -20.0°C and more preferably higher than -11.0°C.

In the present specification, the crystallization temperature of the above-described polymer structure is intended to be a crystallization temperature measured by a method described in Examples using a differential scanning calorimetry (DSC). That is, the crystallization temperature can be measured as a crystallization temperature of a macromonomer used for synthesis of the constitutional unit A, which will be described later.

In addition, it is also possible to measure the crystallization temperature of the above-described polymer structure from the composition containing the above-described resin. In a case of measuring the above-described crystallization temperature from the composition, the crystallization temperature may be measured in the same method as described above, after the resin in the composition is hydrolyzed under strong acid or strong base conditions using hydrochloric acid, sodium hydroxide, or the like to separate the polymer structure and obtain a polymer.

«Constitutional unit GF»

The constitutional unit GF is a constitutional unit represented by Formula (1-1) or Formula (1-2) described above.

The constitutional unit A preferably includes the constitutional unit GF as a repeating unit. The fact that the constitutional unit A includes the constitutional unit GF as a repeating unit means that the constitutional unit A includes a molecular chain formed by repeating a constitutional unit included in the constitutional unit GF. One of preferred aspects is an aspect in which the constitutional unit A includes a molecular chain formed by repeating only the constitutional unit corresponding to the constitutional unit GF.

In a case where the constitutional unit A includes the constitutional unit GF as a repeating unit, the number of repetitions of the constitutional unit GF (in a case where the constitutional unit A includes a plurality of constitutional units GF, the total number of repetitions is preferably 5 to 100, more preferably 8 to 60, and still more preferably 10 to 50.

In Formula (1-1), $R^A$ is preferably a hydrocarbon group, preferably a saturated aliphatic hydrocarbon group, an aromatic hydrocarbon group, or a group represented by a bonding thereof, and more preferably a saturated aliphatic hydrocarbon group.

The above-described hydrocarbon group may have a substituent as long as the effects of the present invention can be obtained. In addition, one of preferred aspects of the present invention is an aspect in which the hydrocarbon group is unsubstituted.

As the above-described saturated aliphatic hydrocarbon group, an alkylene group having 1 to 20 carbon atoms is preferable, an alkylene group having 2 to 6 carbon atoms is more preferable, and an alkylene group having 4 or 5 carbon atoms is still more preferable.

Examples of the above-described saturated aliphatic hydrocarbon group include an ethylene group, a propylene

group, a 1-ethylethylene group, a trimethylene group, a 1-methyltrimethylene group, a 1-butyltrimethylene group, a tetramethylene group, a 2-methyltetramethylene group, a 1-tridecyltetramethylene group, a pentamethylene group, a 1-methylpentamethylene group, a 3-methylpentamethylene group, a 1-ethylpentamethylene group, and a 1-decylpentamethylene group, and a tetramethylene group or a pentamethylene group is preferable.

As the above-described aromatic hydrocarbon group, an aromatic hydrocarbon group having 6 to 20 carbon atoms is preferable, a phenylene group or a naphthylene group is more preferable, and a phenylene group is still more preferable.

In Formula (1-2), $R^B$ is preferably a hydrocarbon group, preferably a saturated aliphatic hydrocarbon group, an aromatic hydrocarbon group, or a group represented by a bonding thereof, and more preferably a saturated aliphatic hydrocarbon group.

The above-described hydrocarbon group may have a substituent as long as the effects of the present invention can be obtained. In addition, one of preferred aspects of the present invention is an aspect in which the hydrocarbon group is unsubstituted.

As the above-described saturated aliphatic hydrocarbon group, an alkylene group having 1 to 20 carbon atoms is preferable, and an alkylene group having 2 to 6 carbon atoms is more preferable.

Examples of the above-described saturated aliphatic hydrocarbon group include an ethylene group, a propylene group, a 1-ethylethylene group, a trimethylene group, a 1-methyltrimethylene group, and a tetramethylene group, and an ethylene group or a propylene group is preferable.

In the present invention, the propylene group refers to a group in which one hydrogen atom of four hydrogen atoms in the ethylene group is substituted with a methyl group.

As the above-described aromatic hydrocarbon group, an aromatic hydrocarbon group having 6 to 20 carbon atoms is preferable, a phenylene group or a naphthylene group is more preferable, and a phenylene group is still more preferable.

It is preferable that the constitutional unit A contains a constitutional unit L1 represented by Formula (1) and a constitutional unit L2 selected from the group consisting of a constitutional unit represented by Formula (2) and a constitutional unit represented by Formula (3). The constitutional unit represented by Formula (3) corresponds to a constitutional unit formed by linking two constitutional units represented by Formula (1-1).

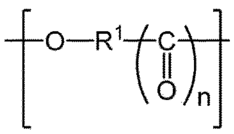 (1) 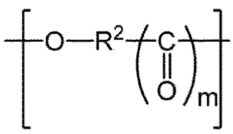 (2)

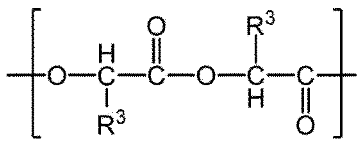 (3)

In Formula (1), $R^1$ represents an alkylene group, and n represents 0 or 1. In Formula (2), $R^2$ represents an alkylene group different from $R^1$, and m represents 0 or 1. In Formula (3), $R^3$'s each independently represent an alkyl group.

In Formula (1), the alkylene group represented by $R^1$ is not particularly limited, but is preferably a linear or branched alkylene group having 1 to 20 carbon atoms, and from the viewpoint that the composition has more excellent effects of the present invention, more preferably a linear or branched alkylene group having 2 to 16 carbon atoms and still more preferably a linear or branched alkylene group having 3 to 12 carbon atoms.

In Formula (1), n represents 0 or 1.

$R^2$ in Formula (2) represents an alkylene group different from $R^1$. Here, the different alkylene group means that at least one of different number of carbon atoms or different branching states is satisfied.

The alkylene group represented by $R^2$ is not particularly limited, but from the viewpoint that the composition has more excellent effects of the present invention, is preferably a linear or branched alkylene group having 1 to 20 carbon atoms and more preferably a linear or branched alkylene group having 2 to 16 carbon atoms.

In Formula (2), m represents 0 or 1.

In a case where the numbers of carbon atoms in $R^1$ and $R^2$ are different from each other, it does not matter which one of the number of carbon atoms in the alkylene group represented by $R^1$ and the number of carbon atoms in the alkylene group represented by $R^2$ is larger, and examples thereof include an aspect in which the number of carbon atoms in the alkylene group represented by $R^1$ is larger than the number of carbon atoms in the alkylene group represented by $R^2$. In this case, the number of carbon atoms in the alkylene group represented by $R^1$ is 2 or more.

In addition, the case where the above-described branching states of $R^1$ and $R^2$ are different from each other refers to an aspect in which the alkylene group represented by $R^1$ is linear and the alkylene group represented by $R^2$ is branched, an aspect in which the alkylene group represented by $R^1$ is branched and the alkylene group represented by $R^2$ is linear, or an aspect in which the alkylene groups represented by $R^1$ and $R^2$ are each branched and at least one of the number or form of branches (for example, position of branching) is different.

It is more preferable that n in Formula (1) and m in Formula (2) are equal to each other. That is, it is more preferable that, in a case where n is 0, m is also 0, and in a case where n is 1, m is also 1. Among these, it is still more preferable that n and m are 1. In a case where n is equal to m, it is easier to produce a compound which can be the above-described constitutional unit A by polymerization. The compound which can be the constitutional unit A by polymerization herein refers to a compound as a raw material for producing the resin A, which can be the constitutional unit A by polymerization (hereinafter, also referred to as a "macromonomer").

The constitutional unit $L^2$ may be a constitutional unit represented by Formula (3). In Formula (3), $R^3$ represents an alkyl group, and two $R^3$'s in the constitutional unit may be the same or different from each other. The alkyl group is not particularly limited, but for example, is preferably a linear or branched alkyl group having 1 to 20 carbon atoms, and from the viewpoint that the composition has more excellent effects of the present invention, more preferably an alkyl group having 1 to 10 carbon atoms, still more preferably an alkyl group having 1 to 5 carbon atoms, and particularly preferably an alkyl group having 1 to 3 carbon atoms. Among these, a methyl group is preferable.

From the viewpoint that the constitutional unit A is easily produced and quality of the composition is more stable, the constitutional unit L1 and the constitutional unit L2 are preferably constitutional units obtained by ring-opening polymerization of a cyclic compound.

As the cyclic compound, a known compound can be used. As such a cyclic compound, a compound which can be ring-opened by hydrolysis is preferable, and examples thereof include cyclic amide compounds such as ε-caprolactam; cyclic urea derivatives such as N,N'-dimethylpropylene urea and 1,3-dimethyl-2-imidazolidinone; cyclic esters (lactone compounds) such as β-propiolactone, β-butyrolactone, β-valerolactone, γ-butyrolactone, γ-valerolactone, γ-caprilolactone, δ-valerolactone, β-methyl-δ-valerolactone, δ-stearolactone, ε-caprolactone, γ-octanoic lactone, 2-methyl-ε-caprolactone, 4-methyl-ε-caprolactone, ε-caprylolactone, ε-palmitolactone, α-hydroxy-γ-butyrolactone, and α-methyl-γ-butyrolactone; and cyclic diesters such as glycolide and lactide. Among these, as the cyclic compound, from the viewpoint that reactivity of the ring-opening polymerization is good, a lactone compound or lactide is preferable, and from the viewpoint of higher reactivity and easier availability of raw material, a lactone compound is more preferable and at least one selected from the group consisting of β-propiolactone, β-butyrolactone, β-valerolactone, γ-butyrolactone, γ-valerolactone, γ-caprilolactone, δ-valerolactone, β-methyl-δ-valerolactone, δ-stearolactone, ε-caprolactone, 2-methyl-ε-caprolactone, 4-methyl-ε-caprolactone, ε-caprylolactone, and ε-palmitolactone is still more preferable.

From the viewpoint of ease of synthesis and more remarkable effects of the present invention, it is more preferable that the constitutional unit represented by Formula (2) is included as the above-described constitutional unit L2, and $R^1$ in Formula (1) and $R^2$ in Formula (2) are each an ethylene group, a propylene group, a 1-ethylethylene group, a trimethylene group, a 1-methyltrimethylene group, a 1-butyltrimethylene group, a tetramethylene group, a 2-methyltetramethylene group, a 1-tridecyltetramethylene group, a pentamethylene group, a 1-methylpentamethylene group, a 3-methylpentamethylene group, a 1-ethylpentamethylene group, or a 1-decylpentamethylene group, and it is more preferable to be each an ethylene group, a propylene group, a tetramethylene group, or a pentamethylene group.

Specific examples of the constitutional unit GF include the following constitutional units, but the present invention is not limited thereto. In the following formulae, *'s each independently represent a bonding site with other structures.

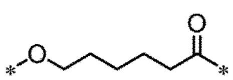
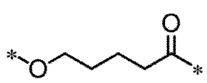
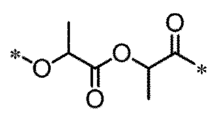
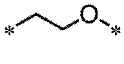
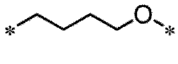
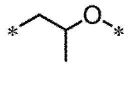

The resin A is preferably a comb-shaped polymer (graft polymer) or a star polymer, and more preferably a comb-shaped polymer.

That is, it is preferable that the molecular chain (the above-described polymer structure) included in the above-described constitutional unit A is a resin having a side chain (graft chain). This is because the molecular chain in the resin A is less likely to be compatible with other resins or polymerizable monomers (film-forming component), and the phase-separated structure is likely to be formed in the film to be obtained.

With regard to a length of the molecular chain included in the constitutional unit A, it is preferable that the

formula weight is 1,000 or more, it is more preferable that the number of atoms excluding hydrogen atoms is in a range of 40 to 10,000, it is still more preferable that the number of atoms excluding hydrogen atoms is in a range of 50 to 2,000, and it is particularly preferable that the number of atoms excluding hydrogen atoms is in a range of 60 to 500.

For example, the resin A can be produced by polymerizing and/or copolymerizing a macromonomer having a predetermined molecular chain and having a reactive double bond group. According to such an aspect, a comb-shaped polymer is obtained. Examples of the above-described macromonomer include a modified poly(meth)acrylate having the above-described molecular chain at the terminal.

In addition, for example, the resin A can also be produced by reacting the above-described macromonomer with a compound having a branch point and one or more sulfur atoms. According to such an aspect, a star polymer is obtained. For example, the molecular chain included in the constitutional unit A may be included as $P^1$ in a resin having a structure same as that represented by Formula (SP-1) described later.

The constitutional unit A is preferably a constitutional unit based on a macromonomer represented by Formula (a).

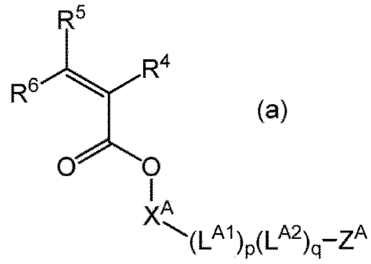

(a)

In Formula (a), $R^4$, $R^5$, and $R^6$ each independently represent a hydrogen atom, a halogen atom, or an alkyl group, and among these, a hydrogen atom, a halogen atom, or an alkyl group having 1 to 6 carbon atoms (for example, a methyl group, an ethyl group, a propyl group, or the like) is preferable.

In Formula (a), $R^4$, $R^5$, and $R^6$ are more preferably each independently a hydrogen atom or an alkyl group having 1 to 3 carbon atoms, and still more preferably each independently a hydrogen atom or a methyl group. In Formula (a), $R^5$ and $R^6$ are each particularly preferably a hydrogen atom.

In addition, $X^A$ in Formula (a) represents a single bond or a divalent linking group. Examples of the divalent linking group include a divalent aliphatic group (for example, an alkylene group, a substituted alkylene group, an alkenylene group, a substituted alkenylene group, an alkynylene group, or a substituted alkynylene group), a divalent aromatic group (for example, an arylene group or a substituted arylene group), a divalent heterocyclic group, a sulfur atom (-S-), an imino group (-NH-), a substituted imino bond ($-NR^{41'}-$, where $R^{41'}$ is an aliphatic group, an aromatic group, or a heterocyclic group), a carbonyl bond (-CO-), and a combination thereof.

The divalent aliphatic group may have a cyclic structure or a branched structure. The number of carbon atoms in the aliphatic group is preferably 1 to 20, more preferably 1 to 15, and still more preferably 1 to 10. As the aliphatic group, a saturated aliphatic group is preferable to an unsaturated aliphatic group. In addition, the aliphatic group may have a substituent. Examples of the substituent include a halogen atom, a hydroxy group, an aromatic group, and a heterocyclic group.

The number of carbon atoms in the divalent aromatic group is preferably 6 to 20, more preferably 6 to 15, and still more preferably 6 to 10. In addition, the aromatic group may have a substituent. Examples of the substituent include a halogen atom, a hydroxy group, an aliphatic group, an aromatic group, and a heterocyclic group.

The divalent heterocyclic group preferably has a 5-membered ring or a 6-membered ring as a heterocyclic ring. The heterocyclic ring may be fused with one or more of other heterocyclic rings, aliphatic rings or aromatic rings. In addition, the heterocyclic group may have a substituent. Examples of the substituent include a halogen atom, a hydroxy group, an oxo group (=O), a thioxo group (=S), an imino group (=NH), a substituted imino group ($=N-R^{42}$, where $R^{42}$ is an aliphatic group, an aromatic group, or a heterocyclic group), an aliphatic group, an aromatic group, and a heterocyclic group.

In Formula (a), $L^{A1}$ and $L^{A2}$ each represent the above-described constitutional unit L1 and constitutional unit L2. Here, the arrangement of $L^{A1}$ and $L^{A2}$ in Formula (a) does not indicate the arrangement order of the constitutional unit L1 and the constitutional unit L2, and in a case where the number of repetitions of the constitutional unit L1 and the constitutional unit L2 p and q, the arrangement order is not limited. That is, the arrangement order of the constitutional unit L1 and the constitutional unit L2 may be random, alternate, or block. In addition, the constitutional unit L2 may be bonded to the left terminal group in Formula (A), or the constitutional unit L1 may be bonded to the right terminal group in Formula (A). From the viewpoint that the composition has more excellent effects of the present invention, the arrangement order of the constitutional unit L1 and the constitutional unit L2 is preferably random or alternate. In a case where

the arrangement order of the constitutional unit L1 and the constitutional unit L2 is random or alternate, it is presumed that three-dimensional regularity of the molecular chain of the resin A is further lowered, and the crystallinity of the resin A is further lowered.

p and q each represent an integer of 1 or more. The range of p is preferably 1 to 120 and more preferably 2 to 60. The range of q is preferably 1 to 120 and more preferably 2 to 60.

In Formula (a), $Z^A$ represents a monovalent organic group. The type of the organic group is not particularly limited, but specific examples thereof include an alkyl group, a hydroxy group, an alkoxy group, an aryloxy group, a heteroaryloxy group, an alkylthioether group, an arylthioether group, a heteroarylthioether group, and an amino group. Among these, in particular, from the viewpoint of improving dispersibility of the white particles, the organic group represented by $Z^A$ preferably has a steric repulsion effect, and an alkyl group or alkoxy group having 5 to 24 carbon atoms is preferable, and a branched alkyl group having 5 to 24 carbon atoms, a cyclic alkyl group having 5 to 24 carbon atoms, or an alkoxy group having 5 to 24 carbon atoms is particularly preferable. An alkyl group included in the alkoxy group may be linear, branched, or cyclic.

From the viewpoint that the composition has more excellent effects of the present invention, the constitutional unit A is preferably a constitutional unit represented by Formula (A).

In addition, a preferred aspect of the present invention is an aspect in which the constitutional unit A is a constitutional unit represented by Formula (A) and the constitutional unit B is a constitutional unit represented by Formula (B) described later.

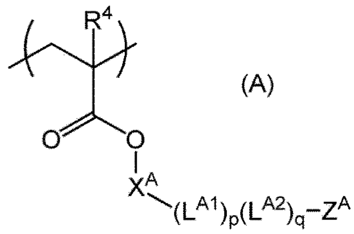

(A)

In Formula (A), $R^4$ represents a hydrogen atom or an alkyl group, $X^A$ represents a single bond or a divalent linking group, p and q each represent an integer of 1 or more, $Z^A$ represents a hydrogen atom or a monovalent organic group, and $L^{A1}$ and $L^{A2}$ each represent the constitutional unit L1 and the constitutional unit L2.

In Formula (A), $R^4$ is preferably a hydrogen atom or an alkyl group having 1 to 6 carbon atoms (for example, a methyl group, an ethyl group, a propyl group, or the like).

In addition, suitable aspects of $X^A$, $L^{A1}$, $L^{A2}$, p, q, and $Z^A$ in Formula (A) are the same as $X^A$, $L^{A1}$, $L^{A2}$, p, q, and $Z^A$ in Formula (a).

The sum of p and q in Formula (a) and Formula (A) (hereinafter, also referred as "p+q") is preferably more than 5 and less than 120. In a case where p+q is more than the lower limit value, the composition has more excellent temporal stability. On the other hand, in a case where p+q is less than the upper limit value, the composition has more suppressed generation of precipitates in a low temperature environment and more excellent temporal stability. In addition, a composition having more excellent developability can be obtained.

A content of the constitutional unit L1 in the constitutional unit A is not particularly limited, but from the viewpoint that the effects of the present invention are more excellent, is preferably 2 to 98 mass% and more preferably 5 to 95 mass% with respect to the total mass of the constitutional unit A.

A content of the constitutional unit L2 in the constitutional unit A is not particularly limited, but from the viewpoint that the effects of the present invention are more excellent, is preferably 2 to 98 mass% and more preferably 5 to 95 mass% with respect to the total mass of the constitutional unit A.

A mass ratio of the constitutional unit L1 to the constitutional unit L2 is more preferably more than 50/50 and less than 95/5. In a case where the above-described mass ratio is within the above-described range, the generation of precipitates in the composition is further suppressed in a low temperature environment. In addition, the composition has more excellent developability. In addition, the above-described mass ratio is still more preferably more than 50/50 and less than 90/10. In a case where the above-described mass ratio is less than the upper limit value, the composition has more excellent temporal stability.

The formula weight of the constitutional unit A is preferably 1,000 to 30,000 and more preferably 1,200 to 20,000. In a case where the formula weight is the upper limit value or less, the composition has more excellent temporal stability. On the other hand, in a case of being the lower limit value or more, the composition has more excellent effects of the present invention and has more excellent temporal stability.

In the present specification, in a case where the constitutional unit A is formed of the above-described macromonomer, the above-described formula weight corresponds to a weight-average molecular weight of the macromonomer. The weight-average molecular weight of the macromonomer can be measured by a gel permeation chromatography (GPC) method.

In the present specification, the weight-average molecular weight is measured by a GPC method described in detail later.

-Constitutional unit B-

The constitutional unit B is a constitutional unit of the resin A, and has an acidic group in its structure. Having an acidic group in the structure means that the resin A has an acidic group which does not contribute to the formation of the main chain of the resin A. Here, the acidic group is a functional group which meet at least one of definitions of Bronstead acid and Lewis acid and a derivative group thereof (for example, a functional group having a salt structure thereof), and examples thereof include an acidic group selected from a carboxylic acid group, a phosphoric acid group, a sulfonic acid group, a phenolic hydroxy group, and a thiol group, and a derivative group thereof (for example, a salt of the acidic group).

From the viewpoint that the resin A is more easily produced, the constitutional unit B is preferably a constitutional unit based on a compound having a reactive double bond group (hereinafter, also referred to as a "polymerizable monomer"). The above-described reactive double bond group and acidic group may be directly linked, or may be bonded through a linking group.

In addition, in a case where the resin A is a star polymer, the constitutional unit B may be included as a structure same as $A^1$ in a structure represented by Formula (SP-1) described later.

In the present specification, the constitutional unit B refers to a constitutional unit different from the above-described constitutional unit A, and a constitutional unit C and a constitutional unit D described later.

Since the constitutional unit B has an acidic group, the constitutional unit B can form an interaction with the white particles. In particular, by having an alkali-soluble group such as a carboxylic acid group as the acidic group, it is possible to impart more excellent developability to the resin A for pattern formation by development.

In addition, since the resin A contains the constitutional unit having an acidic group, the resin A is more compatible with the solvent, and application properties of the composition to the support tends to be improved.

It is presumed that this is because, for example, the acidic group in the constitutional unit B easily interacts with the white particles, the constitutional unit B stably disperses the white particles, the viscosity of the resin A in which the white particles are dispersed is low, and the resin A itself is likely to be stably dispersed.

The acidic group which is a functional group capable of forming interaction with the white particles is, for example, a carboxylic acid group, a phosphoric acid group, a sulfonic acid group, a phenolic hydroxy group, or a thiol group, and at least one of a carboxylic acid group, a sulfonic acid group, or a phosphoric acid group is preferable, and a carboxylic acid group which has good adsorption force to the white particles and a high dispersibility thereof is particularly preferable.

That is, it is preferable that the resin A further has a constitutional unit having at least one of a carboxylic acid group, a phosphoric acid group, a sulfonic acid group, a phenolic hydroxy group, or a thiol group.

In the resin A of the present invention, there is no particular limitation on how the acidic group is introduced, but the resin A preferably has one or more constitutional units selected from constitutional units derived from monomers represented by General Formulae (ib) to (iiib).

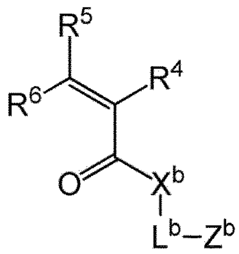

(ib)

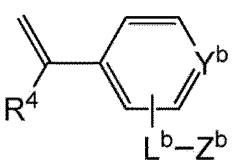

(iib)

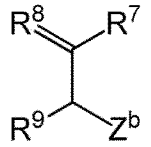

(iiib)

In Formulae (ib) to (iiib), $R^4$, $R^5$, and $R^6$ each independently represent a hydrogen atom, a halogen atom, or an alkyl group, and among these, a hydrogen atom, a halogen atom, or an alkyl group having 1 to 6 carbon atoms (for example, a methyl group, an ethyl group, a propyl group, or the like) is preferable.

$X^b$ in Formula (ib) represents an oxygen atom (-O-) or an imino group (-NH-), and is preferably an oxygen atom.

In addition, $Y^b$ in Formula (iib) represents a methine group or a nitrogen atom.

In addition, in Formulae (ib) to (iiib), $L^b$ represents a single bond or a divalent linking group. Examples of the

divalent linking group include a divalent aliphatic group (for example, an alkylene group, a substituted alkylene group, an alkenylene group, a substituted alkenylene group, an alkynylene group, or a substituted alkynylene group), a divalent aromatic group (for example, an arylene group or a substituted arylene group), a divalent heterocyclic group, an oxygen atom (-O-), a sulfur atom (-S-), an imino group (-NH-), a substituted imino bond ($-NR^{31'}-$, where $R^{31'}$ is an aliphatic group, an aromatic group, or a heterocyclic group), a carbonyl bond (-CO-), and a combination thereof.

The divalent aliphatic group may have a cyclic structure or a branched structure. The number of carbon atoms in the aliphatic group is preferably 1 to 20, more preferably 1 to 15, and still more preferably 1 to 10. As the aliphatic group, a saturated aliphatic group is preferable to an unsaturated aliphatic group. In addition, the aliphatic group may have a substituent. Examples of the substituent include a halogen atom, a hydroxy group, an aromatic group, and a heterocyclic group.

The number of carbon atoms in the divalent aromatic group is preferably 6 to 20, more preferably 6 to 15, and still more preferably 6 to 10. In addition, the aromatic group may have a substituent. Examples of the substituent include a halogen atom, a hydroxy group, an aliphatic group, an aromatic group, and a heterocyclic group.

The divalent heterocyclic group preferably has a 5-membered ring or a 6-membered ring as a heterocyclic ring. The heterocyclic ring may be fused with one or more of other heterocyclic rings, aliphatic rings or aromatic rings. In addition, the heterocyclic group may have a substituent. Examples of the substituent include a halogen atom, a hydroxy group, an oxo group (=O), a thioxo group (=S), an imino group (=NH), a substituted imino group ($=N-R^{32}$, where $R^{32}$ is an aliphatic group, an aromatic group, or a heterocyclic group), an aliphatic group, an aromatic group, and a heterocyclic group.

$L^b$ may be a single bond, an alkylene group, or a divalent linking group having an oxyalkylene structure. The oxyalkylene structure is more preferably an oxyethylene structure or an oxypropylene structure. In addition, $L^b$ may have a polyoxyalkylene structure which includes two or more repeating oxyalkylene structures. As the polyoxyalkylene structure, a polyoxyethylene structure or a polyoxypropylene structure is preferable. The polyoxyethylene structure is represented by $-(OCH_2CH_2)_v-$, and v is preferably an integer of 2 or more and more preferably an integer of 2 to 10.

In Formulae (ib) to (iiib), $Z^b$ represents an acidic group.

In General Formula (iiib), $R^7$, $R^8$, and $R^9$ each independently represent a hydrogen atom, a halogen atom (for example, a fluorine atom, a chlorine atom, a bromine atom, or the like), an alkyl group (for example, a methyl group, an ethyl group, a propyl group, or the like) having 1 to 6 carbon atoms, $-Z^b$, or $L^b-Z^b$. Here, $L^b$ and $Z^b$ have the same meanings as $L^b$ and $Z^b$ described above, and suitable aspects thereof are also the same. $R^7$, $R^8$, and $R^9$ are preferably each independently a hydrogen atom or an alkyl group having 1 to 3 carbon atoms, and more preferably each independently a hydrogen atom.

The monomer represented by Formula (iib) is preferably a compound in which $R^4$ is a hydrogen atom or a methyl group, $L^b$ is an alkylene group, $Z^b$ is a carboxylic acid group, and $Y^b$ is a methine group.

The monomer represented by Formula (iiib) is preferably a compound in which $R^7$, $R^8$, and $R^9$ are each independently a hydrogen atom or a methyl group and $Z^b$ is a carboxylic acid group.

Examples of the above-described monomer include methacrylic acid, crotonic acid, isocrotonic acid, a reaction product of a compound (for example, 2-hydroxyethyl methacrylate) having an addition polymerizable double bond and a hydroxy group in a molecule with a succinic acid anhydride, a reaction product of a compound having an addition polymerizable double bond and a hydroxy group in a molecule with a phthalic acid anhydride, a reaction product of a compound having an addition polymerizable double bond and a hydroxy group in a molecule with a tetrahydroxyphthalic acid anhydride, a reaction product of a compound having an addition polymerizable double bond and a hydroxy group in a molecule with trimellitic acid anhydride, a reaction product of a compound having an addition polymerizable double bond and a hydroxy group in a molecule with a pyromellitic acid anhydride, acrylic acid, an acrylic acid dimer, an acrylic acid oligomer, maleic acid, itaconic acid, fumaric acid, and 4-vinylbenzoic acid.

From the viewpoint that a composition having more excellent effects of the present invention is obtained, the constitutional unit B is preferably a constitutional unit represented by Formula (B).

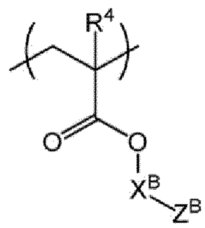
(B)

In Formula (B), $R^4$ represents a hydrogen atom or an alkyl group, $X^B$ represents a single bond or a divalent linking group, $Z^B$ represents a hydrogen atom, an acidic group selected from the group consisting of a carboxy group,

a phosphoric acid group, a sulfonic acid group, a phenolic hydroxy group, and a thiol group, or a derivative group of these groups, and in a case where $Z^B$ is a hydrogen atom, $X^B$ represents a single bond.

In Formula (B), $R^4$ is preferably a hydrogen atom or an alkyl group having 1 to 6 carbon atoms (for example, a methyl group, an ethyl group, a propyl group, or the like).

A suitable aspect of the divalent linking group as $X^B$ is the same as $L^b$ described above. That is, in a case where $X^B$ is a divalent linking group, an alkylene group or an oxyalkylene structure may be included. The oxyalkylene structure is more preferably an oxyethylene structure or an oxypropylene structure. In addition, $X^B$ may have a polyoxyalkylene structure which includes two or more repeating oxyalkylene structures. As the polyoxyalkylene structure, a polyoxyethylene structure or a polyoxypropylene structure is preferable. The polyoxyethylene structure is represented by $-(OCH_2CH_2)_v-$, and v is preferably an integer of 2 or more and more preferably an integer of 2 to 10.

-Constitutional unit C-

The resin A used in the present invention may contain a hydrophobic constitutional unit as the constitutional unit C as long as the effects of the present are exhibited. In the present specification, the hydrophobic constitutional unit does not have the constitutional unit A containing the constitutional unit L1 and the constitutional unit L2, and does not have the acidic group.

As the hydrophobic constitutional unit, a constitutional unit derived from (corresponding to) a compound (monomer) having a ClogP value of 1.2 or more is preferable, and a constitutional unit derived from a compound having a ClogP value of 1.2 to 8 is more preferable.

The ClogP value is a value calculated by a program "CLOGP" available from Daylight Chemical Information System, Inc. This program provides a value of "calculated logP" calculated by the fragment approach (see the following documents) of Hansch and Leo. The fragment approach is based on a chemical structure of a compound, which estimates the logP value of the compound by dividing the chemical structure into partial structures (fragments) and summing up the logP contributions assigned to the fragments. Details of the method are described in the following documents. In the present invention, a ClogP value calculated by a program CLOGP v4.82 is used.

A. J. Leo, Comprehensive Medicinal Chemistry, Vol. 4, C. Hansch, P. G. Sammnens, J. B. Taylor and C. A. Ramsden, Eds., p. 295, Pergamon Press, 1990, C. Hansch & A. J. Leo. SUbstituent Constants For Correlation Analysis in Chemistry and Biology. John Wiley & Sons. A. J. Leo. Calculating logPoct from structure. Chem. Rev., 93, 1281 to 1306, 1993.

The logP refers to a common logarithm of a partition coefficient P, is a physical property value that shows how a certain organic compound is partitioned in an equilibrium of a two-phase system consisting of oil (generally, 1-octanol) and water by using a quantitative numerical value, and is expressed by the following expression.

$$\log P = \log(\mathrm{Coil}/\mathrm{Cwater})$$

In the expression, Coil represents a molar concentration of a compound in an oil phase, and Cwater represents a molar concentration of the compound in a water phase.

The greater the positive logP value based on 0, the higher the oil solubility, and the greater the absolute value of negative logP, the higher the water solubility. Accordingly, the value of logP has a negative correlation with the water solubility of an organic compound and is widely used as a parameter for estimating the hydrophilicity and hydrophobicity of an organic compound.

As the hydrophobic constitutional unit, it is preferable to have one or more constitutional units selected from constitutional units based on monomers represented by General Formulae (i) to (iii).

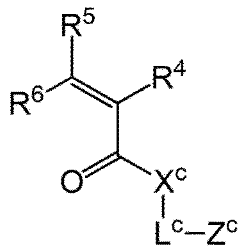

(ic)

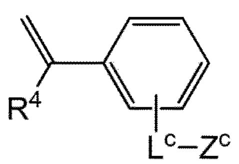

(iic)

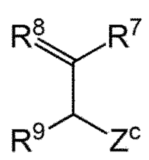

(iiic)

In Formulae (ic) to (iiic), $R^4$, $R^5$, and $R^6$ each independently represent a hydrogen atom, a halogen atom, or

an alkyl group, and among these, a hydrogen atom, a halogen atom, or an alkyl group having 1 to 6 carbon atoms (for example, a methyl group, an ethyl group, a propyl group, or the like) is preferable.

$X^c$ and $L^c$ each have the same meanings as $X^b$ and $L^b$ contained in the constitutional unit B described above, and suitable aspects thereof are also the same. Examples of $Z^c$ include an aliphatic group (for example, an alkyl group, a substituted alkyl group, an unsaturated alkyl group, or a substituted unsaturated alkyl group), an aromatic group (for example, an aryl group, a substituted aryl group, an arylene group, or a substituted arylene group), a heterocyclic group, and a combination thereof. These groups may include an oxygen atom (-O-), a sulfur atom (-S-), an imino group (-NH-), a substituted imino group ($-NR^{31}-$, where $R^{31}$ is an aliphatic group, an aromatic group, or a heterocyclic group), or a carbonyl group (-CO-).

The aliphatic group may have a cyclic structure or a branched structure. The number of carbon atoms in the aliphatic group is preferably 1 to 20, more preferably 1 to 15, and still more preferably 1 to 10. The aliphatic group further includes a ring assembly hydrocarbon group or a crosslinked cyclic hydrocarbon group, and examples of the ring assembly hydrocarbon group include a bicyclohexyl group, a perhydronaphthalenyl group, a biphenyl group, and a 4-cyclohexylphenyl group. Examples of the crosslinked cyclic hydrocarbon ring include a bicyclic hydrocarbon ring such as pinane, bornane, norpinane, norbornane, and bicyclooctane rings (a bicyclo[2.2.2]octane ring, a bicyclo[3.2.1]octane ring, or the like); a tricyclic hydrocarbon ring such as homobredane, adamantane, tricyclo[5.2.1.$0^{2,6}$]decane, and tricyclo[4.3.1.$1^{2,5}$]undecane rings; and a tetracyclic hydrocarbon ring such as tetracyclo[4.4.0.$1^{2,5}$.$1^{7,10}$]dodecane and perhydro-1,4-methano-5,8-methanonaphthalene rings. In addition, the crosslinked cyclic hydrocarbon ring also includes a fused cyclic hydrocarbon ring, for example, a fused ring in which a plurality of 5- to 8-membered cycloalkane rings, such as perhydronaphthalene (decalin), perhydroanthracene, perhydrophenanthrene, perhydroacenaphthene, perhydrofluorene, perhydroindene, and perhydrophenalene rings, are fused.

As the aliphatic group, a saturated aliphatic group is preferable to an unsaturated aliphatic group. In addition, the aliphatic group may have a substituent. Examples of the substituent include a halogen atom, an aromatic group, and a heterocyclic group. Here, the aliphatic group does not have an acidic group as a substituent.

The number of carbon atoms in the aromatic group is preferably 6 to 20, more preferably 6 to 15, and still more preferably 6 to 10. In addition, the aromatic group may have a substituent. Examples of the substituent include a halogen atom, an aliphatic group, an aromatic group, and a heterocyclic group. Here, the aromatic group does not have an acidic group as a substituent.

The heterocyclic group preferably has a 5-membered ring or a 6-membered ring as a heterocyclic ring. The heterocyclic ring may be fused with another heterocyclic ring, an aliphatic ring, or an aromatic ring. In addition, the heterocyclic group may have a substituent. Examples of the substituent include a halogen atom, a hydroxy group, an oxo group (=O), a thioxo group (=S), an imino group (=NH), a substituted imino group ($=N-R^{32}$, where $R^{32}$ is an aliphatic group, an aromatic group, or a heterocyclic group), an aliphatic group, an aromatic group, and a heterocyclic group. Here, the heterocyclic group does not have an acidic group as a substituent.

In Formula (iiic), $R^7$, $R^8$, and $R^9$ each independently represent a hydrogen atom, a halogen atom (for example, fluorine, chlorine, bromine, or the like), an alkyl group (for example, a methyl group, an ethyl group, a propyl group, or the like) having 1 to 6 carbon atoms, $Z^C$, or $-L^C-Z^C$. Here, $L^C$ and $Z^C$ have the same meanings as those in the above. $R^7$, $R^8$, and $R^9$ are each preferably a hydrogen atom or an alkyl group having 1 to 3 carbon atoms, and more preferably a hydrogen atom.

In the present invention, the monomer represented by Formula (ic) is preferably a compound in which $R^4$, $R^5$, and $R^6$ are each a hydrogen atom or a methyl group, $L^c$ is a single bond, an alkylene group, or a divalent linking group having an oxyalkylene structure, $X^c$ is an oxygen atom or an imino group, and $Z^c$ is an aliphatic group, a heterocyclic group, or an aromatic group.

In addition, the monomer represented by Formula (iic) is preferably a compound in which $R^4$ is a hydrogen atom or a methyl group, $L^c$ is an alkylene group, and $Z^c$ is an aliphatic group, a heterocyclic group, or an aromatic group.

In addition, the monomer represented by Formula (iiic) is preferably a compound in which $R^7$, $R^8$, and $R^9$ are each a hydrogen atom or a methyl group, and $Z^c$ is an aliphatic group, a heterocyclic group, or an aromatic group.

From the viewpoint of having excellent polymerizability, the monomers represented by Formulae (ic) to (iiic) are more preferably the compound represented by Formula (ic). Among these, a compound in which, in Formula (ic), $R^4$ is a hydrogen atom or a methyl group, $R^5$ and $R^6$ are hydrogen atoms, $L^c$ is a single bond, $X^c$ is an oxygen atom, $Z^c$ is an aromatic group ((meth)acrylic acid esters) is still more preferable, and from the viewpoint that the composition has more excellent hydrophobicity and has more excellent effects of the present invention, benzyl (meth)acrylate is most preferable.

Examples of typical compounds represented by Formulae (ic) to (iiic) include radically polymerizable compounds selected from acrylic acid esters, methacrylic acid esters, and styrenes.

Regarding the examples of the typical compounds represented by Formulae (ic) to (iiic), reference can be made to the compounds described in paragraphs 0089 to 0093 of JP2013-249417A, the contents of which are incorporated into the present specification.

-Constitutional unit D-

Further, for the purpose of improving various performances such as image intensity, as long as the effects of the present invention are not impaired, the resin A may further have other constitutional units D having various functions (for example, a constitutional unit which has a functional group having an affinity with a dispersion medium used for the dispersion), which is different from the constitutional unit A, the constitutional unit B, and the constitutional unit C.
Examples of such other constitutional units include constitutional units derived from radically polymerizable compounds selected from acrylonitriles and methacrylonitriles.

-Polymerizable group-

In addition, the resin A may be a resin having a polymerizable group (polymerizable resin). Examples of the polymerizable group include an ethylenically unsaturated bond-containing group, an epoxy group, a cyclic ether group such as an oxetane group, a methylol group, an alkoxymethyl group, and a blocked isocyanate group.
Examples of the above-described ethylenically unsaturated bond-containing group include a vinyl group, a vinyloxy group, an allyl group, a methallyl group, a (meth)acryloyl group, a styrene group (vinylphenyl group), a cinnamoyl group, and a maleimide group. Among these, a (meth)acryloyl group, a styrene group, or a maleimide group is preferable, a (meth)acryloyl group is more preferable, and an acryloyl group is particularly preferable.
In a case where the resin A is a resin having a polymerizable group, an amount of the polymerizable group included in 1 g of the resin A (polymerizable group value of the polymerizable resin) is preferably 0.01 to 5.0 mmol/g. The upper limit is more preferably 4.0 mmol/g or less, still more preferably 3.0 mmol/g or less, even more preferably 2.0 mmol/g or less, and particularly preferably 1.5 mmol/g or less. The lower limit is preferably 0.1 mmol/g or more and more preferably 0.2 mmol/g or more.
The above-described polymerizable group value of the polymerizable resin can be calculated by the same method as a method for calculating a polymerizable group value of a resin B described later.
In a case where the resin A is a resin having a polymerizable group, the resin A may include a constitutional unit having a polymerizable group as the above-described constitutional unit D.
In addition, in a case where the resin A is a star polymer, in the constitutional unit A, the polymerizable group may be included as any of $Z^1$, $A^1$, or $P^1$ in a resin having a structure same as that represented by Formula (SP-1) described later, but it is preferably included in $P^1$ and is preferably included in $P^1$ as the constitutional unit D.
In a case where the constitutional unit D is a constitutional unit having a polymerizable group, it is preferable that the constitutional unit D is included as a repeating unit. Preferred examples of such a repeating unit include a repeating unit represented by Formula (A-1-1) described later.
In a case where the constitutional unit D is a constitutional unit having a polymerizable group, the constitutional unit D is introduced by using a monomer having a polymerizable group (for example, glycidyl methacrylate, (3-ethyloxetan-3-yl) methacrylate, and the like) as a monomer.
In addition, the above-described constitutional unit D is introduced by polymerizing a monomer to obtain a resin, and then reacting a compound having a group which reacts with the acidic group included in the constitutional unit B and having a polymerizable group with the resin.
For example, in a case where the constitutional unit B has a carboxy group as the acidic group, by reacting the resin with a compound having an epoxy group and an ethylenically unsaturated bond-containing group, a part of the constitutional unit B can be changed to the constitutional unit D having an ethylenically unsaturated bond-containing group.
In addition, for example, in a case where the constitutional unit B has a phenolic hydroxy group as the acidic group, by reacting the resin with a compound having an isocyanato group and an ethylenically unsaturated bond-containing group, a part of the constitutional unit B can be changed to the constitutional unit D having an ethylenically unsaturated bond-containing group.
In addition, in a case where the resin contains a constitutional unit which has a group capable of reacting with an isocyanato group, such as a hydroxy group, by reacting the resin with a compound having an isocyanato group and an ethylenically unsaturated bond-containing group, a polymerizable group can be introduced into at least a part of the group capable of reacting with an isocyanato group, and the constitutional unit may be designated as the constitutional unit D.
In addition, for example, it is also possible to obtain the resin A containing the constitutional unit D by a method such as that a constitutional unit derived from 2-(2-bromoisobutyryloxy)ethyl methacrylate is introduced into the resin and a methacryloxy group is introduced by allowing a base to act on the resin to remove HBr.
Specific examples of the constitutional unit D include the following structures, but the present invention is not limited thereto.

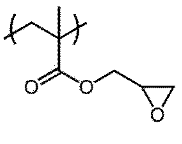
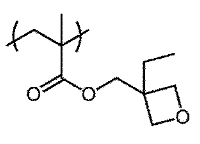
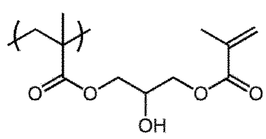

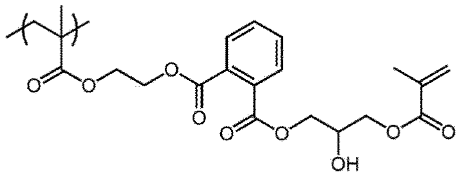
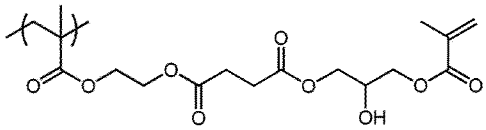

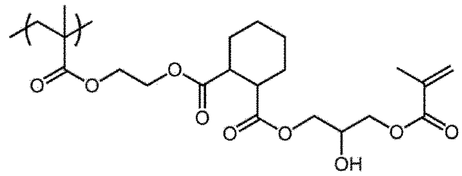

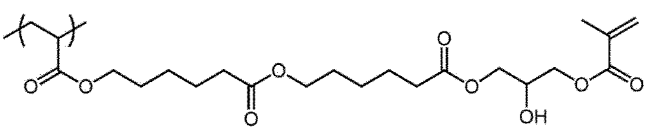

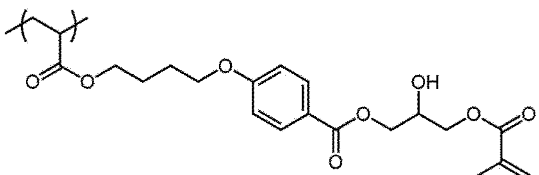
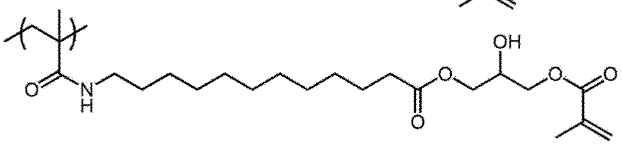

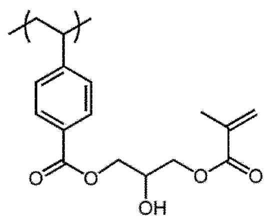

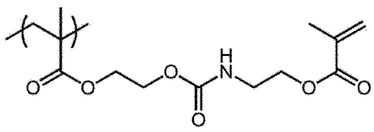
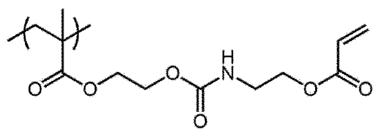

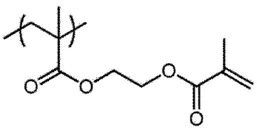
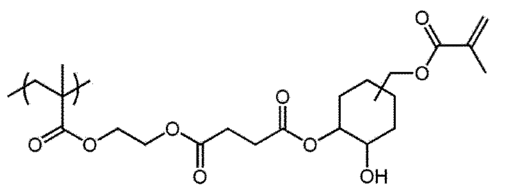

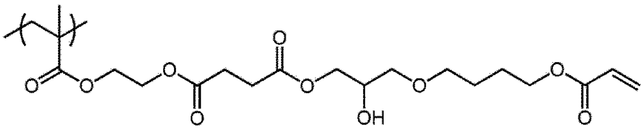

The resin A can be synthesized based on a known method, and examples of a solvent used for synthesizing the resin A include ethylene dichloride, cyclohexanone, methyl ethyl ketone, acetone, methanol, ethanol, propanol, butanol, ethylene glycol monomethyl ether, ethylene glycol monoethyl ether, 2-methoxyethyl acetate, 1-methoxy-2-propanol, 1-methoxy-2-propyl acetate, N,N-dimethylformamide, N,N-dimethylacetamide, dimethylsulfoxide, toluene,

ethyl acetate, methyl lactate, and ethyl lactate. The solvent may be used alone or in combination of two or more kinds thereof.

-Content of each constitutional unit in resin A-

A content of the above-described constitutional unit A is preferably 3 to 90 mass%, more preferably 10 to 90 mass%, and still more preferably 30 to 80 mass% with respect to the total mass of the resin A. In a case where the content of the constitutional unit A is within the above-described range, the composition has more excellent effects of the present invention.
A content of the above-described constitutional unit B is preferably 3 to 90 mass%, more preferably 10 to 90 mass%, and still more preferably 10 to 60 mass% with respect to the total mass of the resin A. In a case where the content of the constitutional unit B is within the above-described range, the composition has more excellent effects of the present invention.
In addition, a content of the above-described constitutional unit C is preferably 3 to 90 mass%, more preferably 5 to 60 mass%, and still more preferably 10 to 40 mass% with respect to the total mass of the resin A. In a case where the content of the constitutional unit C is within the above-described range, the composition has excellent pattern forming property.
In addition, a content of the above-described constitutional unit D is preferably 0 to 80 mass% and more preferably 10 to 60 mass% with respect to the total mass of the resin A. In a case where the content of the constitutional unit D is within the above-described range, the composition has excellent pattern forming property.
Among these, it is preferable that the content of the above-described constitutional unit A is 10 to 90 mass% with respect to the total mass of the above-described resin A and the above-described constitutional unit B is 10 to 90 mass% with respect to the total mass of the above-described resin A.
Each constitutional unit may be used singly or in combination of two or more thereof.

-Weight-average molecular weight of resin A-

A weight-average molecular weight of the resin A is preferably 2,000 to 300,000, more preferably 10,000 to 200,000, still more preferably 12,000 to 100,000, and particularly preferably 15,000 to 50,000. In a case where the weight-average molecular weight of the resin A is within the above-described range, the composition has more excellent effects of the present invention.
The weight-average molecular weight of the resin A is measured by a method specifically described in Examples.

-Acid value of resin A-

An acid value of the resin A is preferably 10 to 250 mgKOH/g, more preferably 20 to 200 mgKOH/g, and particularly preferably 30 to 180 mgKOH/g. In a case where the acid value of the resin A is within the above-described range, a composition having more excellent developability can be obtained. Furthermore, the precipitation of the white particles can be further suppressed, the number of coarse particles can be further reduced, and the temporal stability of the composition is further improved.
In the present specification, the acid value of the resin can be calculated, for example, from an average content of acidic groups in the resin. In addition, a resin having a desired acid value can be obtained by changing the content of the constitutional unit containing an acidic group, which is a constitutional unit of the resin.
The acid value can be determined by a neutralization titration using a sodium hydroxide aqueous solution. Specifically, the acid value can be determined by dissolving the resin in a solvent, titrating the solution with a sodium hydroxide aqueous solution using a potential difference measurement method to calculate an amount of the acid included in 1 g of solid content of the resin, and then converting the value to a KOH equivalent.

-SP value-

From the viewpoint of light scattering properties and dispersibility of the white particles, a solubility parameter (SP value) of the resin A is preferably 20.00 to 21.00 $MPa^{0.5}$, more preferably 20.05 to 20.90 $MPa^{0.5}$, and still more preferably 20.10 to 20.70 $MPa^{0.5}$.
In a case where the resin A is a binder, 20.00 to 21.00 $MPa^{0.5}$ is preferable, 20.05 to 20.90 $MPa^{0.5}$ is more preferable, and 20.10 to 20.70 $MPa^{0.5}$ is still more preferable.
In a case where the resin A is a dispersant, 20.00 to 21.00 $MPa^{0.5}$ is preferable, 20.40 to 20.95 $MPa^{0.5}$ is more preferable, and 20.50 to 20.90 $MPa^{0.5}$ is still more preferable.
In addition, in a case where the resin A is a dispersant and includes propylene glycol monomethyl ether acetate

(PGMEA) described later as the solvent, from the viewpoint of dispersibility of the white particles, the SP value of the above-described polymer structure included in the constitutional unit A is preferably 17.61 to 20.06 $MPa^{0.5}$, more preferably 18.02 to 19.65 $MPa^{0.5}$, and still more preferably 18.43 to 19.24 $MPa^{0.5}$.

In a case where a solvent different from PGMEA is used as the solvent, as the SP value of the above-described polymer structure included in the constitutional unit A (preferably, as the SP value of the polymer structure composed of the constitutional unit GF and the terminal structure), it is preferable that a difference between the SP value of the above-described polymer structure included in the constitutional unit A and the SP value of the solvent is a value within a range described later.

In the present invention, a value according to the Okitsu method is used as the value of the solubility parameter (SP value). As documents describing the Okitsu method, Toshinao Okitsu, The Journal of The Adhesion Society of Japan, vol. 29, No. 5, 204-211 (1993) or SP Value, Fundamentals-Applications and Calculation Method (Yamamoto, JOHOKIKO, CO., LTD., 2005) is referred to. However, in a case where there are special circumstances that cannot be measured by the method described in this document, measurement may be performed by another method.

-Specific example of resin A-

Specific examples of the resin A include resin A-1 to resin A-36, resin A-101, and resin A-102 in Examples, but the present invention is not limited thereto.

-Content and synthesis method of resin A-

The above-described resin A can be synthesized by a known method.

With respect to the total solid content in the composition, a content of the resin A in the composition is preferably 1 to 70 mass% and more preferably 5 to 50 mass%, and from the viewpoint that the composition has more excellent effects of the present invention, still more preferably 10 to 40 mass%.

In addition, in particular, in a case where the resin A is introduced into the composition as a dispersant, with respect to the total solid content in the composition, the content of the resin A in the composition is preferably 0.1 to 50 mass% and more preferably 0.3 to 40 mass%, and from the viewpoint that a composition having more excellent developability is obtained, still more preferably 0.5 to 30 mass%. In a case where the content is within the above-described range, the dispersibility of the white particles is also better.

[Resin B]

It is preferable that the film-forming component in the composition according to the embodiment of the present invention further includes a resin B which is a resin different from the above-described resin A.

The resin B is a resin which does not correspond to the resin A, and is, for example, a resin which does not have the constitutional unit A including a constitutional unit GF or a resin which does not satisfy all of the above-described requirement 1 and requirement 2.

The resin B is blended in, for example, an application for dispersing particles in a composition or an application as a binder. However, such applications of the resin B are only exemplary, and the resin can also be used for other purposes in addition to such applications.

In the present invention, it is preferable that one of the resin A and the resin B is a dispersant for the above-described particles and the other is a binder.

In addition, one preferred aspect thereof is an aspect in which the above-described resin A is a binder and the above-described resin B is a dispersant.

The composition according to the embodiment of the present invention includes the resin as a dispersant in an amount of preferably 10 mass% or more, more preferably 20 mass% or more, and still more preferably 30 mass% or more with respect to the total mass of the resin included as the film-forming component.

The composition according to the embodiment of the present invention includes the resin as a binder in an amount of preferably 10 to 250 parts by mass, more preferably 20 to 225 parts by mass, and still more preferably 30 to 200 parts by mass with respect to 100 parts by mass of the resin as a dispersant.

In addition, the composition includes the above-described resin B in an amount of preferably 10 to 250 parts by mass, more preferably 20 to 225 parts by mass, and still more preferably 30 to 200 parts by mass with respect to 100 parts by mass of the above-described resin A.

In addition, a combination corresponding to the following aspects 1 to 3 is also a preferred aspect of the present invention.

(Aspect 1) the above-described resin A is a comb-shaped polymer and the above-described resin B is a star polymer.

(Aspect 2) the above-described resin A is a star polymer and the above-described resin B is a comb-shaped polymer.

(Aspect 3) the above-described resin A is a comb-shaped polymer and the above-described resin B is a comb-shaped polymer.

Among these, from the viewpoint of light scattering properties, the aspect 1 is preferable.

In the above-described aspect 1, it is preferable that the resin A is a binder and the resin B is a dispersant.

In the above-described aspect 2, it is preferable that the resin A is a dispersant and the resin B is a binder.

In the above-described aspect 3, it is preferable that the resin A is a binder and the resin B is a dispersant, or the resin A is a dispersant and the resin B is a binder, and it is more preferable that the resin A is a dispersant and the resin B is a binder.

-SP value of resin B-

An SP value of the resin B is not particularly limited, but is preferably 19.90 to 21.00 $MPa^{0.5}$.

In a case where the resin B is a dispersant, the SP value of the resin B is preferably 20.30 to 21.00 $MPa^{0.5}$, more preferably 20.40 to 20.95 $MPa^{0.5}$, and still more preferably 20.50 to 20.90 $MPa^{0.5}$.

In a case where the resin B is a binder, the SP value of the resin B is preferably 19.80 to 20.40 $MPa^{0.5}$, more preferably 19.90 to 20.30 $MPa^{0.5}$, and still more preferably 19.95 to 20.25 $MPa^{0.5}$.

From the viewpoint of light scattering properties, a difference in SP value between the above-described resin A and the above-described resin B is preferably 0.20 $MPa^{0.5}$ or more, more preferably 0.30 $MPa^{0.5}$ or more, and still more preferably 0.40 $MPa^{0.5}$ or more. The upper limit of the above-described difference in SP value is preferably 1.0 $MPa^{0.5}$ or less, more preferably 0.7 $MPa^{0.5}$ or less, and still more preferably 0.5 $MPa^{0.5}$ or less.

By using the resin A and the resin B in which the difference in SP value is as described above, it is presumed that the phase-separated structure is easily formed and the light scattering properties are improved.

In a case where two or more kinds of resins are used as at least one of the resin A or the resin B, it is preferable that the difference in SP value of at least one combination of a certain resin A and a certain resin B is within the above-described range, it is more preferable that the difference between an average SP value in the resin A and an average SP value in the resin B is within the above-described range, and it is still more preferable that the difference in SP value in all combinations of the certain resin A and the certain resin B is within the above-described range.

In a case where the resin A includes two or more resins, the average SP value in the resin A is calculated as a weighted average value weighted by the mass content of each resin.

For example, in a case where the resin A includes m resins (hereinafter, A1, A2, ..., and Am), the mass content of A1 is set as M1, the mass content of A2 is set as M2, the mass content of AM is set as Mm, the SP value of A1 is set as SP1, the SP value of SP2 is set as SP2, and the SP value of Am is set as SPm, an average SP value AvSP in the resin A is represented by the following expression. Even in a case where the resin B includes m resins, the average SP value in the resin B is calculated in the same manner.

[expression 1]

$$AvSP = \frac{\sum_{i=1}^{m} SPiMi}{\sum_{i=1}^{m} Mi}$$

In addition, from the viewpoint of dispersibility of the white particles, the dispersant preferably has a higher SP value than the binder.

One of preferred aspects of the present invention is an aspect in which the SP value of the resin B is higher than that of the resin A.

As the resin B, any known resin can be used. Examples of the resin include a (meth)acrylic resin, a (meth)acrylamide resin, an epoxy resin, an ene-thiol resin, a polycarbonate resin, a polyether resin, a polyarylate resin, a polysulfone resin, a polyethersulfone resin, a polyphenylene resin, a polyarylene ether phosphine oxide resin, a polyimide resin, a polyamide resin, a polyolefin resin, a cyclic olefin resin, a polyester resin, a styrene resin, a silicone resin, and a urethane resin.

A weight-average molecular weight (Mw) of the resin B is preferably 2,000 or more, preferably 3,000 or more, more preferably 4,000 or more, and still more preferably 5,000 or more.

In addition, the weight-average molecular weight of the resin B is preferably 2,000,000 or less, more preferably 1,000,000 or less, and still more preferably 500,000 or less.

As the resin B, a resin having an acidic group can be used. Examples of the acidic group include a carboxy group, a phosphoric acid group, a sulfo group, and a phenolic hydroxy group. Among these, a carboxy group or a

phosphoric acid group is preferable, and a carboxy group is more preferable. The resin having an acidic group can also be used as an alkali-soluble resin or a dispersant. An acid value of the resin having an acidic group is preferably 30 to 500 mgKOH/g. The lower limit is more preferably 50 mgKOH/g or more and still more preferably 70 mgKOH/g or more. The upper limit is more preferably 400 mgKOH/g or less, still more preferably 200 mgKOH/g or less, even still more preferably 150 mgKOH/g or less, and most preferably 120 mgKOH/g or less. With regard to the resin having an acidic group, reference can be made to the description in paragraph "0558" to "0571" of JP2012-208494A (paragraph "0685" to "0700" of the corresponding US2012/0235099A) and the description in paragraph "0076" to "0099" of JP2012-198408A, the contents of which are incorporated herein by reference.

As the resin B, a resin including a repeating unit derived from a compound represented by Formula (ED1) and/or a compound represented by Formula (ED2) (hereinafter, these compounds will also be referred to as an "ether dimer") can be used.

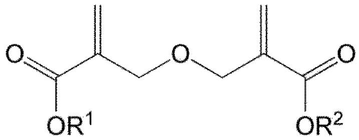

(ED1)

In Formula (ED1), $R^1$ and $R^2$ each independently represent a hydrogen atom or a hydrocarbon group having 1 to 25 carbon atoms, which may have a substituent.

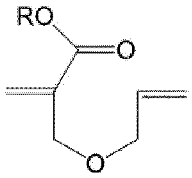

(ED2)

In Formula (ED2), R represents a hydrogen atom or an organic group having 1 to 30 carbon atoms. Specific examples of Formula (ED2) can be found in the description of JP2010-168539A.

Specific examples of the ether dimer can be found in paragraph "0317" of JP2013-029760A, the contents of which are incorporated herein by reference.

As the resin B, a resin including a repeating unit derived from a compound represented by Formula (X) can be used.

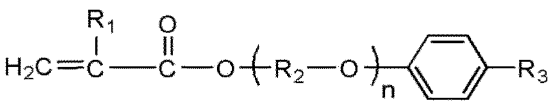

(X)

In Formula (X), $R_1$ represents a hydrogen atom or a methyl group, $R_2$ represents an alkylene group having 2 to 10 carbon atoms, and $R_3$ represents a hydrogen atom or an alkyl group having 1 to 20 carbon atoms, which may have a benzene ring. n represents an integer of 1 to 15.

In addition, it is preferable that the resin B contains a constitutional unit selected from the group consisting of the constitutional unit represented by Formula (1-1) described above and the constitutional unit represented by Formula (1-2) described above, and it is more preferable to include the constitutional unit represented by Formula (1-1) described above.

The preferred aspects of the constitutional unit represented by Formula (1-1) and the constitutional unit represented by Formula (1-2) are as described above.

-Star polymer-

It is also preferable that the resin B is a star polymer.

The resin B which is a star polymer may be used as a binder, but is preferably dispersed as a dispersant.

Examples of the star polymer include a resin (hereinafter, also referred to as a resin (SP-1)) having a structure represented by Formula (SP-1). The resin (SP-1) can be preferably used as a dispersant, but may also be used as a binder.

$$\left[A^1-Y^1\right]_n Z^1 \left[Y^2-P^1\right]_m \qquad \text{(SP-1)}$$

In the formula, $Z^1$ represents an (m+n)-valent linking group,

$Y^1$ and $Y^2$ each independently represent a single bond or a linking group,
$A^1$ represents a group including a substituent selected from a heterocyclic group, an acidic group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group,
$P^1$ represents a polymer chain,
n represents 1 to 20, m represents 1 to 20, and m+n is 3 to 21,
n pieces of $Y^1$'s and $A^1$'s may be the same or different from each other, and
m pieces of $Y^2$'s and $P^1$'s may be the same or different from each other.

At least one of $Z^1$, $A^1$, or $P^1$ in Formula (SP-1) may include an ethylenically unsaturated bond-containing group. Examples of the ethylenically unsaturated bond-containing group include a vinyl group, a vinyloxy group, an allyl group, a methallyl group, a (meth)acryloyl group, a styrene group, a cinnamoyl group, and a maleimide group. Among these, a (meth)acryloyl group, a styrene group, or a maleimide group is preferable, a (meth)acryloyl group is more preferable, and an acryloyl group is particularly preferable.
In a case where the resin (SP-1) includes the ethylenically unsaturated bond-containing group, such a resin corresponds to a polymerizable resin described later. It is sufficient that the ethylenically unsaturated bond-containing group is included in any of $Z^1$, $A^1$, or $P^1$ in Formula (SP-1), but it is preferable to be included in $P^1$. In addition, in a case where $P^1$ includes the ethylenically unsaturated bond-containing group, $P^1$ is preferably a polymer chain having a repeating unit including the ethylenically unsaturated bond-containing group in the side chain.
In Formula (SP-1), $A^1$ represents a group including the above-described substituent. As the substituent, a heterocyclic group, an acidic group, a group having a basic nitrogen atom, a hydrocarbon group having 4 or more carbon atoms, or a hydroxy group is preferable, and an acidic group is more preferable. Examples of the acidic group include a carboxy group, a sulfo group, and a phosphoric acid group, and a carboxy group is preferable.
It is sufficient that at least one of the above-described substituent is included in one $A^1$, and two or more substituents may be included in one $A^1$. $A^1$ preferably includes 1 to 10 of the above-described substituents, and more preferably includes 1 to 6 of the above-described substituents. In addition, as the group including the above-described substituent, which is represented by $A^1$, a group which is formed by the above-described substituent and a linking group including 1 to 200 carbon atoms, 0 to 20 nitrogen atoms, 0 to 100 oxygen atoms, 1 to 400 hydrogen atoms, and 0 to 40 sulfur atoms being bonded to each other can be used. Examples thereof include a group which is formed by one or more acidic groups being bonded through a chain-like saturated hydrocarbon group having 1 to 10 carbon atoms, a cyclic saturated hydrocarbon group having 3 to 10 carbon atoms, or an aromatic hydrocarbon group having 5 to 10 carbon atoms. The chain-like saturated hydrocarbon group, the cyclic saturated hydrocarbon group, and the aromatic hydrocarbon group may further have a substituent. Examples of the substituent include an alkyl group having 1 to 20 carbon atoms, an aryl group having 6 to 16 carbon atoms, a hydroxy group, a carboxy group, an amino group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonate group, and an ethylenically unsaturated bond-containing group. In addition, the above-described substituent itself may be A'.
A chemical formula weight of $A^1$ is preferably 30 to 2,000. The upper limit is preferably 1,000 or less and more preferably 800 or less. The lower limit is preferably 50 or more and more preferably 100 or more.
In Formula (SP-1), $Z^1$ represents an (m+n)-valent linking group. Examples of the (m+n)-valent linking group include a group composed of 1 to 100 carbon atoms, 0 to 10 nitrogen atoms, 0 to 50 oxygen atoms, 1 to 200 hydrogen atoms, and 0 to 20 sulfur atoms. Examples of the (m+n)-valent linking group also include a group (which may form a ring structure) composed of the following constitutional unit or a combination of two or more the following constitutional units.

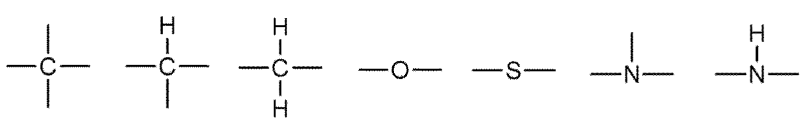

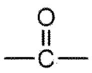 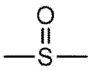 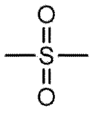 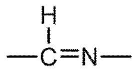 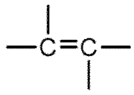

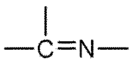 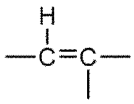 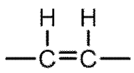 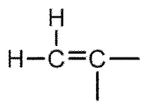 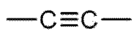

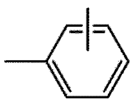 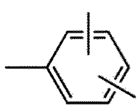 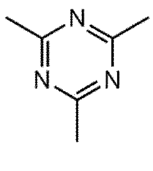 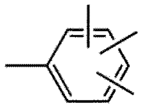 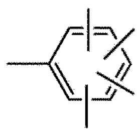

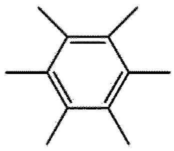 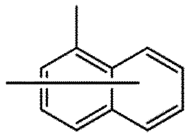 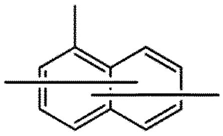 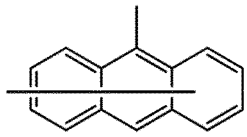

The (m+n)-valent linking group may have a substituent. Examples of the substituent include an alkyl group having 1 to 20 carbon atoms, an aryl group having 6 to 16 carbon atoms, a hydroxy group, an amino group, a carboxy group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonate group, and an ethylenically unsaturated bond-containing group.

It is preferable that the (m+n)-valent linking group represented by $Z^1$ is a group represented by any one of the following formulae.

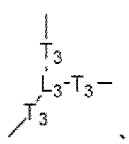, 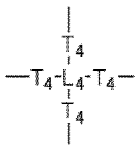, 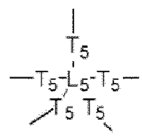 or 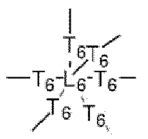

$L_3$ represents a trivalent group. $T_3$ represents a single bond or a divalent linking group, and in a case where three $T_3$'s are present, $T_3$'s may be the same as or different from each other.

$L_4$ represents a tetravalent group. $T_4$ represents a single bond or a divalent linking group, and in a case where four $T_4$'s are present, $T_4$'s may be the same as or different from each other.

$L_5$ represents a pentavalent group. $T_5$ represents a single bond or a divalent linking group, and in a case where five $T_5$'s are present, $T_5$'s may be the same as or different from each other.

$L_6$ represents a hexavalent group. $T_6$ represents a single bond or a divalent linking group, and in a case where six $T_6$'s are present, $T_6$'s may be the same as or different from each other.

Examples of the divalent linking group represented by $T_3$ to $T_6$ include $-CH_2-$, -O-, -CO-, -COO-, -OCO-, -NH-, an aliphatic ring group, an aromatic hydrocarbon ring group, a heterocyclic group, and a group consisting of a combination thereof. The aliphatic ring group, the aromatic hydrocarbon ring group, or the heterocyclic group may be a monocycle or a fused ring. The divalent linking group may further have the above-described substituent.

Examples of the trivalent group represented by $L_3$ include a group obtained by removing one hydrogen atom from the above-described divalent linking group. Examples of the tetravalent group represented by $L_4$ include a group obtained by removing two hydrogen atoms from the above-described divalent linking group. Examples of the pentavalent group represented by $L_5$ include a group obtained by removing three hydrogen atoms from the above-described divalent linking group. Examples of the hexavalent group represented by $L_6$ include a group obtained by removing four hydrogen atoms from the above-described divalent linking group. The trivalent to hexavalent groups represented by $L_3$ to $L_6$ may further have the above-described substituent.

A chemical formula weight of $Z^1$ is preferably 20 to 3,000. The upper limit is preferably 2,000 or less and more preferably 1,500 or less. The lower limit is preferably 50 or more and more preferably 100 or more. In a case where the

chemical formula weight of $Z^1$ is within the above-described range, the dispersibility of the pigment in the composition can be improved. The chemical formula weight of $Z^1$ is a value calculated from the structural formula.

Specific examples of the (m+n)-valent linking group can be found in paragraphs "0043" to "0055" of JP2014-177613A, the content of which is incorporated herein by reference.

In Formula (SP-1), $Y^1$ and $Y^2$ each independently represent a single bond or a linking group. Examples of the linking group include a group composed of 1 to 100 carbon atoms, 0 to 10 nitrogen atoms, 0 to 50 oxygen atoms, 1 to 200 hydrogen atoms, and 0 to 20 sulfur atoms. The above-described group may further have the above-described substituent. Specific examples of the linking group represented by $Y^1$ and $Y^2$ include a group composed of one of the following constitutional units or a combination of two or more of the constitutional units.

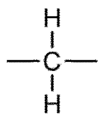
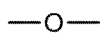
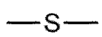
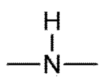
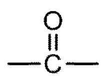
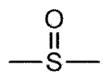
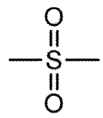

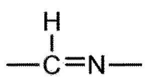
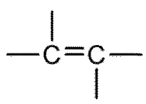
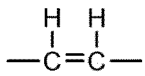
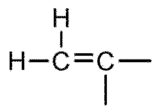

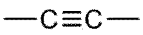
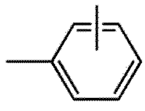
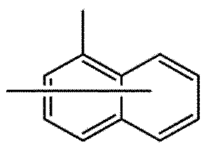
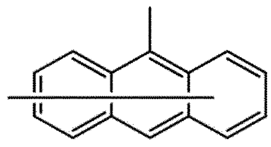

In Formula (SP-1), $P^1$ represents a polymer chain. As the polymer chain represented by $P^1$, a polymer chain which has, in the main chain, at least one repeating unit selected from a poly(meth)acrylic structural repeating unit, a polyether structural repeating unit, a polyester structural repeating unit, a polyamide structural repeating unit, a polyimide structural repeating unit, a polyimine structural repeating unit, or a polyurethane structural repeating unit is preferable. In addition, as the polymer chain represented by $P^1$, a polymer chain including a repeating unit represented by Formulae (P1-1) to (P1-5) is preferable.

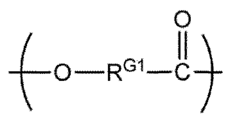

(P1-1)

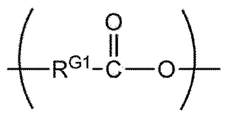

(P1-2)

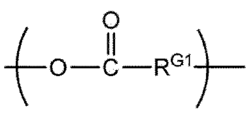

(P1-3)

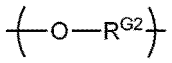

(P1-4)

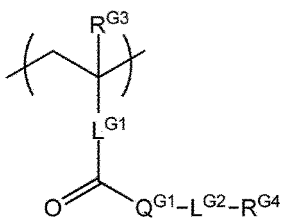

(P1-5)

In the formulae, $R^{G1}$ and $R^{G2}$ each represent an alkylene group. As the alkylene group represented by $R^{G1}$ and $R^{G2}$, and a linear or branched alkylene group having 1 to 20 carbon atoms is preferable, a linear or branched alkylene group having 2 to 16 carbon atoms is more preferable, and a linear or branched alkylene group having 3 to 12 carbon atoms is still more preferable. The alkylene group may have a substituent. Examples of the substituent include an aryl group, a heteroaryl group, an alkoxy group, an aryloxy group, a heteroaryloxy group, an alkylthioether group, an arylthioether group, a heteroarylthioether group, and an ethylenically unsaturated bond-containing group.

In the formulae, $R^{G3}$ represents a hydrogen atom or a methyl group.

In the formulae, $Q^{G1}$ represents -O- or -NH-, $L^{G1}$ represents a single bond or an arylene group, and $L^{G2}$

represents a single bond or a divalent linking group. It is preferable that $Q^{G1}$ represents -O-. It is preferable that $L^{G1}$ represents a single bond. Examples of the divalent linking group represented by $L^{G2}$ include an alkylene group (preferably an alkylene group having 1 to 12 carbon atoms), an arylene group (preferably an arylene group having 6 to 20 carbon atoms), -NH-, -SO-, $-SO_2-$, -CO-, -O-, -COO-, -OCO-, -S-, -NHCO-, -CONH-, and a group including a combination of two or more thereof.

$R^{G4}$ represents a hydrogen atom or a substituent. Examples of the substituent include an alkyl group, an aryl group, a heteroaryl group, an alkoxy group, an aryloxy group, a heteroaryloxy group, an alkylthioether group, an arylthioether group, a heteroarylthioether group, an ethylenically unsaturated bond-containing group, and an acidic group.

The repetition number of repeating units in $P^1$ is preferably 3 to 2,000. The upper limit is preferably 1,500 or less and more preferably 1,000 or less. The lower limit is preferably 5 or more and more preferably 7 or more. In addition, $P^1$ is preferably a polymer chain having a repeating unit including an ethylenically unsaturated bond-containing group in the side chain. In addition, the proportion of the repeating unit including an ethylenically unsaturated bond-containing group in the side chain with respect to the total repeating units constituting $P^1$ is preferably 1 mol% or more, more preferably 2 mol% or more, and still more preferably 3 mol% or more. The upper limit may be 100 mol%. In addition, in a case where $P^1$ is a polymer chain having a repeating unit including an ethylenically unsaturated bond-containing group in the side chain, it is also preferable that $P^1$ includes other repeating units in addition to the repeating unit including an ethylenically unsaturated bond-containing group in the side chain. Examples of the other repeating unit include a repeating unit having an acidic group at a side chain. In a case where $P^1$ includes other repeating units including an acidic group in the side chain, in addition to the repeating unit including an ethylenically unsaturated bond-containing group in the side chain, the generation of the development residue can be effectively suppressed in the formation of a pattern by a photolithography method. In a case where $P^1$ includes the repeating unit having an acidic group at a side chain, the proportion of the repeating unit having an acidic group at a side chain with respect to the total repeating units constituting $P^1$ is preferably 50 mol% or less, more preferably 2 to 48 mol%, and still more preferably 4 to 46 mol%.

A weight-average molecular weight of the polymer chain represented by $P^1$ is preferably 1,000 or more and more preferably 1,000 to 10,000. The upper limit is preferably 9,000 or less, more preferably 6,000 or less, and still more preferably 3,000 or less. The lower limit is preferably 1,200 or more and more preferably 1,400 or more. The weight-average molecular weight of $P^1$ is a value calculated from the weight-average molecular weight of a raw material used for introducing into the polymer chain.

Specific examples of the resin (SP-1) include polymer compounds C-1 to C-31 described in paragraphs "0196" to "0209" of JP2013-043962A, polymer compounds (C-1) to (C-61) described in paragraphs "0256" to "0269" of JP2014-177613A, and a resin having a structure described in paragraph "0061" of WO2018/163668A, the contents of which are incorporated herein by reference.

-Comb-shaped polymer-

As the resin B, a comb-shaped polymer can also be used.

In a case where the resin B is a comb-shaped polymer, due to steric hindrance caused by the side chain (graft chain), aggregation and the like of particles in the composition can be suppressed more effectively, and excellent storage stability can be obtained. In addition, it is possible to easily form a phase-separated structure in the film during film formation. The resin B including the repeating unit having a graft chain may be used as a dispersant or a binder.

In the present invention, the graft chain means a polymer chain branched and extended from the main chain of the comb-shaped polymer. The length of the graft chain is not particularly limited, and in a case where the graft chain is longer, a steric repulsion effect is enhanced, and thus it is possible to improve dispersibility of the particles and facilitate the formation of the phase-separated structure. As the graft chain, the number of atoms excluding the hydrogen atoms is preferably 40 to 10,000, the number of atoms excluding the hydrogen atoms is more preferably 50 to 2,000, and the number of atoms excluding the hydrogen atoms is still more preferably 60 to 500.

It is preferable that the graft chain includes at least one structural repeating unit selected from a polyester structural repeating unit, a polyether structural repeating unit, a poly(meth)acrylic structural repeating unit, a polyurethane structural repeating unit, a polyurea structural repeating unit, or a polyamide structural repeating unit, it is more preferable that the graft chain includes at least one structural repeating unit selected from a polyester structural repeating unit, a polyether structural repeating unit, or a poly(meth)acrylic structural repeating unit, and it is still more preferable that the graft chain includes a polyester structural repeating unit. Examples of the polyester structural repeating unit include a repeating unit having a structure represented by Formula (G-1), Formula (G-4), or Formula (G-5). In addition, examples of the polyether structural repeating unit include a repeating unit having a structure represented by Formula (G-2). In addition, examples of the poly(meth)acrylic structural repeating unit include a repeating unit having a structure represented by Formula (G-3).

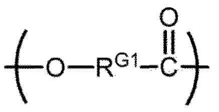
(G-1)

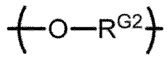
(G-2)

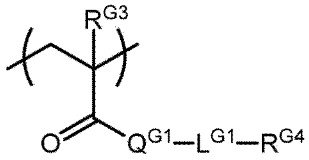
(G-3)

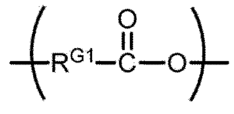
(G-4)

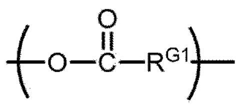
(G-5)

In the formulae, $R^{G1}$ and $R^{G2}$ each represent an alkylene group. The alkylene group represented by $R^{G1}$ and $R^{G2}$ is not particularly limited, but is preferably a linear or branched alkylene group having 1 to 20 carbon atoms, more preferably a linear or branched alkylene group having 2 to 16 carbon atoms, and still more preferably a linear or branched alkylene group having 3 to 12 carbon atoms.

In the formulae, $R^{G3}$ represents a hydrogen atom or a methyl group.

In the formulae, $Q^{G1}$ represents -O- or -NH-, and $L^{G1}$ represents a single bond or a divalent linking group. Examples of the divalent linking group include an alkylene group (preferably an alkylene group having 1 to 12 carbon atoms), an alkyleneoxy group (preferably an alkyleneoxy group having 1 to 12 carbon atoms), an oxyalkylenecarbonyl group (preferably an oxyalkylenecarbonyl group having 1 to 12 carbon atoms), an arylene group (preferably an arylene group having 6 to 20 carbon atoms), -NH-, -SO-, $-SO_2-$, -CO-, -O-, -COO-, OCO-, -S-, and a group formed by a combination of two or more of these groups.

$R^{G4}$ represents a hydrogen atom or a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group.

A terminal structure of the graft chain is not particularly limited. The terminal structure may be a hydrogen atom or a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group. Among these, from the viewpoint of improvement of the dispersibility of the particles, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

The graft chain is preferably a structure represented by Formula (G-1a), Formula (G-2a), Formula (G-3a), Formula (G-4a), or Formula (G-5a).

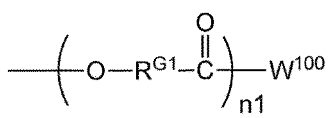
(G-1a)

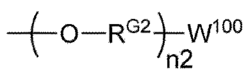
(G-2a)

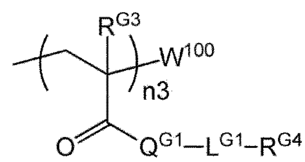
(G-3a)

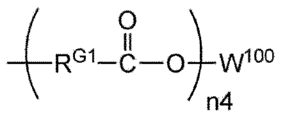
(G-4a)

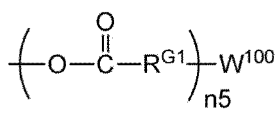
(G-5a)

In the formulae, $R^{G1}$ and $R^{G2}$ each independently represent an alkylene group, $R^{G3}$ represents a hydrogen atom or a methyl group, $Q^{G1}$ represents -O- or -NH-, $L^{G1}$ represents a single bond or a divalent linking group, $R^{G4}$ represents a hydrogen atom or a substituent, and $W^{100}$ represents a hydrogen atom or a substituent. n1 to n5 each independently represent an integer of 2 or more. $R^{G1}$ to $R^{G4}$, $Q^{G1}$, and $L^{G1}$ have the same meanings as $R^{G1}$ to $R^{G4}$, $Q^{G1}$, and $L^{G1}$ described in Formulae (G-1) to (G-5), and preferred ranges thereof are also the same.

In Formulae (G-1a) to (G-5a), it is preferable that $W^{100}$ represents a substituent. Examples of the substituent include an alkyl group, an aryl group, a heteroaryl group, an alkoxy group, an aryloxy group, a heteroaryloxy group, an

alkylthioether group, an arylthioether group, and a heteroarylthioether group. Among these, from the viewpoint of improvement of the dispersibility of the pigment or the like, a group having a steric repulsion effect is preferable, and an alkyl group or alkoxy group having 5 to 24 carbon atoms is preferable. The alkyl group and the alkoxy group may be linear, branched, or cyclic, and are preferably linear or branched.

In Formulae (G-1a) to (G-5a), n1 to n5 each are preferably an integer of 2 to 100, more preferably an integer of 2 to 80, and still more preferably an integer of 8 to 60.

In Formula (G-1a), in a case where n1 is 2 or more, a plurality of $R^{G1}$'s in each repeating unit may be the same or different from each other. In a case where $R^{G1}$ includes two or more kinds of repeating units different from each other, the arrangement of the repeating units is not particularly limited, and may be performed in any of a random manner, an alternative manner, and a blocked manner. The same applies to Formulae (G-2a) to (G-5a).

Examples of the repeating unit having a graft chain include a repeating unit represented by Formula (A-1-2).

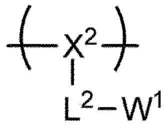

(A-1-2)

In Formula (A-1-2), $X^2$ represents the main chain of the repeating unit (structure included in the main chain of the comb-shaped polymer), $L^2$ represents a single bond or a divalent linking group, and $W^1$ represents a graft chain.

Examples of the main chain of the repeating unit represented by $X^2$ in Formula (A-1-2) include the structures described in the description of $X^1$ of Formula (A-1-1) described later, and preferred ranges thereof are also the same. Examples of the divalent linking group represented by $L^2$ in Formula (A-1-2) include an alkylene group (preferably an alkylene group having 1 to 12 carbon atoms), an arylene group (preferably an arylene group having 6 to 20 carbon atoms), -NH-, -SO-, $-SO_2-$, -CO-, -O-, -COO-, -OCO-, -S-, and a group formed by a combination of two or more of these groups. Examples of the graft chain represented by $W^1$ in Formula (A-1-2) include the graft chains described above.

Specific examples of the repeating unit represented by Formula (A-1-2) include a repeating unit represented by Formula (A-1-2a) and a repeating unit represented by Formula (A-1-2b).

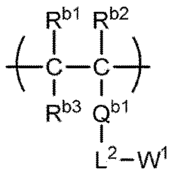

(A-1-2a)

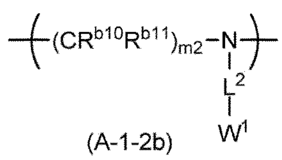

(A-1-2b)

In Formula (A-1-2a), $R^{b1}$ to $R^{b3}$ each independently represent a hydrogen atom or an alkyl group, $Q^{b1}$ represents -CO-, -COO-, -OCO-, -CONH-, or a phenylene group, $L^2$ represents a single bond or a divalent linking group, and $W^1$ represents a graft chain. The number of carbon atoms in the alkyl group represented by $R^{b1}$ to $R^{b3}$ is preferably 1 to 10, more preferably 1 to 3, and still more preferably 1. $Q^{b1}$ is preferably -COO- or -CONH- and more preferably -COO-.

In Formula (A-1-2b), $R^{b10}$ and $R^{b11}$ each independently represent a hydrogen atom or an alkyl group, m2 represents an integer of 1 to 5, $L^2$ represents a single bond or a divalent linking group, and $W^1$ represents a graft chain. The number of carbon atoms in the alkyl group represented by $R^{b10}$ and $R^{b11}$ is preferably 1 to 10 and more preferably 1 to 3.

A weight-average molecular weight (Mw) of the repeating unit having a graft chain is preferably 1,000 or more, more preferably 1,000 to 10,000, and still more preferably 1,000 to 7,500. In the present invention, the weight-average molecular weight of the repeating unit having a graft chain is a value calculated from the weight-average molecular weight of the raw material monomer used for the polymerization of the repeating unit. For example, the repeating unit having a graft chain can be formed by polymerizing a macromonomer. Here, the macromonomer means a polymer compound in which a polymerizable group is introduced at a polymer terminal. In a case where the repeating unit having a graft chain is formed using a macromonomer, the weight-average molecular weight of the macromonomer corresponds to the repeating unit having a graft chain.

The resin B may be a resin having a polymerizable group (hereinafter, also referred to as a polymerizable resin). The polymerizable resin may be, for example, the above-described comb-shaped polymer or the above-described

star polymer. Examples of the polymerizable group include an ethylenically unsaturated bond-containing group, an epoxy group, a cyclic ether group such as an oxetane group, a methylol group, an alkoxymethyl group, and a blocked isocyanate group. By using the polymerizable resin, it is possible to suppress excessive progress of phase separation in a film after curing. The amount of a polymerizable group-containing group in the polymerizable resin (also referred to as a "polymerizable group value of the polymerizable resin") is preferably 0.01 to 5.0 mmol/g. The upper limit is more preferably 4.0 mmol/g or less, still more preferably 3.0 mmol/g or less, even more preferably 2.0 mmol/g or less, and particularly preferably 1.5 mmol/g or less. The lower limit is preferably 0.1 mmol/g or more and more preferably 0.2 mmol/g or more. The amount of the polymerizable group in the polymerizable resin is a numerical value representing a molar amount of polymerizable group per 1 g of the solid content of the polymerizable resin. In a case where the polymerizable group value in the polymerizable resin can be calculated from raw materials used for the synthesis of the polymerizable resin, a value calculated from the raw materials charged is used. In addition, in a case where the polymerizable group value in the polymerizable resin cannot be calculated from raw materials used for the synthesis of the polymerizable resin, for example, in a case of the ethylenically unsaturated bond-containing group, a value measured using a hydrolysis method is used. Specifically, a low-molecular-weight component (a) of polymerizable group site is extracted from the polymerizable resin by an alkali treatment, a content of the low-molecular-weight component is measured by high-performance liquid chromatography (HPLC), and the polymerizable group value in the polymerizable resin is calculated by the following expression. In a case where the polymerizable group cannot be extracted from the polymerizable resin by the alkali treatment, a value measured by a nuclear magnetic resonance (NMR) method is used.

$$\text{Polymerizable Group Value [mmol/g] of Polymerizable Resin} = (\text{Content [ppm] of Low-Molecular-Weight Component (a)}/\text{Molecular Weight [g/mol] of Low-Molecular-Weight Component (a)}/(\text{Weighed Value [g] of Polymerizable Resin}) \times (\text{Concentration of Solid Contents [mass\%] of Polymerizable Resin}/100) \times 10)$$

Examples of the polymerizable resin include a resin including a repeating unit having a polymerizable group in the side chain and a resin which is represented by Formula (SP-1) described above and has a structure in which at least one of $Z^1$, $A^1$, or $P^1$ is a polymerizable group.

Examples of the repeating unit having a polymerizable group in the side chain include a repeating unit represented by Formula (A-1-1). The resin including the repeating unit represented by Formula (A-1-1) may be used as a dispersant or a binder. In the polymerizable resin, a content of the repeating unit having a polymerizable group is preferably 10 mol% or more, more preferably 10 to 80 mol%, and still more preferably 20 to 70 mol% with respect to the total repeating units of the polymerizable resin.

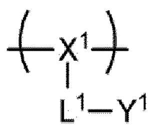

(A-1-1)

In Formula (A-1-1), $X^1$ represents the main chain of the repeating unit, $L^1$ represents a single bond or a divalent linking group, and $Y^1$ represents a polymerizable group.

In Formula (A-1-1), the main chain of the repeating unit represented by $X^1$ is not particularly limited. It is not particularly limited as long as it is a linking group formed from a known polymerizable monomer. Examples thereof include a poly(meth)acrylic linking group, a polyalkyleneimine-based linking group, a polyester-based linking group, a polyurethane-based linking group, a polyuria-based linking group, a polyamide-based linking group, a polyether-based linking group, and a polystyrene-based linking group. Among these, a poly(meth)acrylic linking group or a polyalkyleneimine-based linking group is preferable, and a poly(meth)acrylic linking group is more preferable from the viewpoint of availability of raw materials and manufacturing suitability.

In Formula (A-1-1), examples of the divalent linking group represented by $L^1$ include an alkylene group (preferably an alkylene group having 1 to 12 carbon atoms), an alkyleneoxy group (preferably an alkyleneoxy group having 1 to 12 carbon atoms), an oxyalkylenecarbonyl group (preferably an oxyalkylenecarbonyl group having 1 to 12 carbon atoms), an arylene group (preferably an arylene group having 6 to 20 carbon atoms), -NH-, -SO-, $-SO_2-$, -CO-, -O-, -COO-, -OCO-, -S-, and a group formed by combination of two or more of these groups. The alkylene group, the alkylene

group in the alkyleneoxy group, and the alkylene group in the oxyalkylenecarbonyl group may be linear, branched, or cyclic, and are preferably linear or branched. In addition, the alkylene group, the alkylene group in the alkyleneoxy group, and the alkylene group in the oxyalkylenecarbonyl group may have a substituent or may be unsubstituted. Examples of the substituent include a hydroxy group and an alkoxy group, and a hydroxy group is preferable from the viewpoint of manufacturing suitability.

In Formula (A-1-1), examples of the polymerizable group represented by $Y^1$ include an ethylenically unsaturated bond-containing group and a cyclic ether group, and an ethylenically unsaturated bond-containing group is preferable. Examples of the ethylenically unsaturated bond-containing group include a vinyl group, a vinyloxy group, an allyl group, a methallyl group, a (meth)acryloyl group, a styrene group, a cinnamoyl group, and a maleimide group. Among these, a (meth)acryloyl group, a styrene group, or a maleimide group is preferable, a (meth)acryloyl group is more preferable, and an acryloyl group is particularly preferable.

The resin including the repeating unit represented by Formula (A-1-1) may further include a repeating unit having a graft chain. Examples of the repeating unit having a graft chain include the repeating unit represented by Formula (A-1-2) described above. In the polymerizable resin, the content of the repeating unit having a graft chain is preferably 1.0 to 60 mol% and more preferably 1.5 to 50 mol% with respect to the total repeating units of the polymerizable resin.

The resin including the repeating unit represented by Formula (A-1-1) described above may further include a repeating unit having an acidic group. A content of the repeating unit having an acidic group is preferably 80 mol% or less and more preferably 10 to 80 mol% with respect to the total repeating units of the polymerizable resin.

A commercially available product is also available as the resin B, and specific examples thereof include DISPERBYK series (for example, DISPERBYK-111, 2001, and the like) manufactured by BYK-Chemie Japan K.K., Solsperse series (for example, Solsperse 20000, 76500, and the like) manufactured by Lubrizol Corporation, and AJISPER series manufactured by Ajinomoto Fine-Techno Co., Inc. In addition, products described in paragraph "0129" of JP2012-137564A and products described in paragraph "0235" of JP2017-194662A can also be used as the resin B.

A content of the resin B in the total solid content of the composition is preferably 0.1 to 60 mass%. The lower limit is preferably 1 mass% or more and more preferably 5 mass% or more. The upper limit is preferably 50 mass% or less, and more preferably 45 mass% or less.

In addition, the resin used in the composition preferably includes 10 mass% or more of the polymerizable resin (preferably, a resin including an ethylenically unsaturated bond-containing group), more preferably includes 20 mass% or more of the polymerizable resin, and still more preferably 30 mass% or more of the polymerizable resin with respect to the total mass of the resin.

The content of the resin used as a dispersant in the composition is preferably 5 to 150 parts by mass with respect to 100 parts by mass of the above-described white particles. The upper limit is preferably 140 parts by mass or less, more preferably 125 parts by mass or less, and still more preferably 100 parts by mass or less. The lower limit is preferably 10 parts by mass or more, more preferably 15 parts by mass or more, and still more preferably 25 parts by mass or more.

In addition, it is also preferable that the composition according to the embodiment of the present invention includes a resin having a polymerizable group and a resin not having a polymerizable group. According to this aspect, the phase separation is easily promoted due to polymerizable phase separation. In this case, the content of the resin having a polymerizable group is preferably 5 to 90 parts by mass with respect to 100 parts by mass of the resin not having a polymerizable group. The upper limit is preferably 85 parts by mass or less, more preferably 80 parts by mass or less, and still more preferably 70 parts by mass or less. The lower limit is preferably 10 parts by mass or more, more preferably 15 parts by mass or more, and still more preferably 25 parts by mass or more.

<Polymerizable monomer>

As the polymerizable monomer, a well-known compound which is crosslinkable by a radical, an acid, or heat can be used. Examples of the polymerizable monomer include a compound having an ethylenically unsaturated bond-containing group and a compound having a cyclic ether group. Examples of the ethylenically unsaturated bond-containing group include a vinyl group, a (meth)allyl group, and a (meth)acryloyl group. Examples of the cyclic ether group include an epoxy group and an oxetanyl group. As the polymerizable monomer, a radically polymerizable monomer or a cationically polymerizable monomer is preferable, and a radically polymerizable monomer is more preferable.

In addition, the polymerizable monomer used in the present invention may be a polymerizable monomer including a ring structure, and in this case, a radically polymerizable monomer including a ring structure is more preferable. In a case of using a polymerizable monomer including a ring structure, phase separation from the resin tends to occur. In particular, the above-described effect is remarkable in a case of using a radically polymerizable monomer including a ring structure. For the reason that the above-described effect can be obtained more remarkably, the ring structure included in the polymerizable monomer is preferably an aliphatic ring. In addition, the aliphatic ring is preferably an

aliphatic crosslinked ring. The aliphatic crosslinked ring is an aliphatic ring having a structure in which two or more atoms that are not adjacent to each other are linked to one aliphatic ring. Specific examples of the aliphatic crosslinked ring include a tricyclodecane ring and an adamantane ring, and a tricyclodecane ring is preferable. From the viewpoint of mobility of the monomer, the number of ring structures included in the polymerizable monomer is preferably 1 to 5, more preferably 1 to 3, and still more preferably 1. Specific examples of the radically polymerizable monomer including a ring structure include dimethylol-tricyclodecanediacrylate and 1,3-adamantananediol diacrylate.

The radically polymerizable monomer is not particularly limited as long as it is a compound which is polymerizable by the action of a radical. As the radically polymerizable monomer, a compound having an ethylenically unsaturated bond-containing group is preferable, a compound having two or more ethylenically unsaturated bond-containing groups is more preferable, and a compound having three or more ethylenically unsaturated bond-containing groups is still more preferable. The upper limit of the number of the ethylenically unsaturated bond-containing groups is, for example, preferably 15 or less and more preferably 6 or less. Examples of the ethylenically unsaturated bond-containing group include a vinyl group, a styryl group (vinylphenyl group), a (meth)allyl group, and a (meth)acryloyl group. Among these, a (meth)acryloyl group is preferable. The radically polymerizable monomer is preferably a (meth)acrylate compound having 3 to 15 functional groups and more preferably a (meth)acrylate compound having 3 to 6 functional groups. In addition, it is also preferable that the radically polymerizable monomer includes a ring structure.

A molecular weight of the radically polymerizable monomer is preferably 200 to 3,000. The upper limit of the molecular weight is preferably 2,500 or less and still more preferably 2,000 or less. The lower limit of the molecular weight is preferably 250 or more and still more preferably 300 or more.

In addition, it is also preferable that the radically polymerizable monomer is a compound having a group having an ethylenically unsaturated bond-containing group which has a boiling point at 100°C or higher under normal pressure and has at least one ethylene group capable of addition polymerization. Examples of the radically polymerizable monomer include: a monofunctional acrylate or methacrylate such as polyethylene glycol mono(meth)acrylate, polypropylene glycol mono(meth)acrylate, or phenoxyethyl (meth)acrylate; polyethylene glycol di(meth)acrylate, trimethylol ethane tri(meth)acrylate, neopentyl glycol di(meth)acrylate, pentaerythritol tri(meth)acrylate, pentaerythritol tetra(meth)acrylate, dipentaerythritol penta(meth)acrylate, dipentaerythritol hexa(meth)acrylate, hexanediol (meth)acrylate, trimethylol propane tri(acryloyloxypropyl)ether, or tri(acryloyloxyethyl)isocyanurate; and mixtures of the above-described compounds. Among these, pentaerythritol tetra(meth)acrylate is preferable.

In addition, as the radically polymerizable monomer, a compound represented by any one of the following Formulae (MO-1) to (MO-5) can also be suitably used. In a case where T in the formulae represents an oxyalkylene group, a terminal thereof on a carbon atom side in T is bonded to R.

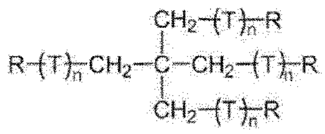

(MO-1)

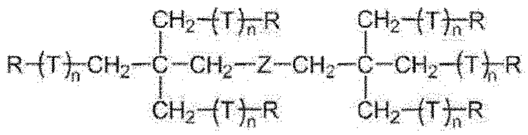

(MO-2)

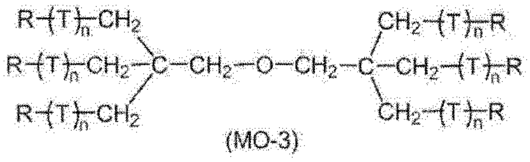

(MO-3)

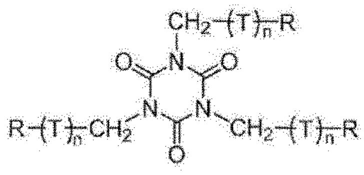

(MO-4)

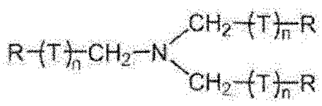

(MO-5)

R:

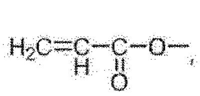,
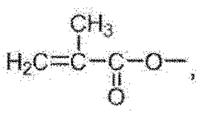,
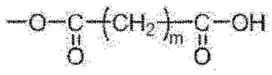,

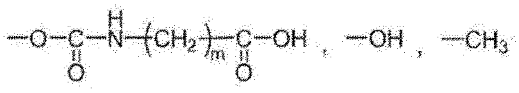

T:

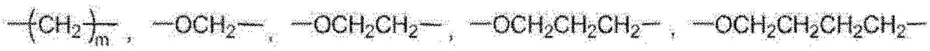

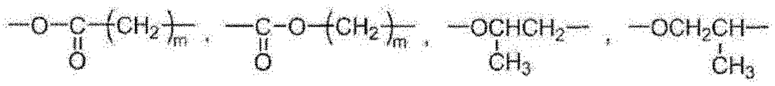

Z:

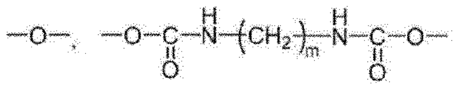

In the formulae, n represents 0 to 14, and m represents 1 to 8. A plurality of R's and a plurality of T's which are present in the same molecule may be the same as or different from each other. At least one of a plurality of R's which are present in each of the compounds represented by Formula (MO-1) to (MO-5) represents a group represented by $-OC(=O)CH=CH_2$ or $-OC(=O)C(CH_3)=CH_2$. Specific examples of the compounds represented by Formulae (MO-1) to (MO-5) include compounds described in paragraphs "0248" to "0251" of JP2007-269779A, the content of which is incorporated herein by reference.

As the radically polymerizable monomer, dipentaerythritol triacrylate (as a commercially available product, KAYARAD D-330 manufactured by Nippon Kayaku Co., Ltd.), dipentaerythritol tetraacrylate (as a commercially available product, KAYARAD D-320 manufactured by Nippon Kayaku Co., Ltd.), dipentaerythritol penta(meth)acrylate (as a commercially available product, KAYARAD D-310 manufactured by Nippon Kayaku Co., Ltd.), dipentaerythritol hexa(meth)acrylate (as a commercially available product, KAYARAD DPHA manufactured by Nippon Kayaku Co., Ltd. and NK ESTER A-DPH-12E manufactured by Shin-Nakamura Chemical Co., Ltd.), a compound having a structure in which a (meth)acryloyl group thereof is bonded through an ethylene glycol residue and/or a propylene glycol residue (for example, SR454 and SR499 available from Sartomer Japan Inc.), diglycerin ethylene oxide (EO)-modified (meth)acrylate (as a commercially available product, M-460 manufactured by TOAGOSEI CO., LTD.), pentaerythritol tetraacrylate (NK ESTER A-TMMT manufactured by Shin-Nakamura Chemical Co., Ltd.), 1,6-hexanediol diacrylate (KAYARAD HDDA manufactured by Nippon Kayaku Co., Ltd.), KAYARAD RP-1040 (manufactured by Nippon Kayaku Co., Ltd.), ARONIX TO-2349 (manufactured by TOAGOSEI CO., LTD.), NK OLIGO UA-7200 (manufactured by Shin-Nakamura Chemical Co., Ltd.), 8UH-1006 and 8UH-1012 (manufactured by Taisei Fine Chemical Co., Ltd.), Light Acrylate POB-A0 (manufactured by KYOEISHA CHEMICAL Co., Ltd.), or the like can also be used.

In addition, as the radically polymerizable monomer, it is also preferable to use a trifunctional (meth)acrylate compound such as trimethylolpropane tri(meth)acrylate, trimethylolpropane propyleneoxide-modified tri(meth)acrylate, trimethylolpropane ethyleneoxide-modified tri(meth)acrylate, isocyanuric acid ethyleneoxide-modified tri(meth)acrylate, and pentaerythritol tri(meth)acrylate. Examples of a commercially available product of the trifunctional (meth)acrylate compound include ARONIX M-309, M-310, M-321, M-350, M-360, M-313, M-315, M-306, M-305, M-303, M-452, and M-450 (manufactured by TOAGOSEI CO., LTD.), NK ESTER A9300, A-GLY-9E, A-GLY-20E, A-TMM-3, A-TMM-3L, A -TMM-3LM-N, A-TMPT, and TMPT (manufactured by Shin-Nakamura Chemical Co., Ltd.), and KAYARAD GPO-303, TMPTA, THE-330, TPA-330, and PET-30 (manufactured by Nippon Kayaku Co., Ltd.).

The radically polymerizable monomer may have an acidic group such as a carboxy group, a sulfo group, or a phosphoric acid group. Examples of the radically polymerizable monomer having an acidic group include an ester of an aliphatic polyhydroxy compound and an unsaturated carboxylic acid. Examples of a commercially available product include ARONIX series (for example, M-305, M-510, or M-520, manufactured by Toagosei Co., Ltd.). An acid value of the radically polymerizable monomer having an acidic group is preferably 0.1 to 40 mgKOH/g. The lower limit is preferably 5 mgKOH/g or more. The upper limit is preferably 30 mgKOH/g or less.

Examples of the cationically polymerizable monomer include a compound having a cationically polymerizable group. Examples of the cationically polymerizable group include a cyclic ether group such as an epoxy group or an oxetanyl group. As the cationically polymerizable monomer, a compound having a cyclic ether group is preferable, and a compound having an epoxy group (also referred to as an "epoxy compound") is more preferable.

A molecular weight of the cationically polymerizable monomer is preferably 200 to 3,000. The upper limit of the

molecular weight is preferably 2,500 or less and still more preferably 2,000 or less. The lower limit of the molecular weight is preferably 250 or more and still more preferably 300 or more.

Examples of the epoxy compound include a compound having one or more epoxy groups in one molecule. Among these, a compound having two or more epoxy groups in one molecule is preferable. The number of epoxy groups in one molecule is preferably 1 to 100. The upper limit of the epoxy group may be, for example, 10 or less or 5 or less. The lower limit of the epoxy group is preferably 2 or more.

Examples of the epoxy compound include a compound represented by the following Formula (EP1).

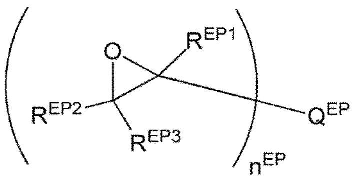

(EP1)

In Formula (EP1), $R^{EP1}$ to $R^{EP3}$ each independently represent a hydrogen atom, a halogen atom, or an alkyl group. The alkyl group may have a cyclic structure or may have a substituent. $R^{EP1}$ and $R^{EP2}$, or $R^{EP2}$ and $R^{EP3}$ may be bonded to each other to form a ring structure. $Q^{EP}$ represents a single bond or an $n^{EP}$-valent organic group. $R^{EP1}$ to $R^{EP3}$ may be bonded to $Q^{EP}$ to form a ring structure. $n^{EP}$ represents an integer of 2 or more, preferably 2 to 10 and more preferably 2 to 6. However, in a case where $Q^{EP}$ is a single bond, $n^{EP}$ is 2. The details of $R^{EP1}$ to $R^{EP3}$, and $Q^{EP}$ can be found in paragraphs "0087" and "0088" of JP2014-089408A, the content of which is incorporated herein by reference. Specific examples of the compound represented by Formula (EP1) include a compound described in paragraph "0090" of JP2014-089408A and a compound described in paragraph "0151" of JP2010-054632A, the contents of which are incorporated herein by reference.

As the cationically polymerizable monomer, a commercially available product can also be used. Examples of the commercially available product include ADEKA GLYCILOL series manufactured by Adeka Corporation (for example, ADEKA GLYCILOL ED-505) and EPOLEAD series manufactured by Daicel Corporation (for example, EPOLEAD GT401).

The content of the polymerizable monomer in the total solid content of the composition is preferably 0.1 to 40 mass%. The lower limit is preferably 0.5 mass% or more and more preferably 1 mass% or more. The upper limit is preferably 30 mass% or less and more preferably 20 mass% or less. As the polymerizable monomer, one kind may be used alone, or two or more kinds may be used in combination. In a case where two or more polymerizable monomers are used in combination, it is preferable that the total content of the two or more polymerizable monomers is within the above-described range. In addition, in a case where two or more polymerizable monomers are used in combination, two or more radically polymerizable monomers may be used in combination, or a radically polymerizable monomer and a cationically polymerizable monomer may be used in combination.

In addition, the total content of the polymerizable monomer and the resin in the total solid content of the composition is preferably 10 to 90 mass%. The upper limit is preferably 80 mass% or less, and more preferably 75 mass% or less. The lower limit is preferably 20 mass% or more and more preferably 30 mass% or more.

In addition, the ratio of the polymerizable monomer to the resin is preferably 10 to 400 parts by mass of the polymerizable monomer with respect to 100 parts by mass of the resin. The lower limit is preferably 15 parts by mass or more and more preferably 20 parts by mass or more. The upper limit is preferably 380 parts by mass or less and more preferably 350 parts by mass or less.

<Solvent>

The composition according to the embodiment of the present invention includes a solvent. Examples of the solvent include an organic solvent. Basically, the solvent is not particularly limited as long as it satisfies the solubility of the respective components and the application properties of the composition. Examples of the organic solvent include an ester solvent, a ketone solvent, an alcohol solvent, an amide solvent, an ether solvent, and a hydrocarbon solvent. The details of the organic solvent can be found in paragraph "0223" of WO2015/166779A, the content of which is incorporated herein by reference. In addition, an ester solvent in which a cyclic alkyl group is substituted or a ketone solvent in which a cyclic alkyl group is substituted can also be preferably used. Specific examples of the organic solvent include acetone, methyl ethyl ketone, cyclohexane, cyclohexanone, cyclopentanone, ethyl acetate, butyl acetate, cyclohexyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetylacetone, diacetone alcohol, ethylene glycol monomethyl ether acetate, ethylene glycol ethyl ether acetate, ethylene glycol monoisopropyl ether, ethylene glycol monobutyl ether acetate, 3-methoxypropanol, methoxymethoxyethanol, diethylene glycol monomethyl ether, diethylene glycol monoethyl ether, diethylene glycol dimethyl ether, diethylene

glycol diethyl ether, propylene glycol monomethyl ether acetate, propylene glycol monoethyl ether acetate, 3-methoxy propyl acetate, N,N-dimethylformamide, dimethyl sulfoxide, g-butyrolactone, methyl lactate, ethyl lactate, butyl diglycol acetate, 3-methoxy butyl acetate, 3-methoxy-N,N-dimethylpropanamide, and 3-butoxy-N,N-dimethylpropanamide. Among these organic solvents, one kind can be used alone, or a mixture of two or more kinds can be used.

In the present invention, an organic solvent having a low metal content is preferably used. For example, the metal content in the organic solvent is preferably 10 mass parts per billion (ppb) or less. Optionally, an organic solvent having a metal content at a mass parts per trillion (ppt) level may be used. For example, such an organic solvent is available from Toyo Gosei Co., Ltd. (The Chemical Daily, November 13, 2015).

Examples of a method of removing impurities such as metal from the organic solvent include distillation (for example, molecular distillation or thin-film distillation) and filtering using a filter. The pore size of a filter used for the filtering is preferably 10 μm or less, more preferably 5 μm or less, and still more preferably 3 μm or less. As a material of the filter, polytetrafluoroethylene, polyethylene, or nylon is preferable.

The organic solvent may include an isomer (a compound having the same number of atoms and a different structure). In addition, the organic solvent may include only one isomer or a plurality of isomers.

The organic solvent preferably has the content of peroxides of 0.8 mmol/L or less, and it is more preferable that the organic solvent does not substantially include peroxides.

An SP value of the solvent is preferably 17.00 to 24.00 $MPa^{0.5}$, more preferably 18.00 to 22.00 $MPa^{0.5}$, and still more preferably 18.50 to 20.00 $MPa^{0.5}$.

Examples of the solvent having an SP value within the above-described range include propylene glycol monomethyl ether acetate (18.83), propylene glycol monomethyl ether (23.57), cyclohexanone (20.47), cyclopentanone (21.25), and butyl acetate (19.84). The numerical values in parentheses represent the SP value of each solvent, respectively.

In addition, from the viewpoint of dispersibility of the white particles, a difference between the SP value of the solvent and the SP value of the polymer structure included in the above-described constitutional unit A is preferably 0.00 to 1.23 $MPa^{0.5}$, more preferably 0.00 to 0.82 $MPa^{0.5}$, and still more preferably 0.00 to 0.41 $MPa^{0.5}$.

The content of the solvent in the composition is preferably 10 to 95 mass%. The lower limit is preferably 20 mass% or more, more preferably 30 mass% or more, and still more preferably 40 mass% or more. The upper limit is preferably 90 mass%% or less, more preferably 85 mass% or less, and still more preferably 80 mass% or less. As the solvent, one kind may be used alone, or two or more kinds may be used in combination. In a case where two or more solvents are used in combination, it is preferable that the total content of the solvents is within the above-described range.

<Photopolymerization initiator>

The composition according to the embodiment of the present invention may contain a photopolymerization initiator. Examples of the photopolymerization initiator include a photoradical polymerization initiator and a photocationic polymerization initiator. It is preferable that the photopolymerization initiator selected according to the type of the polymerizable monomer is used. In a case where a radically polymerizable monomer is used as the polymerizable monomer, it is preferable that the photoradical polymerization initiator is used as the photopolymerization initiator. In addition, in a case where a cationically polymerizable monomer is used as the polymerizable monomer, it is preferable that the photocationic polymerization initiator is used as the photopolymerization initiator. The photopolymerization initiator is not particularly limited and can be appropriately selected from well-known photopolymerization initiators. For example, a compound having photosensitivity to light in a range from an ultraviolet range to a visible range is preferable.

The content of the photopolymerization initiator in the total solid content of the composition is preferably 0.1 to 50 mass%, more preferably 0.5 to 30 mass%, and still more preferably 1 to 20 mass%. The composition according to the embodiment of the present invention may include one photopolymerization initiator or two or more photopolymerization initiators. In a case where the composition includes two or more photopolymerization initiators, it is preferable that the total content of the photopolymerization initiators is within the above-described range.

[Photoradical Polymerization Initiator]

Examples of the photoradical polymerization initiator include a halogenated hydrocarbon derivative (for example, a compound having a triazine skeleton or a compound having an oxadiazole skeleton), an acylphosphine compound, a hexaarylbiimidazole, an oxime compound, an organic peroxide, a thio compound, a ketone compound, an aromatic onium salt, an α-hydroxyketone compound, and an α-aminoketone compound. In addition, from the viewpoint of exposure sensitivity, as the photopolymerization initiator, a trihalomethyltriazine compound, a benzyldimethylketal compound, an α-hydroxyketone compound, an α-aminoketone compound, an acylphosphine compound, a phosphine oxide compound, a metallocene compound, an oxime compound, a triarylimidazole dimer, an onium compound, a benzothiazole compound, a benzophenone compound, an acetophenone compound, a cyclopentadiene-benzene-iron complex, a halomethyl oxadiazole compound, or a 3-aryl-substituted coumarin compound is preferable, a compound selected from the group consisting of an oxime compound, an α-hydroxyketone compound, an α-aminoketone compound, and an acylphosphine compound is more preferable, and an oxime compound is still more preferable. Examples of the photopolymerization initiator include compounds described in paragraphs 0065 to 0111 of JP2014-130173A, and JP6301489B, the contents of which are incorporated herein by reference.

Examples of a commercially available product of the α-hydroxyketone compound include Omnirad 184, Omnirad 1173, Omnirad 2959, and Omnirad 127 (all of which are manufactured by IGM Resins B.V.), Irgacure 184, Irgacure 1173, Irgacure 2959, and Irgacure 127 (all of which are manufactured by BASF). Examples of a commercially available product of the α-aminoketone compound include Omnirad 907, Omnirad 369, Omnirad 369E, and Omnirad 379EG (all of which are manufactured by IGM Resins B.V.), Irgacure 907, Irgacure 369, Irgacure 369E, and Irgacure 379EG (all of which are manufactured by BASF). Examples of a commercially available product of the acylphosphine compound include Omnirad 819 and Omnirad TPO (both of which are manufactured by IGM Resins B.V.), Irgacure 819 and Irgacure TPO (both of which are manufactured by BASF).

Examples of the oxime compound include the compounds described in JP2001-233842A, the compounds described in JP2000-080068A, the compounds described in JP2006-342166A, the compounds described in J. C. S. Perkin II (1979, pp. 1653 to 1660), the compounds described in J. C. S. Perkin II (1979, pp. 156 to 162), the compounds described in Journal of Photopolymer Science and Technology (1995, pp. 202 to 232), the compounds described in JP2000-066385A, the compounds described in JP2000-080068A, the compounds described in JP2004-534797A, the compounds described in JP2006-342166A, the compounds described in JP2017-019766A, the compounds described in JP6065596B, the compounds described in WO2015/152153A, the compounds described in WO2017/051680A, the compounds described in JP2017-198865A, the compounds described in paragraph "0025" to 0038" of WO2017/164127A, and the compounds described in WO2013/167515A. Specific examples of the oxime compound include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-(4-toluene sulfonyloxy)iminobutan-2-one, and 2-ethoxycarbonyloxyimino-1-phenylpropan-1-one. Examples of a commercially available product thereof include Irgacure OXE01, Irgacure OXE02, Irgacure OXE03, and Irgacure OXE04 (all of which are manufactured by BASF), TR-PBG-304 (manufactured by TRONLY), and ADEKA OPTOMER N-1919 (manufactured by ADEKA Corporation; photopolymerization initiator 2 described in JP2012-014052A). In addition, as the oxime compound, it is also preferable to use a compound having no colorability or a compound having high transparency and being resistant to discoloration. Examples of a commercially available product of the oxime compound include ADEKA ARKLS NCI-730, NCI-831, and NCI-930 (all of which are manufactured by Adeka Corporation).

An oxime compound having a fluorene ring can also be used as the photopolymerization initiator. Specific examples of the oxime compound having a fluorene ring include a compound described in JP2014-137466A.

As the photopolymerization initiator, an oxime compound having a skeleton in which at least one benzene ring of a carbazole ring is a naphthalene ring can also be used. Specific examples of such an oxime compound include the compounds described in WO2013/083505A.

An oxime compound having a fluorine atom can also be used as the photopolymerization initiator. Specific examples of the oxime compound having a fluorine atom include a compound described in JP2010-262028A, Compound 24 and 36 to 40 described in JP2014-500852A, and Compound (C-3) described in JP2013-164471A.

An oxime compound having a nitro group can be used as the photopolymerization initiator. It is preferable that the oxime compound having a nitro group is a dimer. Specific examples of the oxime compound having a nitro group include a compound described in paragraphs "0031" to "0047" of JP2013-114249A and paragraphs "0008" to "0012" and "0070" to "0079" of JP2014-137466A, a compound described in paragraphs "0007" to 0025" of JP4223071B, and ADEKA ARKLS NCI-831 (manufactured by Adeka Corporation).

An oxime compound having a benzofuran skeleton can also be used as the photopolymerization initiator. Specific examples thereof include OE-01 to OE-75 described in WO2015/036910A.

Specific examples of the oxime compound which are preferably used in the present invention are shown below, but the present invention is not limited thereto.

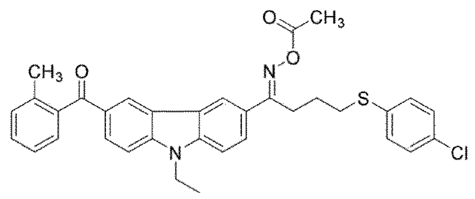

(C-1)

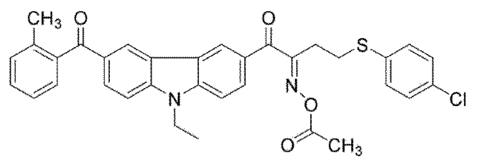

(C-2)

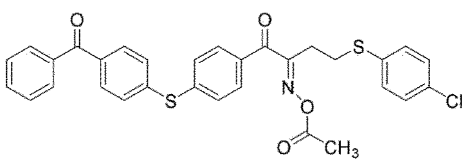

(C-3)

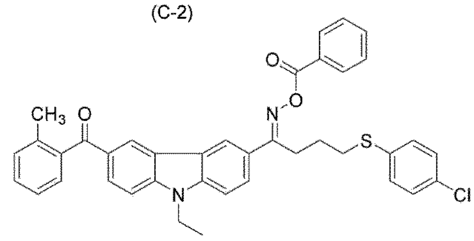

(C-4)

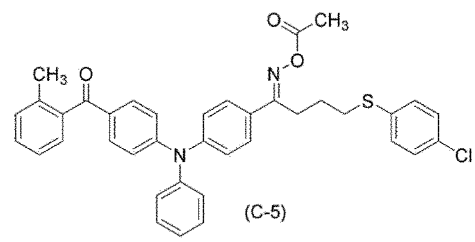

(C-5)

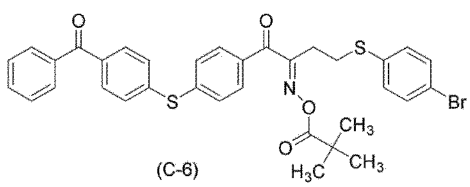

(C-6)

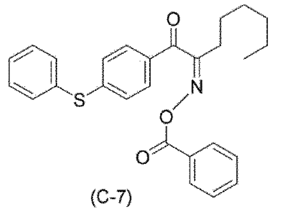

(C-7)

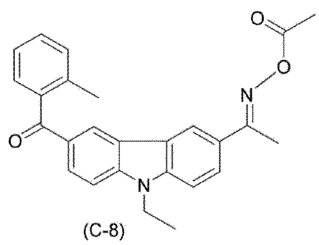

(C-8)

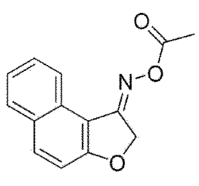

(C-9)

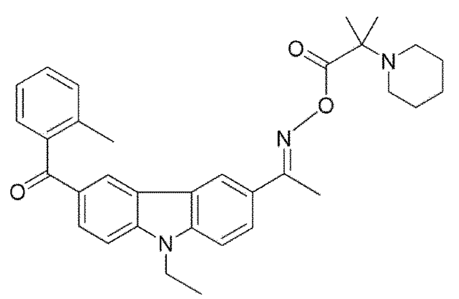

(C-10)

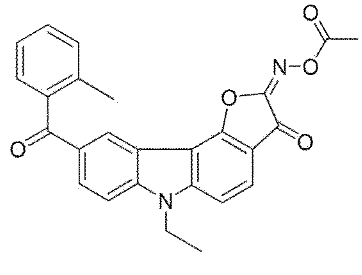

(C-11)

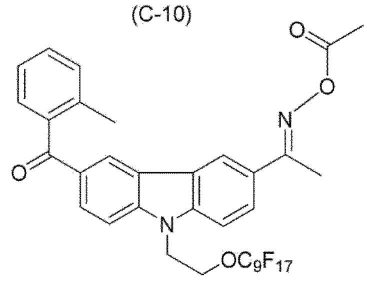

(C-12)

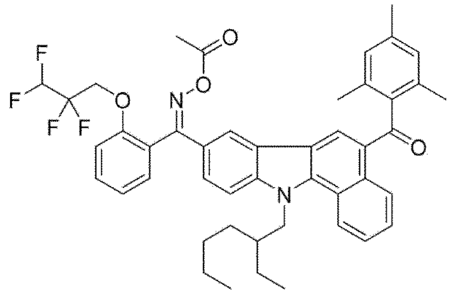

(C-13)

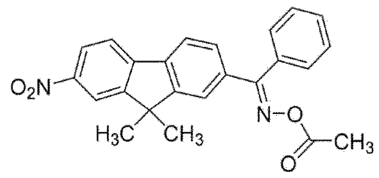

(C-14)

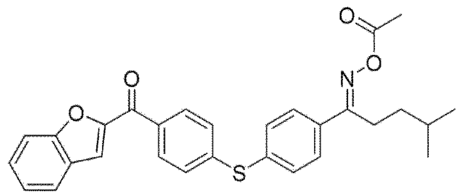

(C-15)

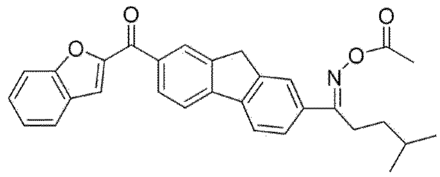

(C-16)

The oxime compound is preferably a compound having a maximal absorption wavelength in a wavelength in a range of 350 to 500 nm and more preferably a compound having a maximal absorption wavelength in a wavelength in a range of 360 to 480 nm. In addition, from the viewpoint of sensitivity, the molar absorption coefficient of the oxime compound at a wavelength of 365 nm or 405 nm is preferably high, more preferably 1000 to 300000, still more preferably 2000 to 300000, and particularly preferably 5000 to 200000. The molar absorption coefficient of the compound can be measured using a well-known method. For example, it is preferable that the molar absorption coefficient can be measured using a spectrophotometer (Cary-5 spectrophotometer, manufactured by Varian Medical Systems, Inc.) and ethyl acetate at a concentration of 0.01 g/L.

As the photopolymerization initiator, a bifunctional or tri- or higher functional photoradical polymerization initiator may be used. By using such a photoradical polymerization initiator, two or more radicals are generated from one molecule of the photoradical polymerization initiator, and as a result, good sensitivity is obtained. In addition, in a case of using a compound having an asymmetric structure, crystallinity is reduced so that solubility in a solvent or the like is improved, precipitation is to be difficult over time, and temporal stability of the coloring composition can be improved. Specific examples of the bifunctional or tri- or higher functional photoradical polymerization initiator include dimers of the oxime compounds described in JP2010-527339A, JP2011-524436A, WO2015/004565A, paragraphs "0407" to "0412" of JP2016-532675A, and paragraphs "0039" to "0055" of WO2017/033680A; the compound (E) and compound (G) described in JP2013-522445A; Cmpd 1 to 7 described in WO2016/034963A; the oxime ester photoinitiators described in paragraph "0007" of JP2017-523465A; the photoinitiators described in paragraphs "0020" to "0033" of JP2017-167399A; and the photopolymerization initiator (A) described in paragraphs "0017" to "0026" of JP2017-151342A.

The content of the photoradical polymerization initiator in the total solid content of the composition is preferably 0.1 to 50 mass%, more preferably 0.5 to 30 mass%, and still more preferably 1 to 20 mass%. The composition according to the embodiment of the present invention may include one photoradical polymerization initiator or two or more photoradical polymerization initiators. In a case where the composition includes two or more photoradical polymerization initiators, it is preferable that the total content of the photoradical polymerization initiators is within the above-described range.

<Photocationic polymerization initiator>

Examples of the photocationic polymerization initiator include a photoacid generator. Examples of the photoacid generator include compounds which are decomposed by light irradiation to generate an acid including: an onium salt compound such as a diazonium salt, a phosphonium salt, a sulfonium salt, or an iodonium salt; and a sulfonate compound such as imidosulfonate, oximesulfonate, diazodisulfone, disulfone, or o-nitrobenzyl sulfonate.

Examples of the photocationic polymerization initiator include compounds represented by the following Formulae (b1), (b2), and (b3).

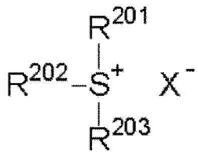
(b1)

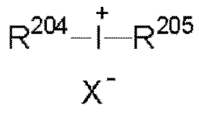
(b2)

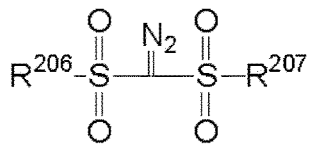
(b3)

In the formulae, $R^{201}$ to $R^{207}$ each independently represent an organic group. The number of carbon atoms in the organic group is preferably 1 to 30. Examples of the organic group include an alkyl group and an aryl group. In Formula (b1), two of $R^{201}$ to $R^{203}$ may be bonded to each other to form a ring structure, and the ring may include an oxygen atom, a sulfur atom, an ester bond, an amide bond, or a carbonyl group. In the formulae, $X^-$represents a non-nucleophilic anion. Examples of the non-nucleophilic anion include a sulfonate anion, a carboxylate anion, a bis(alkylsulfonyl)amide anion, a tris(alkylsulfonyl)methide anion, $BF_4^-$, $PF_6^-$, and $SbF_6^-$. The details of the compound represented by Formulae (b1), (b2), and (b3) can be found in paragraphs "0139" to "0214" of JP2009-258603A, the content of which is incorporated herein by reference.

Specific examples of the photocationic polymerization initiator include a compound having the following structure.

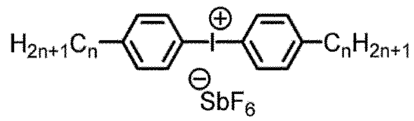

As the photocationic polymerization initiator, a commercially available product can also be used. Examples of the commercially available product of the photocationic polymerization initiator include ADEKA ARKLS SP series manufactured by Adeka Corporation (for example, ADEKA ARKLS SP-606) and IRGACURE 250, IRGACURE 270, and IRGACURE 290 manufactured by BASF.

The content of the photocationic polymerization initiator in the total solid content of the composition is preferably 0.1 to 50 mass%, more preferably 0.5 to 30 mass%, and still more preferably 1 to 20 mass%. The composition according to the embodiment of the present invention may include one photocationic polymerization initiator or two or more photocationic polymerization initiators. In a case where the composition includes two or more photocationic polymerization initiators, it is preferable that the total content of the two or more photocationic polymerization initiators is within the above-described range.

<Pigment derivative>

The composition according to the embodiment of the present invention may further contain a pigment derivative. Examples of the pigment derivative include a compound having a structure in which a portion of a chromophore is substituted with an acidic group, a basic group, or a phthalimidomethyl group. Examples of the acidic group include a sulfo group, a carboxy group, and a quaternary ammonium salt group thereof. Examples of the basic group include an amino group. The details of the pigment derivative can be found in paragraphs "0162" to "0183" of JP2011-252065A, the content of which is incorporated herein by reference. The content of the pigment derivative is preferably 1 to 30 parts by mass and more preferably 3 to 20 parts by mass with respect to 100 parts by mass of the pigment. Among these pigment derivatives, one kind may be used alone, or two or more kinds may be used in combination. In a case where two or more pigment derivatives are used in combination, it is preferable that the total content of the pigment derivatives is within the above-described range.

<Anti-coloring agent>

The composition according to the embodiment of the present invention may contain an anti-coloring agent. The anti-coloring agent described in this specification may be used as a polymerization inhibitor. Examples of the anti-coloring agent include a phenol compound, a phosphite compound, and a thioether compound. Among these, a phenol compound having a molecular weight of 500 or more, a phosphite compound having a molecular weight of 500 or more, or a thioether compound having a molecular weight of 500 or more is more preferable. In addition, as the anti-coloring agent, a phenol compound is preferable, and a phenol compound having a molecular weight of 500 or more is more preferable.

As the phenol compound, any phenol compound which is known as a phenol anti-coloring agent can be used.

As the phenol compound, for example, a hindered phenol compound is preferable. In particular, a compound having a substituent at a position (ortho position) adjacent to a phenolic hydroxy group is preferable. As the substituent, a substituted or unsubstituted alkyl group having 1 to 22 carbon atoms is preferable. In addition, a compound having a phenol group and a phosphite group in the same molecule is also preferable.

As the phenolic hydroxy group-containing compound, in particular, a polysubstituted phenol compound is suitably used. The polysubstituted phenol compound can be classified into three types (a hindered type represented by the following Formula (A), a semi-hindered type represented by the following Formula (B), and a less-hindered type represented by the following Formula (C)) having different substitution sites and different structures in terms of reactivity to a peroxy radical trapped for the stable generation of a phenoxy radical.

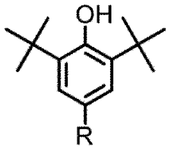
(A)

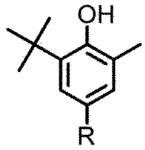
(B)

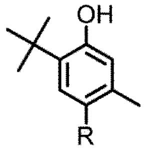
(C)

In Formulae (A) to (C) R represents a hydrogen atom or a substituent. R represents preferably a hydrogen atom, a halogen atom, an amino group which may have a substituent, an alkyl group which may have a substituent, an aryl group which may have a substituent, an alkoxy group which may have a substituent, an aryloxy group which may have a substituent, an alkylamino group which may have a substituent, an arylamino group which may have a substituent, an alkylsulfonyl group which may have a substituent, or an arylsulfonyl group which may have a substituent, and more preferably an amino group which may have a substituent, an alkyl group which may have a substituent, an aryl group which may have a substituent, an alkoxy group which may have a substituent, an aryloxy group which may have a substituent, an alkylamino group which may have a substituent, or an arylamino group which may have a substituent.

A composite anti-coloring agent in which a plurality of structures represented by Formulae (A) to (C) having an anti-coloring function are present in the same molecule is still more preferable. Specifically, a compound in which 2 to 4 structures represented by Formulae (A) to (C) having an anti-coloring function are present in the same molecule is preferable. Among these, the semi-hindered type represented by Formula (B) is more preferable from the viewpoint of colorability. Representative examples of a commercially available product of (A) include SUMILIZER BHT (manufactured by Sumitomo Chemical Co., Ltd.), IRGANOX 1010 and 1222 (manufactured by BASF), and ADEKA STAB AO-20, AO-50, and AO-60 (manufactured by Adeka Corporation). Representative examples of a commercially available product of (B) include SUMILIZER BBM-S (manufactured by Sumitomo Chemical Co., Ltd.), IRGANOX 245 (manufactured by BASF), and ADEKA STAB AO-80 (manufactured by Adeka Corporation). Representative examples of a commercially available product of (C) include ADEKA STAB AO-30 and AO-40 (manufactured by Adeka Corporation).

Examples of the phosphite compound and the thioether compound include compounds described in paragraphs 0213 and 0214 of WO2017/159910A and commercially available products.

In addition to the above-described representative examples, examples of a commercially available product of the anti-coloring agent include ADEKA STAB AO-50F, ADEKA STAB AO-60G, and ADEKA STAB AO-330 (manufactured by Adeka Corporation).

In addition, examples of the anti-coloring agent which can be used include:

N-oxide compounds such as 5,5-dimethyl-1-pyrroline N-oxide, 4-methylmorpholine N-oxide, pyridine N-oxide, 4-nitropyridine N-oxide, 3-hydroxypyridine N-oxide, picolinic acid N-oxide, nicotinic acid N-oxide, and isonicotinic acid N-oxide;

piperidine-1-oxyl free-radical compounds such as piperidine-1-oxyl free radical, 2,2,6,6-tetramethylpiperidine-1-oxyl free radical, 4-oxo-2,2,6,6-tetramethylpiperidine-1-oxyl free radical, 4-hydroxy-2,2,6,6-tetramethylpiperidine-1-oxyl free radical, 4-acetamide-2,2,6,6-tetramethylpiperidine-1-oxyl free radical, 4-maleimide-2,2,6,6-tetramethylpiperidine-1-oxyl free radical, and 4-phosphonooxy-2,2,6,6-tetramethylpiperidine-1-oxyl free radical;

pyrrolidine 1-oxyl free-radical compounds such as 3-carboxy proxyl free radical and 3-carboxy-2,2,5,5-tetramethylpyrrolidine 1-oxyl free radical;

N-nitrosophenylhydroxylamines such as N-nitrosophenylhydroxylamine cerous salt and N-nitrosophenylhydroxylamine aluminum salt;

diazonium compounds such as 4-diazophenyldimethylamine hydrogensulfate, 4-diazodiphenylamine tetrafluoroborate, and 3-methoxy-4-diazodiphenylamine hexafluorophosphate;

cationic dyes;

nitro group-containing compounds; and

transition metal compounds such as $FeCl_3$ and CuCh. The details can be found in the description of compounds described in paragraphs "0211' to "0223" of JP2015-034961A, the content of which is incorporated herein by reference.

From the viewpoints of colorability and solvent resistance, the content of the anti-coloring agent in the total solid content of the composition is preferably 0.01 to 20 mass%, more preferably 0.1 to 15 mass%, and still more preferably 0.3 to 5 mass%. As the anti-coloring agent, one kind may be used alone, or two or more kinds may be used in combination. In a case where two or more kinds thereof are used in combination, it is preferable that the total content of the two or more kinds thereof is within the above-described range.

<Ultraviolet absorber>

The composition according to the embodiment of the present invention may contain an ultraviolet absorber. Examples of the ultraviolet absorber, include a conjugated diene compound, an aminobutadiene compound, a methyldibenzoyl compound, a coumarin compound, a salicylate compound, a benzophenone compound, a benzotriazole compound, an acrylonitrile compound, and a hydroxyphenyltriazine compound. The details of the ultraviolet absorber can be found in paragraphs "0052" to "0072" of JP2012-208374A and paragraphs "0317" to "0334" of JP2013-068814A, the contents of which are incorporated herein by reference. Examples of a commercially available product of the conjugated diene compound include UV-503 (manufactured by Daito Chemical Co., Ltd.). In addition, as the benzotriazole compound, MYUA series (manufactured by Miyoshi Oil&Fat Co., Ltd.; The Chemical Daily, February 1, 2016) may be used.

From the viewpoints of a pattern shape and solvent resistance, the content of the ultraviolet absorber in the total solid content of the composition is preferably 0.1 to 10 mass%, more preferably 0.1 to 7 mass%, still more preferably 0.1 to 5 mass%, and still more preferably 0.1 to 3 mass%. As the ultraviolet absorber, one kind may be used alone, or two or more kinds may be used in combination. In a case where two or more kinds thereof are used in combination, it is preferable that the total content of the two or more kinds thereof is within the above-described range.

<Adhesive>

The composition according to the embodiment of the present invention may contain an adhesive. As the adhesive, well-known adhesives can be used without any particular limitation. Examples of the adhesive include a silane coupling agent.

In this specification, the silane coupling agent refers to a silane compound having a functional group other than a hydrolyzable group. In addition, the hydrolyzable group refers to a substituent directly linked to a silicon atom and capable of forming a siloxane bond due to at least one of a hydrolysis reaction or a condensation reaction. Examples of the hydrolyzable group include a halogen atom, an alkoxy group, and an acyloxy group. Among these, an alkoxy group is preferable. That is, it is preferable that the silane coupling agent is a compound having an alkoxysilyl group. Examples of the functional group other than a hydrolyzable group include a vinyl group, a (meth)allyl group, a (meth)acryloyl group, a mercapto group, an epoxy group, an oxetanyl group, an amino group, an ureide group, a sulfide group, an isocyanate group, and a phenyl group. Among these, an amino group, a (meth)acryloyl group, or an epoxy group is preferable. Specific examples of the silane coupling agent include N-β-aminoethyl-γ-aminopropyl methyldimethoxysilane (trade name: KBM-602, manufactured by Shin-Etsu Chemical Co., Ltd.), N-β-aminoethyl-γ-aminopropyl trimethoxysilane (trade name: KBM-603, manufactured by Shin-Etsu Chemical Co., Ltd.), N-β-aminoethyl-γ-aminopropyl triethoxysilane (trade name: KBE-602, manufactured by Shin-Etsu Chemical Co., Ltd.), γ-aminopropyl trimethoxysilane (trade name: KBM-903, manufactured by Shin-Etsu Chemical Co., Ltd.), γ-aminopropyl triethoxysilane (trade name: KBE-903, manufactured by Shin-Etsu Chemical Co., Ltd.), 3-methacryloxypropyl methyldimethoxysilane (trade name: KBM-502, manufactured by Shin-Etsu Chemical Co., Ltd.), and 3-methacryloxypropyl trimethoxysilane (trade name: KBM-503, manufactured by Shin-Etsu Chemical Co., Ltd.). In addition, specific examples of the silane coupling agent include a compound described in paragraphs "0018" to "0036" of JP2009-288703A and a compound described in paragraphs "0056" to "0066" of JP2009-242604A, the contents of which are incorporated herein by reference.

The content of the adhesive in the total solid content of the composition is preferably 0.01 to 10 mass%, more preferably 0.1 to 7 mass%, and still more preferably 1 to 5 mass%. As the adhesive, one kind may be used alone, or two or more kinds may be used in combination. In a case where two or more kinds thereof are used in combination, it is preferable that the total content of the two or more kinds thereof is within the above-described range.

<Polymerization inhibitor>

The composition according to the embodiment of the present invention may contain a polymerization inhibitor. Examples of the polymerization inhibitor include hydroquinone, p-methoxyphenol, di-tert-butyl-p-cresol, pyrogallol, tert-butyl catechol, 1,4-benzoquinone, 4,4'-thiobis(3-methyl-6-tert-butylphenol), 2,2'-methylenebis(4-methyl-6-t-butylphenol), and an N-nitrosophenylhydroxylamine salt (an ammonium salt, a cerous salt, or the like). Among these, p-methoxyphenol is preferable. The content of the polymerization inhibitor in the total solid content of the composition is preferably 0.0001 to 5 mass%.

<Chain transfer agent>

The composition according to the embodiment of the present invention may contain a chain transfer agent. As the chain transfer agent, the compound described in paragraph 0225 of WO2017/159190A can be used.

The content of the chain transfer agent in the total solid content of the composition is preferably 0.2 to 5.0 mass% and more preferably 0.4 to 3.0 mass%. In addition, the content of the chain transfer agent is preferably 1 to 40 parts by mass, and more preferably 2 to 20 parts by mass with respect to 100 parts by mass of the polymerizable monomer. As the chain transfer agent, one kind may be used alone, or two or more kinds may be used in combination. In a case where two or more kinds thereof are used in combination, it is preferable that the total content of the two or more kinds thereof is within the above-described range.

<Sensitizer>

The composition according to the embodiment of the present invention may contain a sensitizer in order to improve the radical generation efficiency of the photopolymerization initiator and to increase a photosensitive wavelength. It is preferable that the sensitizer sensitizes the photopolymerization initiator using an electron migration mechanism or an energy-transfer mechanism. Examples of the sensitizer include a compound having an absorption in a wavelength in a range of 300 to 450 nm. With regard to the sensitizer, the details can be found in the description of paragraphs "0231" to "0253" of JP2010-106268A (corresponding to paragraphs "0256" to "0273" of US2011/0124824A), the content of which is incorporated herein by reference.

The content of the sensitizer in the total solid content of the composition is preferably 0.1 to 20 mass% and more preferably 0.5 to 15 mass%. As the sensitizer, one kind may be used alone, or two or more kinds may be used in combination. In a case where two or more kinds thereof are used in combination, it is preferable that the total content of the two or more kinds thereof is within the above-described range.

<Co-sensitizer>

It is also preferable that the composition according to the embodiment of the present invention further contains a co-sensitizer. The co-sensitizer has a function of further improving sensitivity of the photopolymerization initiator or the sensitizer to radioactive ray, or of suppressing inhibition of polymerization of the polymerizable monomer due to oxygen. With regard to the co-sensitizer, the details can be found in the description of paragraphs "0254" to "0257" of JP2010-106268A (corresponding to paragraphs "0277" to "0279" of US2011/0124824A), the content of which is incorporated herein by reference.

The content of the co-sensitizer in the total solid content of the composition is preferably 0.1 to 30 mass%, more preferably 1 to 25 mass%, and still more preferably 1.5 to 20 mass%. As the co-sensitizer, one kind may be used alone, or two or more kinds may be used in combination. In a case where two or more kinds thereof are used in combination, it is preferable that the total content of the two or more kinds thereof is within the above-described range.

<Surfactant>

The composition according to the embodiment of the present invention may contain various surfactants from the viewpoint of further improving suitability for application. As the surfactants, various surfactants such as a fluorine-based surfactant, a nonionic surfactant, a cationic surfactant, an anionic surfactant, or a silicone-based surfactant can be used.

By the composition according to the embodiment of the present invention containing a fluorine-based surfactant, liquid characteristics (for example, fluidity) of a coating liquid prepared from the coloring composition are further improved, and the uniformity in coating thickness and liquid saving properties can be further improved. That is, in a case where a film is formed of a coating liquid prepared using the composition including a fluorine-based surfactant, the interfacial tension between a coated surface and the coating liquid decreases, the wettability on the coated surface is improved, and the suitability for application on the coated surface is improved. Therefore, a film having a uniform thickness with reduced unevenness in thickness can be formed more suitably.

The fluorine content in the fluorine-based surfactant is preferably 3 to 40 mass%, more preferably 5 to 30 mass%, and still more preferably 7 to 25 mass%. The fluorine-based surfactant in which the fluorine content is in the

above-described range is effective from the viewpoints of the uniformity in the thickness of the coating film and liquid saving properties, and the solubility thereof in the composition is also excellent.

Examples of the fluorine-based surfactant include a surfactant described in paragraphs "0060" to "0064" of JP2014-041318A (paragraphs "0060" to "0064" of corresponding WO2014/017669A) and a surfactant described in paragraphs "0117" to "0132" of JP2011-132503A, the contents of which are incorporated herein by reference. Examples of a commercially available product of the fluorine-based surfactant include: MEGAFACE F171, F172, F173, F176, F177, F141, F142, F143, F144, R30, F437, F475, F479, F482, F554, F780, EXP, and MFS-330 (all of which are manufactured by DIC Corporation); FLUORAD FC430, FC431, and FC171 (all of which are manufactured by Sumitomo 3M Ltd.); SURFLON S-382, SC-101, SC-103, SC-104, SC-105, SC-1068, SC-381, SC-383, S-393, and KH-40 (all of which are manufactured by Asahi Glass Co., Ltd.); POLYFOX PF636, PF656, PF6320, PF6520, and PF7002 (all of which are manufactured by OMNOVA Solutions Inc.); and FTERGENT FTX218 (manufactured by NEOS COMPANY LIMITED).

In addition, as the fluorine-based surfactant, an acrylic compound in which, in a case where heat is applied to a molecular structure which has a functional group having a fluorine atom, the functional group having a fluorine atom is cut and a fluorine atom is volatilized can also be suitably used. Examples of such a fluorine-based surfactant include MEGAFACE DS series manufactured by DIC Corporation (The Chemical Daily (February 22, 2016) and Nikkei Business Daily (February 23, 2016)), for example, MEGAFACE DS-21.

In addition, as the fluorine-based surfactant, a polymer of a fluorine atom-containing vinyl ether compound having a fluorinated alkyl group or a fluorinated alkylene ether group, and a hydrophilic vinyl ether compound can be preferably used. Examples of such a fluorine-based surfactant include fluorine-based surfactants described in JP2016-216602A, the contents of which are incorporated herein by reference.

As the fluorine-based surfactant, a block polymer can also be used. As the fluorine-based surfactant, a fluorine-containing polymer compound can be preferably used, the fluorine-containing polymer compound including: a repeating unit derived from a (meth)acrylate compound having a fluorine atom; and a repeating unit derived from a (meth)acrylate compound having 2 or more (preferably 5 or more) alkyleneoxy groups (preferably an ethyleneoxy group and a propyleneoxy group). In addition, fluorine-containing surfactants described in paragraph "0016" to "0037" of JP2010-032698A, or the following compounds are also exemplified as the fluorine-based surfactant used in the present invention.

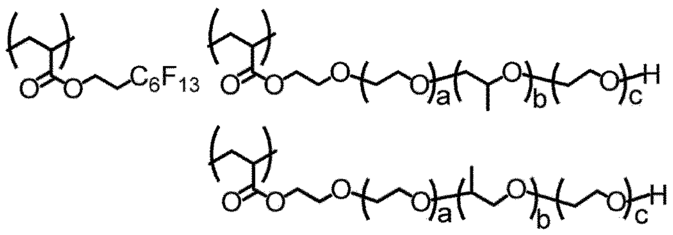

a+c=14
b=17

62% 38%

A weight-average molecular weight of the above-described compounds is preferably 3,000 to 50,000, and is, for example, 14,000. In the compound, "%" representing the proportion of a repeating unit is mol%.

In addition, as the fluorine-based surfactant, a fluorine-containing polymer having an ethylenically unsaturated bond-containing group at a side chain can also be used. Specific examples include a compound described in paragraphs "0050" to "0090" and paragraphs "0289" to "0295" of JP2010-164965A, for example, MEGAFACE RS-101, RS-102, RS-718K, and RS-72-K manufactured by DIC Corporation. In addition, as the fluorine-based surfactant, a compound described in paragraphs "0015" to "0158" of JP2015-117327A can also be used.

Examples of the silicone-based surfactant include compounds described in paragraph 0243 of WO2017/159190A.

The content of the surfactant in the total solid content of the composition is preferably 0.001 to 2.0 mass% and more preferably 0.005 to 1.0 mass%. As the surfactant, one kind may be used alone, or two or more kinds may be used in combination. In a case where two or more kinds thereof are used in combination, it is preferable that the total content of the two or more kinds thereof is within the above-described range.

<Other additives>

Further, a well-known additive such as a plasticizer or a sensitization agent may be added to the composition in order to improve physical properties of the film. Examples of the plasticizer include dioctyl phthalate, didodecyl phthalate, triethylene glycol dicaprylate, dimethyl glycol phthalate, tricresyl phosphate, dioctyl adipate, dibutyl sebacate, and triacetyl glycerin. A content of the plasticizer is preferably 10 mass% or less with respect to the total mass of all resins and polymerizable monomers included in the composition.

<Storage container>

A storage container of the composition according to the embodiment of the present invention is not particularly limited, and a well-known storage container can be used. In addition, as the storage container, in order to suppress infiltration of impurities into the raw materials or the composition, a multilayer bottle in which a container interior wall having a six-layer structure is formed of six kinds of resins or a bottle in which a container interior wall having a seven-layer structure is formed of six kinds of resins is preferably used. Examples of the container include a container described in JP2015-123351A. In addition, for the purpose of preventing metal elution from the container interior wall, improving storage stability of the composition, suppressing the alteration of components, and the like, it is also preferable that the container interior wall is formed of glass, stainless steel, or the like.

<Method of Preparing Composition>

The composition according to the embodiment of the present invention can be prepared by mixing the above-described components with each other. During the preparation of the composition, the respective components may be mixed with each other collectively, or may be mixed with each other sequentially after at least dissolved or dispersed in a solvent. In addition, during mixing, the order of addition or working conditions are not particularly limited.

In addition, it is preferable that a process of dispersing the particles is provided in order to prepare the composition. Examples of a mechanical force used for dispersing the particles in the process of dispersing the particles include compression, squeezing, impact, shearing, and cavitation. Specific examples of the process include a beads mill, a sand mill, a roll mill, a ball mill, a paint shaker, a Microfluidizer, a high-speed impeller, a sand grinder, a project mixer, high-pressure wet atomization, and ultrasonic dispersion. During the pulverization of the particles using a sand mill (beads mill), it is preferable that the process is performed under conditions for increasing the pulverization efficiency, for example, by using beads having a small size and increasing the filling rate of the beads. In addition, it is preferable that rough particles are removed by filtering, centrifugal separation, and the like after pulverization. In addition, as the process and the disperser for dispersing the particles, a process and a disperser described in "Complete Works of Dispersion Technology, Johokiko Co., Ltd., July 15, 2005", "Dispersion Technique focusing on Suspension (Solid/Liquid Dispersion) and Practical Industrial Application, Comprehensive Reference List, Publishing Department of Management Development Center, October 10, 1978", and paragraph "0022" JP2015-157893A can be suitably used. In addition, in the process of dispersing the particles, the particles may be miniaturized in a salt milling step. A material, a device, process conditions, and the like used in the salt milling step can be found in, for example, JP2015-194521A and JP2012-046629A.

During the preparation of the composition, it is preferable that the composition is filtered through a filter, for example, in order to remove foreign matter or to reduce defects. As the filter, any filter which is used in the related art for filtering or the like can be used without any particular limitation. Examples of a material of the filter include: a fluororesin such as polytetrafluoroethylene (PTFE); a polyamide resin such as nylon (for example, nylon-6 or nylon-6,6); and a polyolefin resin (including a polyolefin resin having a high density and an ultrahigh molecular weight) such as polyethylene or polypropylene (PP). Among these materials, polypropylene (including high-density polypropylene) or nylon is preferable.

The pore size of the filter is preferably 0.01 to 10.0 μm, more preferably 0.05 to 3.0 μm, and still more preferably about 0.1 to 2.0 μm. With regard to the pore size value of the filter, reference can be made to a nominal value of filter manufacturers. As the filter, various filters provided by Nihon Pall Corporation (DFA4201NIEY and the like), Advantec Toyo Kaisha., Ltd., Nihon Entegris G.K. (formerly Nippon Microlith Co., Ltd.), Kitz Microfilter Corporation, and the like can be used.

It is preferable that a fibrous filter material is used as the filter. Examples of the fibrous filter material include polypropylene fiber, nylon fiber, and glass fiber. Examples of a commercially available product include SBP type series (SBP008 and the like), TPR type series (TPR002, TPR005, and the like), or SHPX type series (SHPX003 and the like), all manufactured by Roki Techno Co., Ltd.

In a case where a filter is used, a combination of different filters (for example, a first filter and a second filter) may be used. At this time, the filtering using each of the filters may be performed once, or twice or more. In addition, a combination of filters having different pore sizes in the above-described range may be used. In addition, the filtering using the first filter may be performed only on the dispersion liquid, and the filtering using the second filter may be performed on a mixture of the dispersion liquid and other components.

(Film)

A first aspect of the film according to the embodiment of the present invention is a film consisting of the composition according to the embodiment of the present invention. In the film of the first aspect, the maximum value of the transmittance of the film to light having a wavelength in a range of 400 to 700 nm is preferably 80% or less, more

preferably 70% or less, still more preferably 60% or less, and particularly preferably 50% or less. The lower limit of the above-described maximum value of the light transmittance is preferably 1% or more, more preferably 5% or more, and still more preferably 10% or more.

In addition, a second aspect of the film according to the embodiment of the present invention is a film including white particles having a refractive index of 2.0 or more and an average primary particle diameter of 200 nm or less and a film-forming component including at least one selected from a resin and a polymerizable monomer or a cured substance of the film-forming component, in which the film-forming component includes two or more kinds of resins, or includes one or more kinds of resins and one or more kinds of polymerizable monomers, at least one of the resin is a resin A which contains a constitutional unit A having a formula weight of 1,000 or more and including a constitutional unit GF and a constitutional unit B having an acidic group, and satisfies at least one of the above-described requirement 1 or requirement 2, and the constitutional unit GF is selected from the group consisting of a constitutional unit represented by Formula (1-1) described above and a constitutional unit represented by Formula (1-2) described above.

As the particles and the film-forming component included in the film of the second aspect, the materials described in the above-described sections of the composition according to the embodiment of the present invention can be mentioned, and preferred ranges thereof are also the same.

In addition, the film of the second aspect may further include a material other than the particles and the film-forming component included in the above-described composition according to the embodiment of the present invention. Preferred aspects of these materials are as described above.

From the viewpoint of light scattering properties, it is preferable that a phase-separated structure between a first phase including the above-described white particles and a second phase with a lower content of the above-described white particles than the first phase is formed in the above-described film.

In the film of the second aspect, the above-described phase-separated structure is preferably a sea-island structure or a co-continuous phase structure. By forming these phase-separated structures, light can be effectively scattered between the first phase and the second phase, and particularly excellent light scattering properties can be easily obtained. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence.

In the film of the second aspect, the maximum value of the transmittance of the film to light having a wavelength in a range of 400 to 700 nm is preferably 80% or less, more preferably 70% or less, still more preferably 60% or less, and particularly preferably 50% or less. The lower limit of the above-described maximum value of the light transmittance is preferably 1% or more, more preferably 5% or more, and still more preferably 10% or more.

In the films of the first aspect and the second aspect according to the present invention (hereinafter, also simply referred to as the film according to the embodiment of the present invention), the maximum value of the transmittance of the film to light at 400 to 1000 nm is preferably 80% or less, more preferably 60% or less, and still more preferably 50% or less. The lower limit of the above-described maximum value of the light transmittance is preferably 1% or more, more preferably 5% or more, and still more preferably 10% or more.

The haze of the film according to the embodiment of the present invention based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more. The haze of the film is a value measured according to the method in Examples described later.

The value of L* of the film according to the embodiment of the present invention in the L*a*b* color system of CIE 1976 is preferably 35 to 100. The value of L* is preferably 40 or more, more preferably 50 or more, and still more preferably 60 or more. According to this aspect, a film having excellent whiteness can be formed. In addition, the value of L* is preferably 95 or less, more preferably 90 or less, and still more preferably 85 or less. According to this aspect, a film having appropriate visible light transparency can be formed.

In addition, the value of a* is preferably -15 or more, more preferably -10 or more, and still more preferably -5 or more. In addition, the value of a* is preferably 10 or less, more preferably 5 or less, and still more preferably 0 or less. According to this aspect, a film having excellent whiteness can be formed.

In addition, the value of b* is preferably -35 or more, more preferably -30 or more, and still more preferably -25 or more. In addition, the value of b* is preferably 20 or less, more preferably 10 or less, and still more preferably 0 or less. According to this aspect, a film having excellent whiteness can be formed.

The thickness of the film according to the embodiment of the present invention is preferably 2 to 40 μm. The upper limit of the film thickness is preferably 30 μm or less, more preferably 20 μm or less, and still more preferably 15 μm or less. The lower limit of the film thickness is preferably 3 μm or more, more preferably 4 μm or more, and still more preferably 5 μm or more. In a case where the film thickness is within the above-described range, an effect of improving a device optical sensitivity by reducing the thickness of a sensor and suppressing crosstalk can be expected.

<Method of Forming Film>

The film according to the embodiment of the present invention can be formed through a step of applying the composition according to the embodiment of the present invention to a support. Examples of the support include a substrate formed of a material such as silicon, non-alkali glass, soda glass, PYREX (registered trade name) glass, or quartz glass. For example, an organic film or an inorganic film may be formed on the substrate. Examples of a material of the organic film include a resin. In addition, as the support, a substrate formed of the resin can also be used. In addition, a charge coupled device (CCD), a complementary metal-oxide semiconductor (CMOS), a transparent conductive film, or the like may be formed on the support. In addition, a black matrix that separates pixels from each other may be formed on the support. In addition, optionally, an undercoat layer may be provided on the support to improve adhesiveness with a layer above the support, to prevent diffusion of materials, or to make a surface of the substrate flat. In addition, in a case where a glass substrate is used as the support, it is preferable that an inorganic film is formed on the glass substrate or the glass substrate may be dealkalized to be used.

As a method of applying the composition to the support, a well-known method can be used. Examples of the well-known method include: a drop casting method; a slit coating method; a spray coating method; a roll coating method; a spin coating method; a cast coating method; a slit and spin method; a pre-wetting method (for example, a method described in JP2009-145395A); various printing methods including jet printing such as an ink jet method (for example, an on-demand method, a piezoelectric method, or a thermal method) or a nozzle jet method, flexographic printing, screen printing, gravure printing, reverse offset printing, and metal mask printing; a transfer method using a mold or the like; and a nanoimprinting method. The application method using an ink jet method is not particularly limited, and examples thereof include a method (in particular, pp. 115 to 133) described in "Extension of Use of Ink Jet - Infinite Possibilities in Patent-" (February, 2005, S.B. Research Co., Ltd.) and methods described in JP2003-262716A, JP2003-185831A, JP2003-261827A, JP2012-126830A, and JP2006-169325A. From the viewpoint of suitability for application, the application using a spin coating method is preferably spin coating at 300 to 6000 rpm and more preferably spin coating at 400 to 3000 rpm. In addition, the temperature of the support during spin coating is preferably 10°C to 100°C and more preferably 20°C to 70°C. In a case where the temperature of the support is in the above-described range, a film having excellent application uniformity is likely to be formed. In a case where the drop casting method is used, it is preferable that a drop range of the composition in which a photoresist is used as a partition wall is formed on the support such that a film having a predetermined uniform film thickness can be obtained. A desired film thickness can be obtained by controlling the drop amount and concentration of solid contents of the composition and the area of the drop range.

The composition layer formed on the support may be dried (pre-baked). For example, it is preferable that the film is dried under pre-baking conditions of a temperature of 60°C to 150°C and 30 seconds to 15 minutes.

The method of forming the film according to the embodiment of the present invention may further include a step of forming a pattern. Examples of a pattern forming method include a pattern forming method using a photolithography method and a pattern forming method using a dry etching method. In a case where the film according to the embodiment of the present invention is used as a flat film, the step of forming a pattern is not necessarily performed. Hereinafter, the step of forming a pattern will be described in detail.

[Case where Pattern is Formed using Photolithography Method]

It is preferable that the pattern forming method using a photolithography method includes: a step (exposure step) of exposing the composition layer, which is formed by applying the composition according to the embodiment of the present invention, in a patterned manner; and a step (development step) of forming a pattern by removing a non-exposed portion of the composition layer for development. Optionally, the pattern forming method may further include a step (post-baking step) of baking the developed pattern. Hereinafter, the respective steps will be described.

-Exposure step-

In the exposure step, the composition layer is exposed in a patterned manner. For example, the composition layer can be exposed in a pattern shape using an exposure device such as a stepper through a mask having a predetermined mask pattern. As a result, an exposed portion can be cured. Examples of the radiation (light) which can be used during the exposure include g-rays and i-rays. In addition, light (preferably light having a wavelength of 180 to 300 nm) having a wavelength of 300 nm or less can also be used. Examples of the light having a wavelength of 300 nm or less include KrF-rays (wavelength: 248 nm) and ArF-rays (wavelength: 193 nm), and KrF-rays (wavelength: 248 nm) are preferable.

In addition, during the exposure, light may be continuously radiated for the exposure, or may be radiated in the form of a pulse for the exposure (pulse exposure). The pulse exposure refers to an exposing method in which light irradiation and resting are repeatedly performed in a short cycle (for example, millisecond-level or less). In a case of the

pulse exposure, the pulse width is preferably 100 nanoseconds (ns) or less, more preferably 50 nanoseconds or less, and still more preferably 30 nanoseconds or less. The lower limit of the pulse width is not particularly limited, and may be 1 femtosecond (fs) or more or 10 femtoseconds or more. The frequency is preferably 1 kHz or more, more preferably 2 kHz or more, and still more preferably 4 kHz or more. The upper limit of the frequency is preferably 50 kHz or less, more preferably 20 kHz or less, and still more preferably 10 kHz or less. The maximum instantaneous illuminance is preferably 50,000,000 $W/m^2$ or more, more preferably 100,000,000 $W/m^2$ or more, and still more preferably 200,000,000 $W/m^2$ or more. In addition, the upper limit of the maximum instantaneous illuminance is preferably 1,000,000,000 $W/m^2$ or less, more preferably 800,000,000 $W/m^2$ or less, and still more preferably 500,000,000 $W/m^2$ or less. The pulse width refers to a time during which light is irradiated in a pulse period. The frequency is the number of pulse periods per second. The maximum instantaneous illuminance is average illuminance within the time during which light is radiated in the pulse period. The pulse period is a period in which irradiation with light and resting are one cycle in the pulse exposure.

In addition, for example, the irradiation amount (exposure amount) is preferably 0.03 to 2.5 $J/cm^2$, more preferably 0.05 to 1.0 $J/cm^2$, and most preferably 0.08 to 0.5 $J/cm^2$. The oxygen concentration in a case of the exposure can be appropriately selected. For example, the exposure may be performed in air, in a low-oxygen atmosphere having an oxygen concentration of 19 vol% or less (for example, 15 vol%, 5 vol%, or substantially oxygen-free), or in a high-oxygen atmosphere having an oxygen concentration of more than 21 vol% (for example, 22 vol%, 30 vol%, or 50 vol%). In addition, the exposure illuminance can be appropriately set, and is preferably selected in a range of 1000 to 100,000 $W/m^2$. Conditions of the oxygen concentration and conditions of the exposure illuminance may be appropriately combined. For example, conditions are oxygen concentration: 10 vol% and illuminance: 10,000 $W/m^2$, or oxygen concentration: 35 vol% and illuminance: 20,000 $W/m^2$.

-Development step-

Next, a pattern is formed by removing a non-exposed portion of the exposed composition layer by development. The non-exposed portion of the composition layer can be removed by development using a developer. As a result, a non-exposed portion of the composition layer in the exposure step is eluted into the developer, and only the photocured portion remains on the support. For example, the temperature of the developer is preferably 20°C to 30°C. The development time is preferably 20 to 180 seconds. In addition, in order to further improve residues removing properties, a step of shaking the developer off per 60 seconds and supplying a new developer may be repeated multiple times.

Examples of the developer include an organic solvent and an alkali developer, and an alkali developer is preferably used. As the alkali developer, an alkaline aqueous solution (alkali developer) in which an alkaline agent is diluted with pure water is preferable. Examples of the alkaline agent include: organic alkaline compounds such as ammonia, ethylamine, diethylamine, dimethylethanolamine, diglycolamine, diethanolamine, hydroxyamine, ethylenediamine, tetramethylammonium hydroxide, tetraethylammonium hydroxide, tetrapropylammonium hydroxide, tetrabutylammonium hydroxide, ethyltrimethylammonium hydroxide, benzyltrimethylammonium hydroxide, dimethyl bis(2-hydroxyethyl)ammonium hydroxide, choline, pyrrole, piperidine, and 1,8-diazabicyclo[5.4.0]-7-undecene; and inorganic alkaline compounds such as sodium hydroxide, potassium hydroxide, sodium carbonate, sodium hydrogen carbonate, sodium silicate, and sodium metasilicate. In consideration of environmental aspects and safety aspects, the alkaline agent is preferably a compound having a high molecular weight. A concentration of the alkaline agent in the alkaline aqueous solution is preferably 0.001 to 10 mass% and more preferably 0.01 to 1 mass%. In addition, the developer may further contain a surfactant. Examples of the surfactant include the surfactants described above. Among these, a nonionic surfactant is preferable. From the viewpoint of easiness of transport, storage, and the like, the developer may be obtained by temporarily preparing a concentrated solution and diluting the concentrated solution to a necessary concentration during use. The dilution factor is not particularly limited and, for example, can be set to be in a range of 1.5 to 100 times. In a case where the alkaline aqueous solution is used as a developer, it is preferable that the layer is washed (rinsed) with pure water after development. In addition, it is preferable that the rinsing is performed by supplying a rinsing liquid to the composition layer after development while rotating the support on which the composition layer after development is formed. In addition, it is preferable that the rinsing is performed by moving a nozzle discharging the rinsing liquid from a center of the support to a peripheral edge of the support. In this case, in the movement of the nozzle from the center of the support to the peripheral edge of the support, the nozzle may be moved while gradually decreasing the moving speed of the nozzle. By performing rinsing in this manner, in-plane variation of rinsing can be suppressed. In addition, the same effect can be obtained by gradually decreasing the rotating speed of the support while moving the nozzle from the center of the support to the peripheral edge of the support.

After the development, it is preferable to perform an additional exposure treatment or a heating treatment (post-baking) after carrying out drying. The additional exposure treatment or the post-baking is a curing treatment after development in order to complete curing. The heating temperature in the post-baking is preferably, for example, 100°C to 260°C. The lower limit of the heating temperature is preferably 120°C or higher and more preferably 160°C or higher. The upper limit of the heating temperature is preferably 240°C or lower and more preferably 220°C or lower. The film

after development is post-baked continuously or batchwise using a heating unit such as a hot plate, a convection oven (hot air circulation dryer), and a high-frequency heater under the above-described conditions. In a case of performing the additional exposure treatment, light used for the exposure is preferably light having a wavelength of 400 nm or less. In addition, the additional exposure treatment may be carried out by the method described in KR10-2017-0122130A.

[Case where Pattern is Formed using Dry Etching Method]

The formation of a pattern using a dry etching method can be performed using a method including: applying the composition according to the embodiment of the present invention to a support to form a composition layer; curing the composition layer to form a cured composition layer; forming a patterned resist layer on the cured composition layer; and dry-etching the cured composition layer with etching gas by using the patterned resist layer as a mask. The details of the pattern formation using the dry etching method can be found in paragraphs "0010" to "0067" of JP2013-064993A, the content of which is incorporated herein by reference.

(Optical Sensor)

An optical sensor according to the embodiment of the present invention includes the film according to the embodiment of the present invention. Examples of the type of the optical sensor include an ambient light sensor and an illuminance sensor, and the optical sensor is preferably used as an ambient light sensor. The ambient light sensor is a sensor which detects hue of ambient light.

It is also preferable that the optical sensor according to the embodiment of the present invention has an optical filter having at least one pixel selected from a colored pixel or a pixel of an infrared transmitting filter, in addition to the film according to the embodiment of the present invention. Examples of the colored pixel include a red pixel, a blue pixel, a green pixel, a yellow pixel, a cyan pixel, and a magenta pixel. In addition, it is preferable that the film according to the embodiment of the present invention is provided closer to a light incident side than the above-described optical filter. By providing the film according to the embodiment of the present invention closer to the light incident side than the optical filter, angle dependence can be further reduced for each pixel.

An embodiment of the optical sensor is shown with reference to the drawings. An optical sensor 1 shown in Fig. 1 is provided with an optical filter 110 having pixels 111 to 114 on a photoelectric conversion element 101. A film 121 according to the embodiment of the present invention is formed on the optical filter 110. As an example of the pixels 111 to 114 constituting the optical filter 110, a combination in which the pixel 111 is a red pixel, the pixel 112 is a blue pixel, the pixel 113 is a green pixel, and the pixel 114 is a pixel of an infrared transmitting filter can be mentioned. In the optical sensor 1 shown in Fig. 1, the optical filter 110 having four types of pixels (pixels 111 to 114) is used, but the types of pixels may be one to three types or may be five or more types. The types can be appropriately selected according to the application. In addition, a planarizing layer may be interposed between the photoelectric conversion element 101 and the optical filter 110, or between the optical filter 110 and the film 121 according to the embodiment of the present invention.

Fig. 2 shows another embodiment of the optical sensor. An optical sensor 2 shown in Fig. 2 is provided with an optical filter 110 having pixels 111 to 114 on a photoelectric conversion element 101. The optical filter 110 has the same configuration as that of the above-described embodiment. A member in which a film 122 according to the embodiment of the present invention is formed on a surface of a transparent support 130 is disposed on the optical filter 110. Examples of the transparent support 130 include a glass substrate and a resin substrate. In the optical sensor 2 shown in Fig. 2, the member in which the film 122 according to the embodiment of the present invention is formed on the surface of the transparent support 130 is disposed on the optical filter 110 at predetermined intervals, but the optical filter 110 and the member in which the film 122 according to the embodiment of the present invention is formed on the surface of the transparent support 130 may be in contact with each other. In addition, in the optical sensor 2 shown in Fig. 2, the film 122 according to the embodiment of the present invention is formed on only one surface of the transparent support 130, but the film 122 according to the embodiment of the present invention may be formed on both surfaces of the transparent support 130. In addition, in the optical sensor 2 shown in Fig. 2, the film 122 according to the embodiment of the present invention is formed on the surface of the transparent support 130 on the optical filter 110 side, but the film 122 according to the embodiment of the present invention may be formed on the surface of the transparent support 130 opposite to the optical filter 110 side. In addition, a planarizing layer may be interposed between the photoelectric conversion element 101 and the optical filter 110, or between the film 122 according to the embodiment of the present invention and the transparent support 130.

## Examples

Hereinafter, the present invention will be described in more detail using Examples, but the present invention

is not limited to these examples. Unless specified otherwise, "part(s)" and "%" represent "part(s) by mass" and "mass%".

<Measurement of average primary particle diameter of particles>

The primary particle diameter of the particles was obtained by observing particles with a transmission electron microscope (TEM) and observing a portion (primary particle) where the particles did not aggregate. Specifically, a particle size distribution was obtained by photographing a transmission electron micrograph of primary particles using a transmission microscope and measuring a particle size distribution with an image processing device using the micrograph. The average primary particle diameter of the particles refers to the number average particle size calculated from the particle size distribution. An electron microscope (H-7000, manufactured by Hitachi, Ltd.) was used as the transmission electron microscope, and a LUZEX AP (manufactured by Nireco Corporation) was used as the image processing device.

<Measurement of refractive index of particles>

A dispersion liquid was prepared using the particles, a resin (dispersant) having a known refractive index, and propylene glycol monomethyl ether acetate. Next, the prepared dispersion liquid and a resin having a known refractive index were mixed with each other to prepare coating liquids in which the concentrations of the particles in the total solid content of the coating liquids was 10 mass%, 20 mass%, 30 mass%, and 40 mass%. Using each of the coating liquids, a film having a thickness of 300 nm was formed on a silicon wafer, and the refractive index of the obtained film was measured by ellipsometry (LAMBDA ACE RE-3300, manufactured by SCREEN Holdings Co., Ltd.). Next, the concentration and refractive index of the particles were plotted on a graph to calculate the refractive index of the particles.

<Measurement of specific gravity of particles>

50 g of particles were put into a 100 mL volumetric flask. Subsequently, 100 mL of water was weighed using another 100 mL graduated cylinder. Thereafter, the weighed water was put into the volumetric flask to the extent that the particles were immersed, and then ultrasonic waves were applied to the volumetric flask to allow the particles and water to blend in. Next, additional water was added thereto until the marked line of the volumetric flask was reached, and the specific gravity was calculated as 50 g/(volume of water remaining in volumetric flask).

<Measurement of crystallization temperature of polymer>

A crystallization temperature (Tc) of a polymer was calculated by DSC measurement under the following measurement conditions. The crystallization temperature of the polymer was measured as a crystallization temperature of a macromonomer used in the synthesis of each resin. Approximately 5 mg of a polymer (macromonomer) to be measured was weighed, set in an aluminum pan for measurement, and attached to a differential scanning calorimeter (DSC, Q1000 type) manufactured by TA Instruments Japan. The measurement was carried out by raising the temperature from 25°C to 150°C at a rate of 10 °C/min, holding at 150°C for 5 minutes, and then cooling from 150°C to -30°C at a rate of 10 °C/min. The crystallization temperature was defined as a peak top temperature of an exothermic peak appearing on a DSC curve obtained by the above-described method. In Tables 1 and 2, a case where the exothermic peak indicating the crystallization was not observed by the above-described method was described as "-", and a case where the crystallization temperature exceeded 50°C was described as "> 50".

<Measurement of weight-average molecular weight of resin>

A weight-average molecular weight of the resin (dispersant and binder) was measured by gel permeation chromatography (GPC) using the following conditions.

Type of column: a column in which TOSOH TSK gel Super HZM-H, TOSOH TSK gel Super HZ4000, and TOSOH TSK gel Super HZ2000 were linked to each other Developing solvent: tetrahydrofuran
Column temperature: 40°C
Flow rate (sample injection volume): 1.0 $\mu$L (sample concentration: 0.1 mass%)
Device name: HLC-8220 GPC (manufactured by Tosoh Corporation)
Detector: refractive index (RI) detector
Calibration curve base resin: a polystyrene resin

<Measurement of acid value of resin>

The acid value indicates the mass of potassium hydroxide required to neutralize an acidic component per 1 g of solid content. A measurement sample was dissolved in a mixed solvent including tetrahydrofuran and water at a ratio (tetrahydrofuran/water) of 9/1, and the obtained solution was neutralized and titrated with a 0.1 mol/L sodium hydroxide aqueous solution at 25°C using a potentiometric titrator (trade name: AT-510, manufactured by Kyoto Electronics Manufacturing Co., Ltd.). An inflection point of a titration pH curve was set as a titration end point, and the acid value was calculated from the following expression.

$$A=56.11 \times Vs \times 0.5 \times f/w$$

A: acid value (mgKOH/g)
Vs: amount (mL) of the 0.1 mol/L sodium hydroxide aqueous solution used for the titration
f: titer of the 0.1 mol/L sodium hydroxide aqueous solution
w: mass (g) of the measurement sample (expressed in terms of solid contents)

<Measuring method of SP value>

In the present invention, a value according to the Okitsu method was used as the value of the solubility parameter (SP value). As documents describing the Okitsu method, Toshinao Okitsu, The Journal of The Adhesion Society of Japan, vol. 29, No. 5, 204-211 (1993) or SP Value, Fundamentals-Applications and Calculation Method (Yamamoto, JOHOKIKO, CO., LTD., 2005) was referred to.

<Synthesis Example 1: synthesis of macromonomer MM-1>

ε-caprolactone (319.1 g), δ-valerolactone (35.5), and 2-ethyl-1-hexanol (20.5 g) were charged into a three-neck flask, and the mixture was stirred while blowing nitrogen. Next, monobutyltin oxide (0.18 g) was added to the mixture, and the obtained mixture was heated to 90°C. After 7 hours, it was confirmed by $^1$H-nuclear magnetic resonance (NMR) that a signal derived from 2-ethyl-1-hexanol which is a raw material in the mixture had disappeared, and then the mixture was heated to 110°C. A polymerization reaction was continued at 110°C for 12 hours under nitrogen, then disappearance of signals derived from ε-caprolactone and δ-valerolactone was confirmed by $^1$H-NMR, and the temperature of the mixture was lowered to 80°C.

After replacing the inside of the flask with air, 2,6-di-t-butyl-4-methylphenol (0.10 g) was added to the mixture, and Karenz MOI (manufactured by SHOWA DENKO K.K., 2-isocyanatoethyl methacrylate) (24.9 g) was added dropwise to the obtained mixture over 30 minutes. After continuing the reaction in air for 1 hour, it was confirmed by $^1$H-NMR that a signal derived from 2-isocyanatoethyl methacrylate had disappeared. Propylene glycol monomethyl ether acetate (PGMEA) (400.0 g) was added to the mixture to obtain a macromonomer MM-1 solution (800 g) having a concentration of 50 mass%.

A structure (Formula (MM-1)) of the macromonomer MM-1 was confirmed by $^1$H-NMR. A ratio of the constitutional unit L1 and the constitutional unit L2 (ratio of p1 and p2 in Formula (MM-1)) was 90/10 (mass ratio) calculated from the charged weights of the ε-caprolactone and δ-valerolactone as raw materials. The number of repetitions (value of p1 + p2 in Formula (MM-1)) was 20 calculated from the number of moles of the ε-caprolactone, δ-valerolactone, and 2-ethyl-1-hexanol as raw materials. The repeating units are not limited to being linked in the order shown in the following structural formula to form a block for each repeating unit, and each repeating unit may be randomly linked. The weight-average molecular weight of the macromonomer MM-1 was 6,000, and the crystallization temperature thereof was 6°C.

<Synthesis Examples 2 to 14: synthesis of macromonomers MM-2 to MM-14>

Macromonomers MM-2 to 14 were obtained by the same procedure as in Synthesis Example 1 (method for synthesizing the macromonomer MM-1), except that the type of lactone compound (ε-caprolactone and δ-valerolactone) used in the synthesis of the macromonomer MM-1 and the charged amount thereof were changed as shown in Tables 1 and 2 so that the weight-average molecular weight and the number of repetitions were adjusted to desired values. Structure (Formulae (MM-2) to (MM-14)) of the macromonomers MM-2 to MM-14 were confirmed by $^1$H-NMR. Tables 1 and 2 show the ratio of the constitutional unit L1 and the constitutional unit L2, the number of repetitions, the weight-average molecular weight, and the crystallization temperature of each macromonomer.

<Synthesis Example 15: synthesis of macromonomer MM-15>

A macromonomers MM-15 was obtained by the same procedure as in Synthesis Example 6 (method for synthesizing the macromonomer MM-6), except that Karenz MOI (manufactured by SHOWA DENKO K.K., 2-isocyanatoethyl methacrylate) used in the synthesis of the macromonomer MM-6 was changed to Karenz AOI (manufactured by SHOWA DENKO K.K., 2-isocyanatoethyl acrylate) with the same number of moles. A structure (Formula (MM-15)) of the macromonomer MM-15 was confirmed by $^1$H-NMR. Table 2 shows the ratio of the constitutional unit L1 and the constitutional unit L2, the number of repetitions, the weight-average molecular weight, and the crystallization temperature.

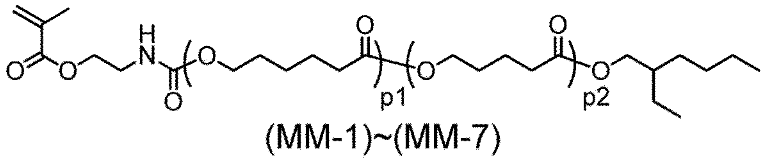

(MM-1)~(MM-7)

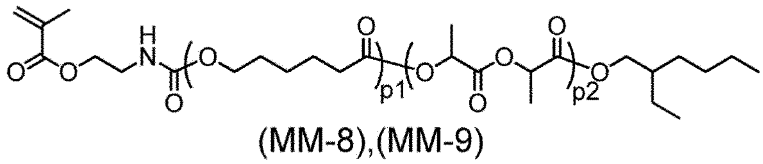

(MM-8),(MM-9)

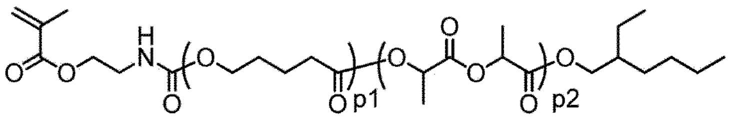

(MM-10)

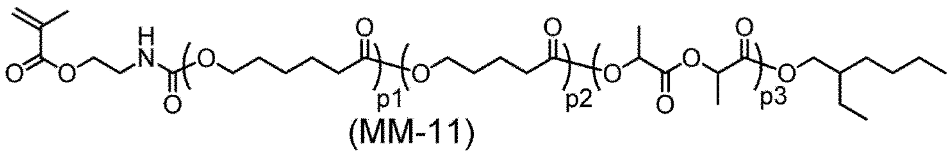

(MM-11)

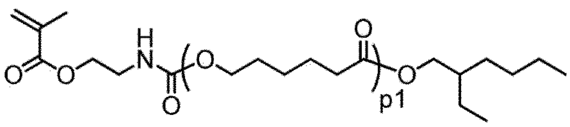

(MM-12)

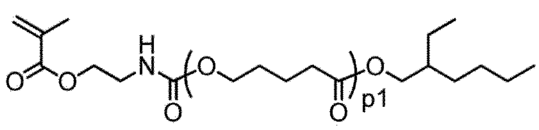

(MM-13)

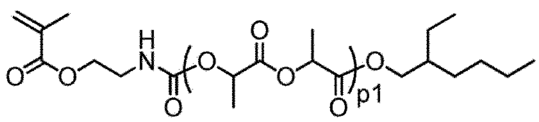

(MM-14)

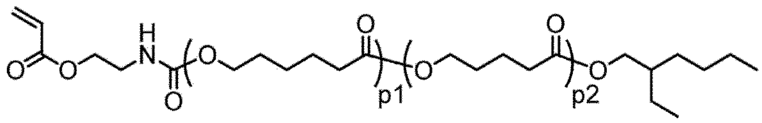

(MM-15)

<Synthesis Example 16: synthesis of macromonomer MM-91>

PGMEA (120.2 g) was charged into a three-neck flask, and heated to 75°C while blowing nitrogen. Next, a mixed solution of ethyl methacrylate (109.6 g), methyl methacrylate (32.1 g), 6-mercapto-1-hexanol (8.34 g), 2,2'-azobis(2-methylpropionate) (V-601, manufactured by FUJIFILM Wako Pure Chemical Corporation) (0.81 g), and PGMEA (98.3 g) was added dropwise to the solution in the flask over 2 hours under a nitrogen atmosphere, and the mixture was stirred at 75°C for 1 hour. V-601 (0.81 g) was added to the mixture, and the mixture was further stirred at 75°C for 2 hours. V-601 (0.81 g) was added to the mixture, the mixture was further stirred at 90°C for 3 hours, and the mixture was cooled to 0°C.

After replacing the inside of the flask with air, 2,6-di-t-butyl-4-methylphenol (0.049 g), tetrakis(2,4-pentanedionato)zirconium (IV) (0.32 g), and PGMEA (25.3 g) were added to the mixture, and Karenz MOI (manufactured by SHOWA DENKO K.K., 2-isocyanatoethyl methacrylate) (9.93 g) was added dropwise to the obtained mixture over 15 minutes. After continuing the reaction at 0°C for 2 hours and then at 30°C for 1 hour in the air, it was confirmed by $^1$H-NMR that a signal derived from 2-isocyanatoethyl methacrylate had disappeared, thereby obtaining a macromonomer MM-91 solution (406 g) having a concentration of 39 mass%.

A structure (Formula (MM-91)) of the macromonomer MM-91 was confirmed by $^1$H-NMR. A ratio of p1 and p2 in Formula (MM-91) was 77/23 (mass ratio) calculated from the charged weights of the ethyl methacrylate and methyl methacrylate as raw materials. The number of repetitions (value of p1 + p2 in Formula (MM-91)) was 21 calculated from the number of moles of the ethyl methacrylate, methyl methacrylate, and 6-mercapto-1-hexanol as raw materials. The repeating units are not limited to being linked in the order shown in the following structural formula to form a block for each repeating unit, and each repeating unit may be randomly linked. The weight-average molecular weight of the macromonomer MM-91 was 4,100, and no exothermic peak indicating the crystallization was not observed.

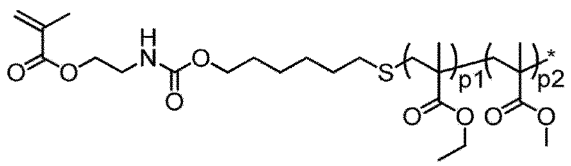

(MM-91)

<Synthesis Example 17: synthesis ofresinA-1>

The macromonomer MM-1 solution (PGMEA: 50 mass%, 60.0 g; 50 mass% with respect to the total mass of all monomers), NK ESTER CB-1 as a monomer for obtaining the constitutional unit B (manufactured by Shin-Nakamura Chemical Co., Ltd., mono-2-(methacryloyloxy)ethyl phthalate) (18.0 g, 30 mass% with respect to the total mass of all monomers), benzyl methacrylate as a monomer for obtaining the constitutional unit C (12.0 g, 20 mass% with respect to the total mass of all monomers), and PGMEA (81.4 g) were charged into a three-neck flask, and the mixture was stirred while blowing nitrogen and heated to 75°C. Next, 1-dodecanethiol as a chain transfer agent (0.88 g, 3 mol% with respect to the total number of moles of all monomers) and then V-601 as a polymerization initiator (0.22 g, 22 mol% with respect to the total number of moles of all monomers) were added to the mixture to initiate a polymerization reaction. After heating the mixture at 75°C for 2 hours, V-601 (0.22 g) was further added to the mixture. After 2 hours, V-601 (0.22 g) was further added to the mixture. After the reaction for another 2 hours, the temperature of the mixture was raised to 90°C, and the mixture was stirred for 2 hours to obtain a 35 mass% solution of a resin A-1 (compound having a structure represented by Formula (A-1)). The weight-average molecular weight of the obtained resin A-1 was 27,300, the acid value thereof was 59 mgKOH/mg, and the SP value thereof was 20.22 $MPa^{0.5}$.

The formula weight of the constitutional unit A in the resin A-1 was 1,000 or more.

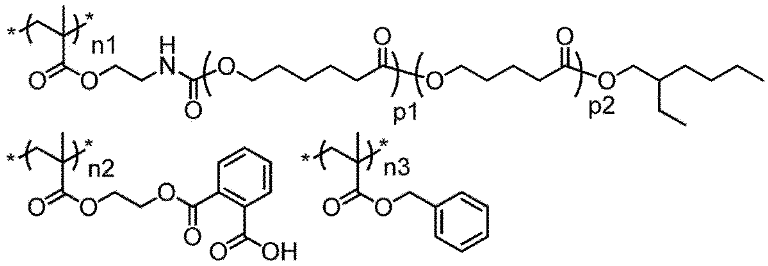

(A-1)

<Synthesis Examples 18 to 56: synthesis of resins A-2 to A-36, A-101, and B-1 to B-3>

Resins A-2 to A-36, A-101, and B-1 to B-3 (compounds having structures represented by Formulae (A-2) to (A-36), (A-101), and (B-1) to (B-3)) were obtained by the same procedure as in Synthesis Example 16 (method for synthesizing the resin A-1), except that the type of the macromonomer, the type of the monomer for obtaining the constitutional unit B, the type of the monomer for obtaining the constitutional unit C, the charged amounts thereof, and the charged amount of the chain transfer agent used in the synthesis of the resin A-1 were changed as shown in Tables 1 and 2. Tables 1 and 2 show the weight-average molecular weight, the acid value, and the SP value of each resin.

The formula weights of the constitutional unit A in the resins A-2 to A-36 and A-101 was all 1,000 or more.

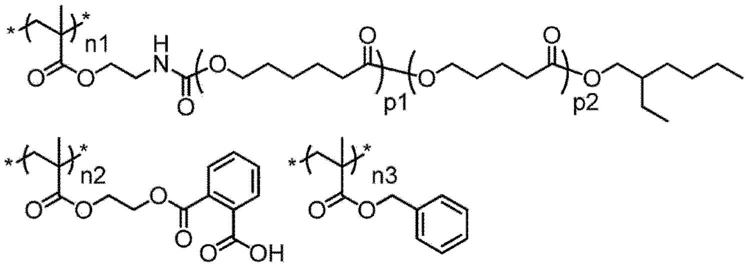

(A-1)~(A-14)

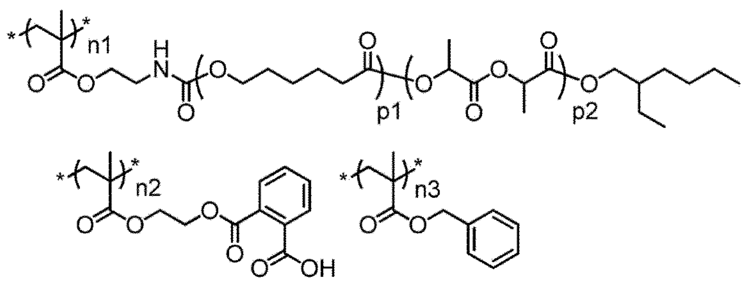

(A-15),(A-16)

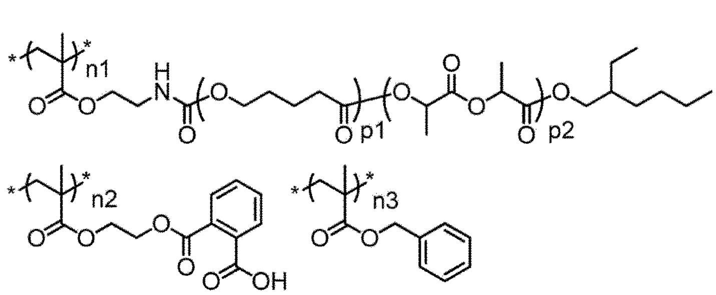

(A-17)

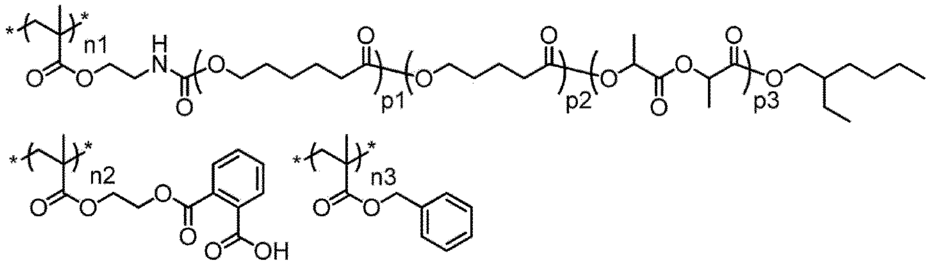

(A-18)

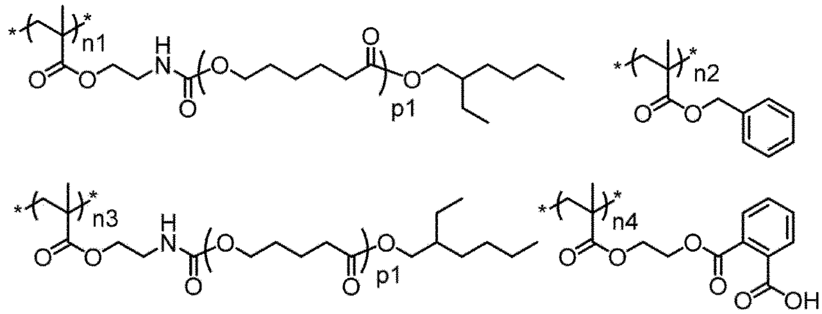

(A-19)

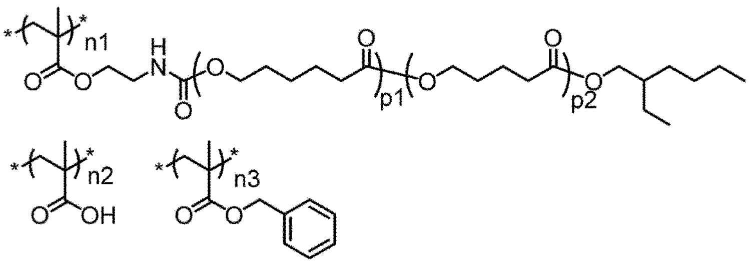

(A-20),(A-35)

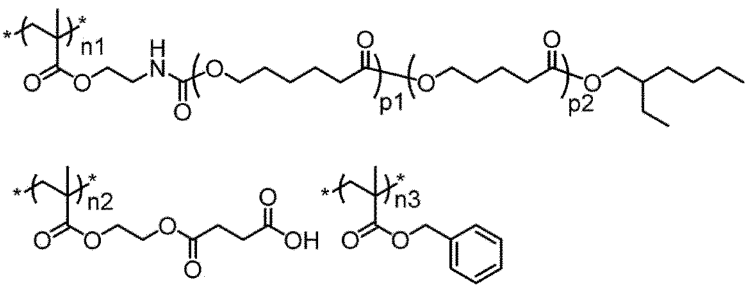

(A-21),(A-101)

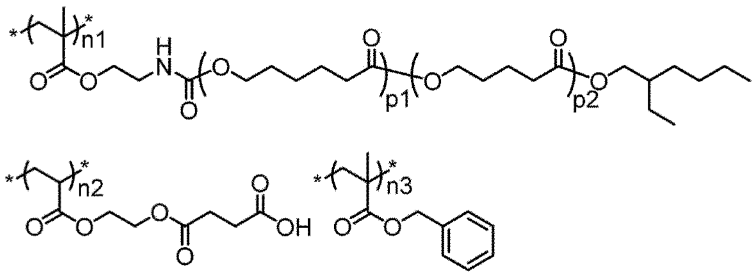

(A-22)

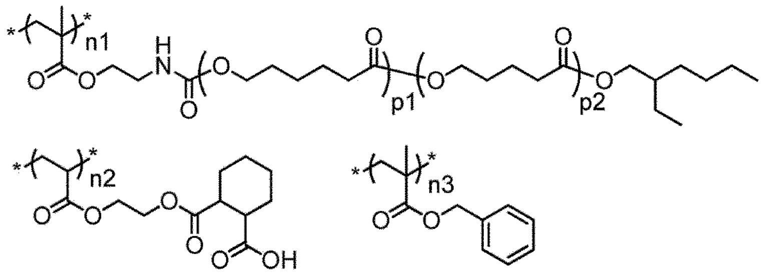

(A-23)

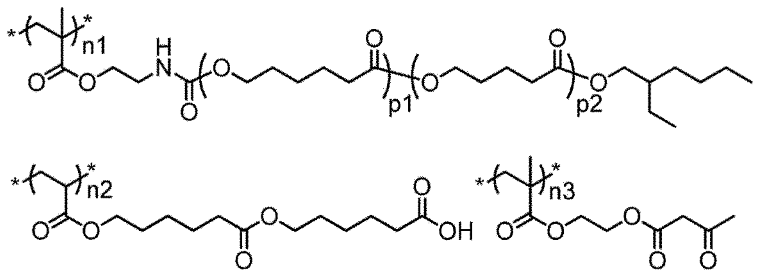

(A-24)

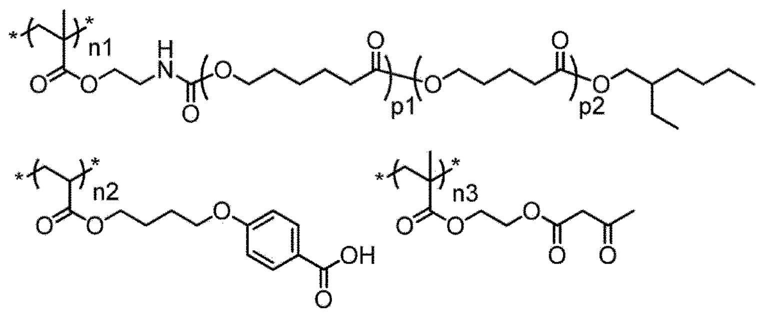

(A-25)

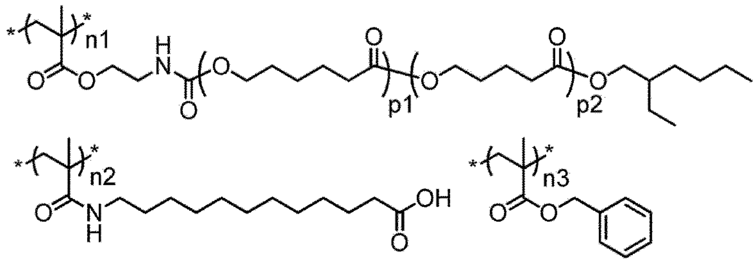

(A-26)

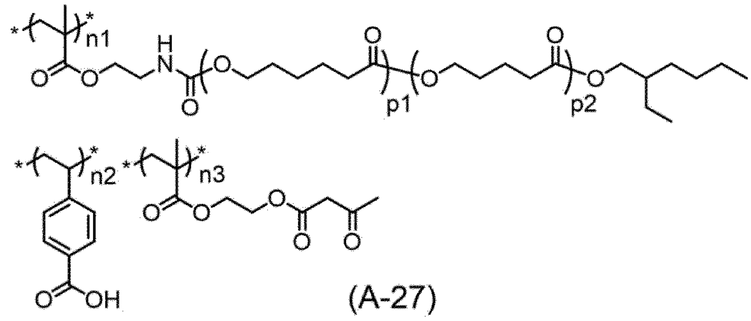

(A-27)

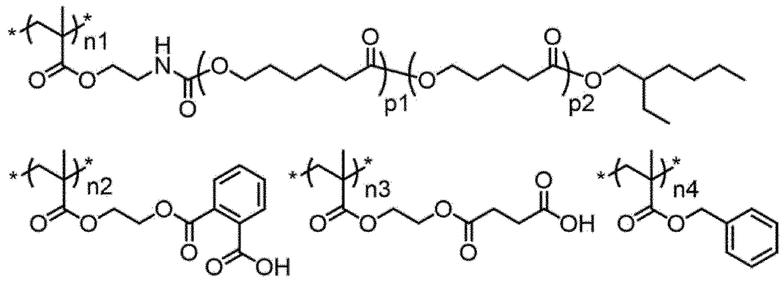

(A-28)

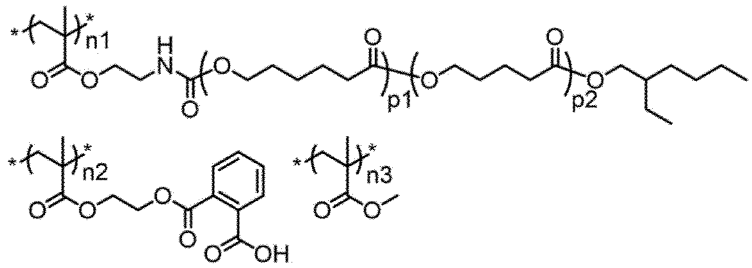

(A-29)

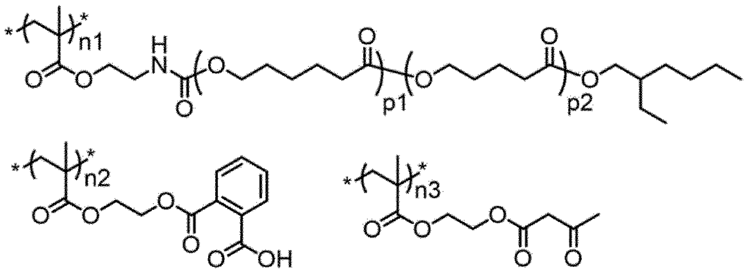

(A-30)

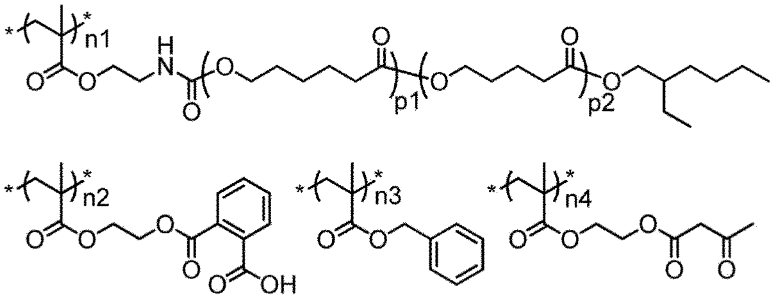

(A-31)

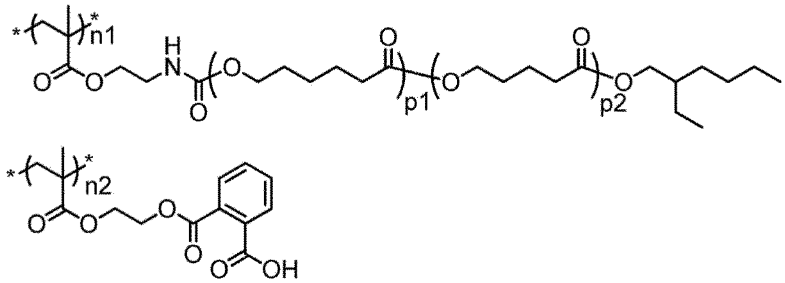

(A-32)

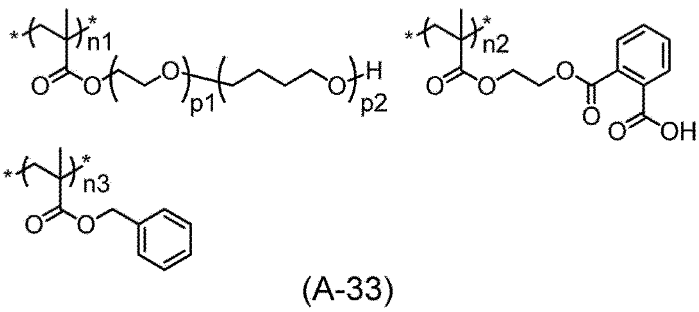

(A-33)

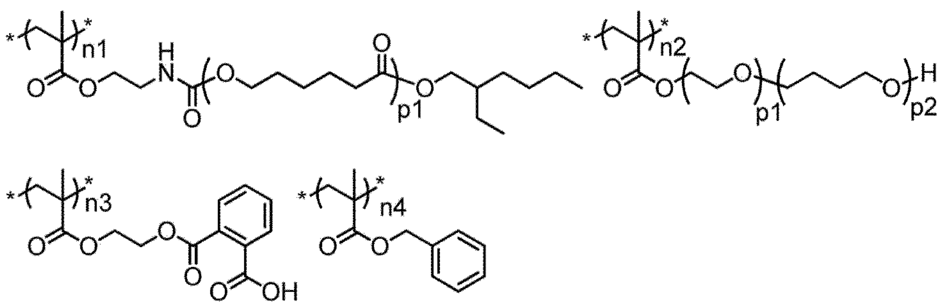

(A-34)

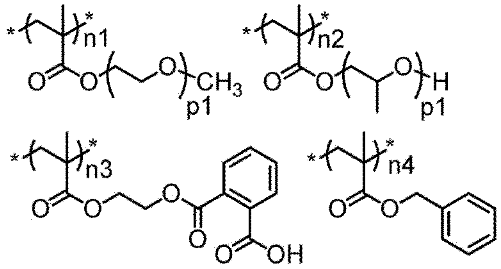

(A-36)

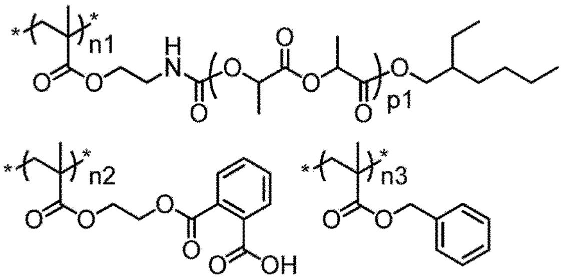

(B-1)

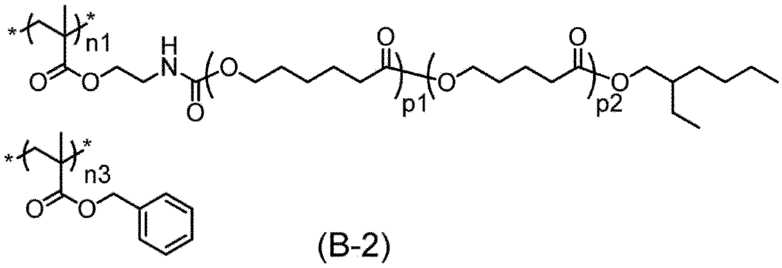

(B-2)

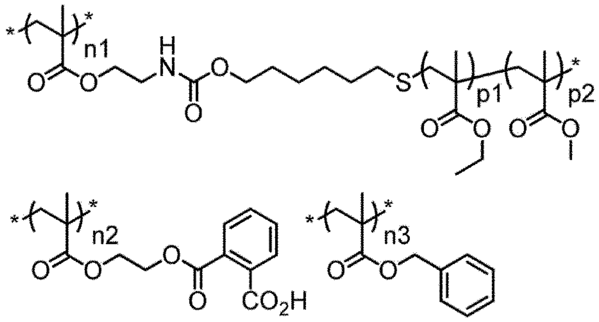

(B-3)

[Table 1]

| Resin name | Constitutional unit A | | | | | | | | | | Constitutional unit B | | Constitutional unit C | | Chain transfer agent amount (mol%) | Weight-average molecular weight | Acid value (mg-KOH/g) | SP value ($MPa^{0.5}$) |
|---|---|---|---|---|---|---|---|---|---|---|---|---|---|---|---|---|---|---|
| | Raw material macromonomer | | | | | | | | | Compositional ratio (mass%) | Raw material monomer name | Compositional ratio (mass%) | Raw material monomer name | Compositional ratio (mass%) | | | | |
| | Name | Constitutional unit L1 | | Constitutional unit L2 or constitutional unit L3 | | Number of repetitions | Weight-average molecular weight | Crystallization temperature (°C) | | | | | | | | | | |
| | | Type | Compositional ratio (mass%) | Type | Compositional ratio (mass%) | | | | | | | | | | | | | |
| A-1 | MM-1 | L-1 | 90 | L-2 | 10 | 20 | 6000 | 6 | 50 | MB-1 | 30 | MC-1 | 20 | 3 | 27300 | 59 | 20.22 |
| A-2 | MM-2 | L-1 | 85 | L-2 | 15 | 20 | 6000 | -1 | 50 | MB-1 | 30 | MC-1 | 20 | 3 | 27500 | 58 | 20.24 |
| A-3 | MM-3 | L-1 | 70 | L-2 | 30 | 20 | 5800 | -13 | 50 | MB-1 | 30 | MC-1 | 20 | 3 | 27000 | 58 | 20.28 |
| A-4 | MM-4 | L-1 | 50 | L-2 | 50 | 20 | 5700 | -22 | 50 | MB-1 | 30 | MC-1 | 20 | 3 | 26900 | 58 | 20.34 |
| A-5 | MM-5 | L-1 | 25 | L-2 | 75 | 20 | 5600 | -8 | 50 | MB-1 | 30 | MC-1 | 20 | 3 | 27700 | 59 | 20.42 |
| A-6 | MM-6 | L-1 | 85 | L-2 | 15 | 10 | 3200 | -17 | 50 | MB-1 | 30 | MC-1 | 20 | 3 | 24600 | 58 | 20.36 |
| A-7 | MM-7 | L-1 | 85 | L-2 | 15 | 50 | 16100 | 10 | 50 | MB-1 | 30 | MC-1 | 20 | 3 | 29400 | 58 | 20.15 |
| A-8 | MM-2 | L-1 | 85 | L-2 | 15 | 20 | 6000 | -1 | 40 | MB-1 | 30 | MC-1 | 30 | 3 | 22300 | 58 | 20.29 |
| A-9 | MM-2 | L-1 | 85 | L-2 | 15 | 20 | 6000 | -1 | 60 | MB-1 | 30 | MC-1 | 10 | 3 | 34400 | 57 | 20.19 |
| A-10 | MM-2 | L-1 | 85 | L-2 | 15 | 20 | 6000 | -1 | 50 | MB-1 | 20 | MC-1 | 30 | 3 | 24600 | 39 | 20.15 |
| A-11 | MM-2 | L-1 | 85 | L-2 | 15 | 20 | 6000 | -1 | 50 | MB-1 | 40 | MC-1 | 10 | 3 | 31700 | 79 | 20.33 |
| A-12 | MM-2 | L-1 | 85 | L-2 | 15 | 20 | 6000 | -1 | 50 | MB-1 | 30 | MC-1 | 20 | 6 | 16800 | 58 | 20.24 |
| A-13 | MM-2 | L-1 | 85 | L-2 | 15 | 20 | 6000 | -1 | 50 | MB-1 | 30 | MC-1 | 20 | 1.5 | 47600 | 60 | 20.24 |
| A-14 | MM-2 | L-1 | 85 | L-2 | 15 | 20 | 6000 | -1 | 50 | MB-1 | 30 | MC-1 | 20 | 0.5 | 110600 | 58 | 20.24 |
| A-15 | MM-8 | L-1 | 85 | L-3 | 15 | 20 | 6000 | -9 | 50 | MB-1 | 30 | MC-1 | 20 | 3 | 26100 | 59 | 20.28 |
| A-16 | MM-9 | L-1 | 50 | L-3 | 50 | 20 | 5700 | - | 50 | MB-1 | 30 | MC-1 | 20 | 3 | 23700 | 60 | 20.49 |
| A-17 | MM-10 | L-2 | 90 | L-3 | 10 | 20 | 5500 | 13 | 50 | MB-1 | 30 | MC-1 | 20 | 3 | 26700 | 59 | 20.52 |
| A-18 | MM-11 | L-1 | 50 | L-2<br>L-3 | 25<br>25 | 20 | 5800 | -23 | 50 | MB-1 | 30 | MC-1 | 20 | 3 | 27300 | 58 | 20.42 |

(continued)

| Resin name | Constitutional unit A | | | | | | | | | | Constitutional unit B | | Constitutional unit C | | Chain transfer agent amount (mol%) | Weight-average molecular weight | Acid value (mgKOH/g) | SP value ($MPa^{0.5}$) |
|---|---|---|---|---|---|---|---|---|---|---|---|---|---|---|---|---|---|---|
| | Raw material macromonomer | | | | | | | | | Compositional ratio (mass%) | Raw material monomer name | Compositional ratio (mass%) | Raw material monomer name | Compositional ratio (mass%) | | | | |
| | Name | Constitutional unit L1 | | Constitutional unit L2 or constitutional unit L3 | | Number of repetitions | Weight-average molecular weight | Crystallization temperature (°C) | | | | | | | | | | |
| | | Type | Compositional ratio (mass%) | Type | Compositional ratio (mass%) | | | | | | | | | | | | | |
| A-19 | MM-12 | L-1 | 100 | | | 20 | 6000 | 25 | 25 | MB-1 | 30 | MC-1 | 20 | 3 | 26900 | 58 | 2034 |
| | MM-13 | L-2 | 100 | | | 20 | 5400 | 21 | 25 | | | | | | | | |
| A-20 | MM-2 | L-1 | 85 | L-2 | 15 | 20 | 6000 | -1 | 50 | MB-2 | 9 | MC-1 | 41 | 3 | 26600 | 62 | 20.22 |

[Table 2]

| Resin name | Constitutional unit A | | | | | | | | | Constitutional unit B | | Constitutional unit C | | Chain transfer agent amount (mol%) | Weight-average molecular weight | Acid value (mgKOH/g) | SP value (MPa$^{0.5}$) |
|---|---|---|---|---|---|---|---|---|---|---|---|---|---|---|---|---|---|
| | Raw material macromonomer | | | | | | | | Compositional ratio (mass%) | Raw material monomer name | Compositional ratio (mass%) | Raw material monomer name | Compositional ratio (mass%) | | | | |
| | Name | Constitutional unit L1 | | Constitutional unit L2 or constitutional unit L3 | | Number of repetitions | Weight-average molecular weight | Crystallization temperature (°C) | | | | | | | | | |
| | | Type | Compositional ratio (mass%) | Type | Compositional ratio (mass%) | | | | | | | | | | | | |
| A-21 | MM-2 | L-1 | 85 | L-2 | 15 | 20 | 6000 | -1 | 50 | MB-3 | 13 | MC-1 | 37 | 3 | 26200 | 33 | 20.24 |
| A-22 | MM-2 | L-1 | 85 | L-2 | 15 | 20 | 6000 | -1 | 50 | MB-4 | 12 | MC-1 | 38 | 3 | 27600 | 30 | 20.24 |
| A-23 | MM-2 | L-1 | 85 | L-2 | 15 | 20 | 6000 | -1 | 50 | MB-5 | 29 | MC-1 | 21 | 3 | 26800 | 61 | 20.22 |
| A-24 | MM-2 | L-1 | 85 | L-2 | 15 | 20 | 6000 | -1 | 50 | MB-6 | 40 | MC-3 | 10 | 3 | 23600 | 73 | 20.24 |
| A-25 | MM-2 | L-1 | 85 | L-2 | 15 | 20 | 6000 | -1 | 50 | MB-7 | 33 | MC-3 | 17 | 3 | 23400 | 69 | 20.24 |
| A-26 | MM-2 | L-1 | 85 | L-2 | 15 | 20 | 6000 | -1 | 50 | MB-8 | 12 | MC-1 | 38 | 3 | 22400 | 25 | 20.24 |
| A-27 | MM-2 | L-1 | 85 | L-2 | 15 | 20 | 6000 | -1 | 50 | MB-9 | 26 | MC-3 | 24 | 3 | 18100 | 101 | 20.24 |
| A-28 | MM-2 | L-1 | 85 | L-2 | 15 | 20 | 6000 | -1 | 50 | MB-1 | 15 | MC-1 | 20 | 3 | 27200 | 65 | 20.42 |
| | | | | | | | | | | MB-3 | 15 | | | | | | |
| A-29 | MM-2 | L-1 | 85 | L-2 | 15 | 20 | 6000 | -1 | 50 | MB-1 | 30 | MC-2 | 20 | 3 | 27700 | 58 | 20.10 |
| A-30 | MM-2 | L-1 | 85 | L-2 | 15 | 20 | 6000 | -1 | 50 | MB-1 | 30 | MC-3 | 20 | 3 | 27900 | 58 | 20.65 |
| A-31 | MM-2 | L-1 | 85 | L-2 | 15 | 20 | 6000 | -1 | 50 | MB-1 | 30 | MC-1 | 10 | 3 | 27800 | 58 | 20.44 |
| | | | | | | | | | | | | MC-3 | 10 | | | | |
| A-32 | MM-2 | L-1 | 85 | L-2 | 15 | 20 | 6000 | -1 | 50 | MB-1 | 50 | | | 3 | 37200 | 99 | 20.43 |
| A-33 | MM-51 | L-11 | 55 | L-12 | 45 | 15 | 1800 | -15 | 50 | MB-1 | 30 | MC-1 | 20 | 3 | 22600 | 59 | 20.39 |
| A-34 | MM-12 | L-1 | 100 | | | 20 | 6000 | 25 | 30 | MB-1 | 30 | MC-1 | 20 | 3 | 25700 | 58 | 20.27 |
| | MM-51 | L-11 | 55 | L-12 | 45 | 15 | 1800 | -15 | 20 | | | | | | | | |

(continued)

| Resin name | Constitutional unit A | | | | | | | | | | Constitutional unit B | | Constitutional unit C | | Chain transfer agent amount (mol%) | Weight-average molecular weight | Acid value (mgKOH/g) | SP value ($MPa^{0.5}$) |
|---|---|---|---|---|---|---|---|---|---|---|---|---|---|---|---|---|---|---|
| | Raw material macromonomer | | | | | | | | | Compositional ratio (mass%) | Raw material monomer name | Compositional ratio (mass%) | Raw material monomer name | Compositional ratio (mass%) | | | | |
| | Name | Constitutional unit L1 | | Constitutional unit L2 or constitutional unit L3 | | Number of repetitions | Weight-average molecular weight | Crystallization temperature (°C) | | | | | | | | | | |
| | | Type | Compositional ratio (mass%) | Type | Compositional ratio (mass%) | | | | | | | | | | | | | |
| A-35 | MM-2 | L-1 | 85 | L-2 | 15 | 20 | 6000 | -1 | | 50 | MB-2 | 30 | MC-1 | 20 | 3 | 24800 | 195 | 20.83 |
| A-36 | MM-52 | L-11 | 100 | | | 23 | 2200 | 0 | | 25 | MB-1 | 30 | MC-1 | 20 | 3 | 23400 | 58 | 20.08 |
| | MM-53 | L-13 | 100 | | | 13 | 1700 | -10 | | 25 | | | | | | | | |
| B-1 | MM-14 | L-3 | 100 | | | 20 | 6000 | >50 | | 50 | MB-1 | 30 | MC-1 | 20 | 3 | 28300 | 60 | 20.83 |
| B-2 | MM-2 | L-1 | 85 | L-2 | 15 | 20 | 6000 | -1 | | 50 | | | MC-1 | 50 | 3 | 21000 | 2 | 19.97 |
| B-3 | MM-91 | - | 77 | - | 23 | 21 | 4100 | - | | 50 | MB-1 | 30 | MC-1 | 20 | 3 | 23200 | 57 | 20.21 |
| A-101 | MM-2 | L-1 | 85 | L-2 | 15 | 20 | 6000 | -1 | | 50 | MB-3 | 41 | MC-1 | 9 | 3 | 27500 | 100 | 20.85 |
| | MM-15 | L-1 | 85 | L-2 | 15 | 10 | 3200 | -17 | | | | | | | | | | |

Various abbreviations listed in Table 1 or Table 2 are shown below.

(Macromonomer)

- MM-1 to MM-14, MM-91: macromonomers MM-1 to MM-14, and MM-91 described above
- MM-51: Blemmer 55 PET-800 (manufactured by NOF Corporation, macromonomer represented by Formula (MM-51); each repeating unit are randomly bonded)

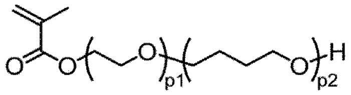
(MM-51)

- MM-52: Blemmer PME-1000 (manufactured by NOF Corporation, macromonomer represented by Formula (MM-52); the number of repetitions is 23)
- MM-53: Blemmer PP-800 (manufactured by NOF Corporation, macromonomer represented by Formula (MM-53); the number of repetitions is 13)

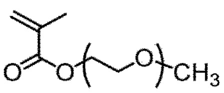
(MM-52)
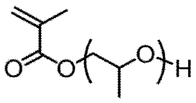
(MM-53)

(Constitutional unit)

L-1 to L-3, L-11, L-12, L-13: structures shown below

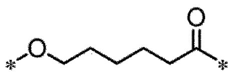
(L-1)
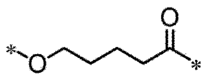
(L-2)
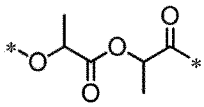
(L-3)

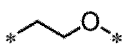
(L-11)
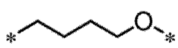
(L-12)
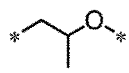
(L-13)

(Monomer)

- MB-1: NK ESTER CB-1 (manufactured by Shin-Nakamura Chemical Co., Ltd., mono-2-(methacryloyloxy)ethyl phthalate)
- MB-2: methacrylic acid
- MB-3: LIGHT Ester HO-MS (N) (manufactured by KYOEISHA CHEMICAL Co., LTD., mono(2-methacryloyloxyethyl) succinic acid)
- MB-4: LIGHT Acrylate HOA-MS (N) (manufactured by KYOEISHA CHEMICAL Co., LTD., mono(2-acryloyloxyethyl) succinic acid)
- MB-5: LIGHT Acrylate HOA-HH (N) (manufactured by KYOEISHA CHEMICAL Co., LTD., mono-2-(acryloyloxy)ethyl hexahydrophthalate)
- MB-6: ARONIX M-5300 (manufactured by TOAGOSEI CO., LTD., ω-carboxy-polycaprolactone (n≈2) monoacrylate)
- MB-7, MB-8: compounds represented by Formulae (MB-7) and (MB-8)
- MB-9: 4-vinylbenzoic acid
- MC-1: benzyl methacrylate
- MC-2: methyl methacrylate
- MC-3: 2-(acetoacetyloxy)ethyl methacrylate

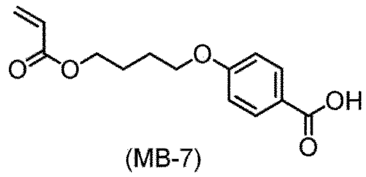

(MB-7)

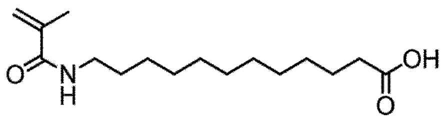

(MB-8)

<Synthesis Example 57: synthesis of resin B-101>

Itaconic acid (261.7 g), dipentaerythritol hexakis(3-mercaptopropionate) (DPMP) (450.0 g), and propylene glycol monomethyl ether (PGME) (1,661 g) were added to a three-neck flask, and the mixture was stirred and heated to 80°C under a nitrogen atmosphere. Next, V-601 (1.16 g) was added thereto and stirred for 2 hours. Further, V-601 (1.16 g) was added thereto, and the mixture was heated to 90°C and stirred for 2 hours to obtain a 30 mass% solution (2375 g) of a modified thiol X-1 (compound in which an average of 3.5 of 6 thiols in one molecule of DPMP was modified with itaconic acid).

PGMEA (64.1 g) was added to a three-neck flask, and heated to 80°C under a nitrogen atmosphere. Next, a mixed solution of the modified thiol X-1 (104.5 g), methyl methacrylate (88.7 g), V-601 (0.61 g, 0.3 mol% of methyl methacrylate), and PGMEA (15.2 g) was added dropwise to the solution in the flask over 2.5 hours. After completion of the dropwise addition, the mixture was stirred for 2.5 hours, and V-601 (0.61 g) was added thereto. The mixture was heated to 90°C and stirred for 2 hours, and PGMEA (127.2 g) was added thereto to obtain a 30 mass% solution of a resin B-101 (compound having a structure represented by Formula (B-101)). The weight-average molecular weight of the obtained resin B-101 was 6,300, the acid value thereof was 83 mgKOH/mg, and the SP value thereof was 20.53 $MPa^{0.5}$.

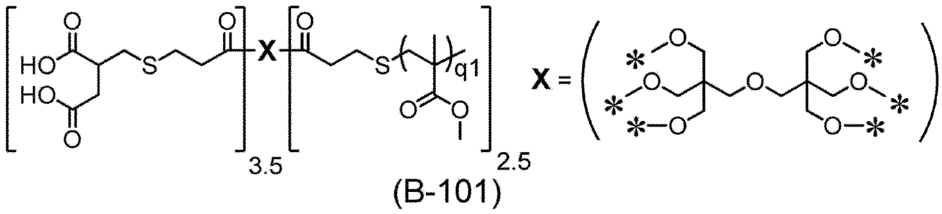

(B-101)

<Synthesis Example 58: synthesis of resin B-102>

PGMEA (108.3 g) was added to a three-neck flask, and heated to 80°C under a nitrogen atmosphere. Next, a mixed solution of the modified thiol X-1 (117.3 g), methyl methacrylate (147.1 g), methacrylic acid (12.1 g), V-601 (1.11 g, 0.3 mol% with respect to the total number of moles of all monomers), and PGMEA (170.6 g) was added dropwise to the solution in the flask over 2.5 hours. After completion of the dropwise addition, the mixture was stirred for 2.5 hours, and V-601 (1.11 g) was added thereto. The mixture was heated to 90°C and stirred for 2 hours, and PGMEA (92.5 g) was added thereto to obtain a 30 mass% solution of a resin B-102 (compound having a structure represented by Formula (B-102)). A ratio of q1 and q2 in Formula (B-102) was 92.4/7.6 (mass ratio) calculated from the charged weights of the methyl methacrylate and methacrylic acid as raw materials. The number of repetitions (value of q1 + q2 in Formula (B-102)) was 22.7 calculated from the number of moles of the modified thiol, methyl methacrylate, and methacrylic acid as raw materials. The repeating units are not limited to being linked in the order shown in the following structural formula to form a block for each repeating unit, and each repeating unit may be randomly linked. The weight-average molecular weight of the obtained resin B-102 was 9,200, the acid value thereof was 100 mgKOH/mg, and the SP value thereof was 20.43 $MPa^{0.5}$.

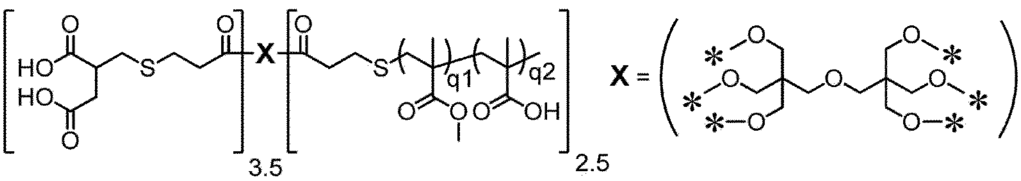

(B-102)~(B-109)

<Synthesis Examples 59 to 66: synthesis of resins B-103 to B-109>

Resins B-103 to B-109 were obtained by the same procedure as in Synthesis Example 58 (method for synthesizing the resin B-102), except that the charged amount of the monomer (methyl methacrylate and methacrylic acid) used in the synthesis of the resin B-102 was adjusted so that the compositional ratio and the number of repetitions were as shown in Table 3. Table 3 shows the compositional ratio, the number of repetitions, the weight-average molecular weight, the acid value, and the SP value of each resin.

<Synthesis Example 67: synthesis of resin A-102>

PGMEA (20.3 g) was added to a three-neck flask, and heated to 80°C under a nitrogen atmosphere. Next, a mixed solution of the modified thiol X-1 (117.3 g), the 50 mass% PGMEA solution (197.3 g) of the macromonomer MM-15, V-601 (0.049 g, 0.3 mol% with respect to the number of moles of all monomers), and PGMEA (47.5 g) was added dropwise to the solution in the flask over 2.5 hours. After completion of the dropwise addition, the mixture was stirred for 2.5 hours, and V-601 (0.049 g) was added thereto. The mixture was heated to 90°C and stirred for 2 hours, and PGMEA (63.7 g) was added thereto to obtain a 30 mass% solution of a resin A-102 (compound having a structure represented by Formula (A-102)). The weight-average molecular weight of the obtained resin A-102 was 9,700, the acid value thereof was 83 mgKOH/mg, and the SP value thereof was 20.84 $MPa^{0.5}$.

The formula weight of the constitutional unit A in the resin A-102 was 1,000 or more.

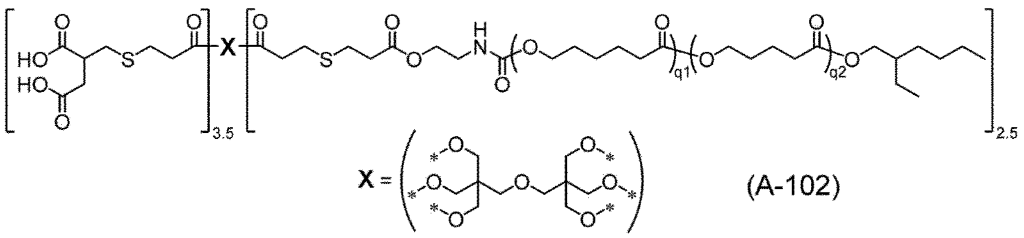

(A-102)

[Table 3]

| Resin name | Compositional ratio (mass%) | | Number of repetitions | Weight-average molecular weight | Acid value (mgKOH/g) | SP value ($MPa^{0.5}$) |
|---|---|---|---|---|---|---|
| | q1 | q2 | | | | |
| B-101 | 100 | - | 14 | 6300 | 83 | 20.53 |
| B-102 | 92.4 | 7.6 | 22.7 | 9200 | 100 | 20.43 |
| B-103 | 88.7 | 11.3 | 22.7 | 9200 | 118 | 20.55 |
| B-104 | 85.0 | 15.0 | 22.7 | 9300 | 135 | 20.68 |
| B-105 | 81.3 | 18.7 | 22.7 | 9400 | 157 | 20.80 |
| B-106 | 77.5 | 22.5 | 22.7 | 9500 | 181 | 20.93 |
| B-107 | 88.1 | 11.9 | 14.9 | 6700 | 141 | 20.84 |
| B-108 | 83.4 | 16.6 | 30.6 | 12000 | 141 | 20.58 |
| B-109 | 82.5 | 17.5 | 38.4 | 14400 | 139 | 20.52 |
| A-102 | 85 | 15 | 10 | 9700 | 83 | 20.84 |

<Production of dispersion liquid>

By using ULTRA APEX MILL (manufactured by Kotobuki Industries Co., Ltd.) as a circulation type dispersion apparatus (beads mill), a mixed solution having the following composition shown in the following table was dispersed. In this way, a dispersion liquid was produced. Bead diameter: diameter 0.2 mm; bead filling rate: 65 volume%; circumferential speed: 6 m/sec; pump supply amount: 10.8 kg/hour; cooling water: tap water; beads mill circular passage inner volume: 0.15 L; amount of mixed solution to be dispersed: 0.65 kg

[Table 4]

| Dispersion liquid name | Particles | | Resin (dispersant) | | Solvent | |
|---|---|---|---|---|---|---|
| | Type | Part by mass | Type | Part by mass | Type | Part by mass |
| Dispersion liquid 1 | P-1 | 38.4 | B-104 | 11.6 | S-1 | 50.0 |
| Dispersion liquid 2 | P-2 | 38.4 | B-104 | 11.6 | S-1 | 50.0 |
| Dispersion liquid 3 | P-3 | 38.4 | B-104 | 11.6 | S-1 | 50.0 |
| Dispersion liquid 4 | P-4 | 38.4 | B-104 | 11.6 | S-1 | 50.0 |
| Dispersion liquid 5 | P-5 | 38.4 | B-104 | 11.6 | S-1 | 50.0 |
| Dispersion liquid 6 | P-6 | 38.4 | B-104 | 11.6 | S-1 | 50.0 |
| Dispersion liquid 7 | P-7 | 38.4 | B-104 | 11.6 | S-1 | 50.0 |
| Dispersion liquid 8 | P-3<br>P-4 | 19.2<br>19.2 | B-104 | 11.6 | S-1 | 50.0 |
| Dispersion liquid 9 | P-4 | 38.4 | B-101 | 11.6 | S-1 | 50.0 |
| Dispersion liquid 10 | P-4 | 38.4 | B-102 | 11.6 | S-1 | 50.0 |
| Dispersion liquid 11 | P-4 | 38.4 | B-103 | 11.6 | S-1 | 50.0 |
| Dispersion liquid 12 | P-4 | 38.4 | B-105 | 11.6 | 5-1 | 50.0 |
| Dispersion liquid 13 | P-4 | 38.4 | B-106 | 11.6 | S-1 | 50.0 |
| Dispersion liquid 14 | P-4 | 38.4 | B-107 | 11.6 | S-1 | 50.0 |
| Dispersion liquid 15 | P-4 | 38.4 | B-108 | 11.6 | S-1 | 50.0 |
| Dispersion liquid 16 | P-4 | 38.4 | B-109 | 11.6 | S-1 | 50.0 |
| Dispersion liquid 17 | P-4 | 38.4 | A-101 | 11.6 | S-1 | 50.0 |
| Dispersion liquid 18 | P-4 | 38.4 | A-102 | 11.6 | 5-1 | 50.0 |
| Dispersion liquid 19 | P-4 | 38.4 | B-104 | 11.6 | S-2 | 50.0 |
| Dispersion liquid 20 | P-4 | 38.4 | B-104 | 11.6 | S-3 | 50.0 |
| Dispersion liquid 21 | P-4 | 38.4 | B-104 | 11.6 | S-1<br>S-2 | 25.0<br>25.0 |

The raw materials shown above in the table are as follows.

[Particles (white particles)]

[Table 5]

| Particle name | Name (manufacturer) | Type | Specific gravity ($g/cm^3$) | Refractive index | Average primary particle diameter (nm) |
|---|---|---|---|---|---|
| P-1 | TTO-51 (manufactured by ISHIHARA SANGYO KAISHA, LTD) | Titanium oxide particles | 4.1 | 2.71 | 20 |
| P-2 | TTO-80A (manufactured by ISHIHARA SANGYO KAISHA, LTD) | Titanium oxide particles | 4.1 | 2.71 | 60 |

(continued)

| Particle name | Name (manufacturer) | Type | Specific gravity (g/cm$^3$) | Refractive index | Average primary particle diameter (nm) |
|---|---|---|---|---|---|
| P-3 | MPT-136 (manufactured by ISHIHARA SANGYO KAISHA, LTD) | Titanium oxide particles | 4.1 | 2.71 | 80 |
| P-4 | MPT-141 (manufactured by ISHIHARA SANGYO KAISHA, LTD) | Titanium oxide particles | 4.1 | 2.71 | 91 |
| P-5 | Zirconeo-Cp (manufactured by AITEC Co., LTD.) | Zirconium oxide particles | 5.7 | 2.11 | 10 |
| P-6 | CR-90-2 (manufactured by ISHIHARA SANGYO KAISHA, LTD) | Titanium oxide particles | 4.1 | 2.71 | 250 |
| P-7 | Aluminum oxide nanoparticles (manufactured by EM Japan) | Aluminum oxide particles | 4.0 | 1.77 | 80 |

The value of the refractive index in the above tables is a refractive index for light having a wavelength of 589 nm.

[Resin (Dispersant)]

• B-101 to B-109, A-101, A-102: resin B-101 to B-109, A-101, and A-102 described above

[Solvent]

- S-1: propylene glycol monomethyl ether acetate (PGMEA)
- S-2: propylene glycol monomethyl ether (PGME)
- S-3: cyclopentanone

<Preparation of Composition>

Raw materials shown in Tables 6 to 11 were mixed with each other to prepare a composition.

[Table 6]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 1 | Dispersion liquid 1 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 2 | Dispersion liquid 2 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 3 | Dispersion liquid 3 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 4 | Dispersion liquid 4 | 52 | A-2 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 5 | Dispersion liquid 5 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 6 | Dispersion liquid 8 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 7 | Dispersion liquid 9 | 52 | A-2 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 8 | Dispersion liquid 10 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 9 | Dispersion liquid 11 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 10 | Dispersion liquid 12 | 52 | A-2 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 11 | Dispersion liquid 13 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 12 | Dispersion liquid 14 | 52 | A-2 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 13 | Dispersion liquid 15 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |

(continued)

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 14 | Dispersion liquid 16 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 15 | Dispersion liquid 17 | 52 | B-3 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |

[Table 7]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 16 | Dispersion liquid 18 | 52 | B-3 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 17 | Dispersion liquid 19 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 18 | Dispersion liquid 20 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 19 | Dispersion liquid 21 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 20 | Dispersion liquid 3<br>Dispersion liquid 4 | 26<br>26 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 21 | Dispersion liquid 4 | 52 | A-1 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 22 | Dispersion liquid 4 | 52 | A-3 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 23 | Dispersion liquid 4 | 52 | A-4 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 24 | Dispersion liquid 4 | 52 | A-5 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 25 | Dispersion liquid 4 | 52 | A-6 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 26 | Dispersion liquid 4 | 52 | A-7 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 27 | Dispersion liquid 4 | 52 | A-8 | 8.96 | M-2 | 9.58 | I-3 | 2.70 | Ad-1<br>Ad-3 | 0.25<br>2.50 | Su-1 | 0.008 | In-1 | 0.005 | S-1 | 24 |

(continued)

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 28 | Dispersion liquid 4 | 52 | A-9 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 29 | Dispersion liquid 4 | 52 | A-10 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 30 | Dispersion liquid 4 | 52 | A-11 | 8.96 | M-2 | 9.58 | I-3 | 2.70 | Ad-1<br>Ad-3 | 0.25<br>2.50 | Su-1 | 0.008 | In-1 | 0.005 | S-1 | 24 |

[Table 8]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 31 | Dispersion liquid 4 | 52 | A-12 | 8.96 | M-2 | 9.58 | I-3 | 2.70 | Ad-1<br>Ad-3 | 0.25<br>2.50 | Su-1 | 0.008 | In-1 | 0.005 | 5-1 | 24 |
| Example 32 | Dispersion liquid 4 | 52 | A-13 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 33 | Dispersion liquid 4 | 52 | A-14 | 8.96 | M-2 | 9.58 | I-3 | 2.70 | Ad-1<br>Ad-3 | 0.25<br>2.50 | Su-1 | 0.008 | In-1 | 0.005 | 5-1 | 24 |
| Example 34 | Dispersion liquid 4 | 52 | A-15 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 35 | Dispersion liquid 4 | 52 | A-16 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 36 | Dispersion liquid 4 | 52 | A-17 | 8.96 | M-2 | 9.58 | I-3 | 2.70 | Ad-1<br>Ad-3 | 0.25<br>2.50 | Su-1 | 0.008 | In-1 | 0.005 | 5-1 | 24 |
| Example 37 | Dispersion liquid 4 | 52 | A-18 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 38 | Dispersion liquid 4 | 52 | A-19 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 39 | Dispersion liquid 4 | 52 | A-20 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 40 | Dispersion liquid 4 | 52 | A-21 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 41 | Dispersion liquid 4 | 52 | A-22 | 8.96 | M-2 | 9.58 | I-3 | 2.70 | Ad-1<br>Ad-3 | 0.25<br>2.50 | Su-1 | 0.008 | In-1 | 0.005 | 5-1 | 24 |
| Example 42 | Dispersion liquid 4 | 52 | A-23 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |
| Example 43 | Dispersion liquid 4 | 52 | A-24 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |

(continued)

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 44 | Dispersion liquid 4 | 52 | A-25 | 8.96 | M-2 | 9.58 | I-3 | 2.70 | Ad-1<br>Ad-3 | 0.25<br>2.50 | Su-1 | 0.008 | In-1 | 0.005 | 5-1 | 24 |
| Example 45 | Dispersion liquid 4 | 52 | A-26 | 8.96 | M-2 | 9.58 | 1-3 | 2.70 | Ad-1<br>Ad-3 | 0.25<br>2.50 | Su-1 | 0.008 | In-1 | 0.005 | S-1 | 24 |

[Table 9]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 46 | Dispersion liquid 4 | 52 | A-27 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 47 | Dispersion liquid 4 | 52 | A-28 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 48 | Dispersion liquid 4 | 52 | A-29 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 49 | Dispersion liquid 4 | 52 | A-30 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 50 | Dispersion liquid 4 | 52 | A-31 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 51 | Dispersion liquid 4 | 52 | A-32 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 52 | Dispersion liquid 4 | 52 | A-33 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 53 | Dispersion liquid 4 | 52 | A-34 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 54 | Dispersion liquid 4 | 52 | A-2<br>A-21 | 4.48<br>4.48 | M-2 | 9.58 | I-3 | 2.70 | Ad-1<br>Ad-3 | 0.25<br>2.50 | Su-1 | 0.008 | In-1 | 0.005 | S-1 | 24 |
| Example 55 | Dispersion liquid 4 | 52 | A-2 | 8.96 | M-1 | 9.58 | I-3 | 2.70 | Ad-1<br>Ad-3 | 0.25<br>2.50 | Su-1 | 0.008 | In-1 | 0.005 | S-1 | 24 |
| Example 56 | Dispersion liquid 4 | 52 | A-2 | 8.96 | M-3 | 9.58 | I-3 | 2.70 | Ad-1<br>Ad-3 | 0.25<br>2.50 | Su-1 | 0.008 | In-1 | 0.005 | S-1 | 24 |
| Example 57 | Dispersion liquid 4 | 52 | A-2 | 8.96 | M-4 | 9.58 | I-3 | 2.70 | Ad-1<br>Ad-3 | 0.25<br>2.50 | Su-1 | 0.008 | In-1 | 0.005 | S-1 | 24 |
| Example 58 | Dispersion liquid 4 | 52 | A-2 | 8.96 | M-5 | 9.58 | I-3 | 2.70 | Ad-1<br>Ad-3 | 0.25<br>2.50 | Su-1 | 0.008 | In-1 | 0.005 | S-1 | 24 |

(continued)

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 59 | Dispersion liquid 4 | 52 | A-2 | 8.96 | M-6 | 9.58 | I-3 | 2.70 | Ad-1<br>Ad-3 | 0.25<br>2.50 | Su-1 | 0.008 | In-1 | 0.005 | S-1 | 24 |
| Example 60 | Dispersion liquid 4 | 52 | A-2 | 8.96 | M-1<br>M-2 | 4.79<br>4.79 | I-3 | 2.70 | Ad-1<br>Ad-3 | 0.25<br>2.50 | Su-1 | 0.008 | In-1 | 0.005 | S-1 | 24 |

[Table 10]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 61 | Dispersion liquid 4 | 52 | A-2 | 8.96 | M-2<br>M-3 | 4.79<br>4.79 | I-3 | 2.70 | Ad-1<br>Ad-3 | 0.25<br>2.50 | Su-1 | 0.008 | In-1 | 0.005 | S-1 | 24 |
| Example 62 | Dispersion liquid 4 | 52 | A-2 | 8.96 | M-2<br>M-4 | 4.79<br>4.79 | I-3 | 2.70 | Ad-1<br>Ad-3 | 0.25<br>2.50 | Su-1 | 0.008 | In-1 | 0.005 | S-1 | 24 |
| Example 63 | Dispersion liquid 4 | 52 | A-2 | 8.96 | M-2<br>M-5 | 4.79<br>4.79 | I-3 | 2.70 | Ad-1<br>Ad-3 | 0.25<br>2.50 | Su-1 | 0.008 | In-1 | 0.005 | S-1 | 24 |
| Example 64 | Dispersion liquid 4 | 52 | A-2 | 8.96 | M-2<br>M-6 | 4.79<br>4.79 | I-3 | 2.70 | Ad-1<br>Ad-3 | 0.25<br>2.50 | Su-1 | 0.008 | In-1 | 0.005 | S-1 | 24 |
| Example 65 | Dispersion liquid 4 | 52 | A-2 | 8.96 | M-2 | 9.58 | I-1 | 2.70 | Ad-1<br>Ad-3 | 0.25<br>2.50 | Su-1 | 0.008 | In-1 | 0.005 | S-1 | 24 |
| Example 66 | Dispersion liquid 4 | 52 | A-2 | 8.96 | M-2 | 9.58 | I-2 | 2.70 | Ad-1<br>Ad-3 | 0.25<br>2.50 | Su-1 | 0.008 | In-1 | 0.005 | S-1 | 24 |
| Example 67 | Dispersion liquid 4 | 52 | A-2 | 8.96 | M-2 | 9.58 | I-1<br>I-3 | 1.35<br>1.35 | Ad-1<br>Ad-3 | 0.25<br>2.50 | Su-1 | 0.008 | In-1 | 0.005 | S-1 | 24 |
| Example 68 | Dispersion liquid 4 | 52 | A-2 | 8.96 | M-2 | 9.58 | I-2<br>I-3 | 1.35<br>1.35 | Ad-1<br>Ad-3 | 0.25<br>2.50 | Su-1 | 0.008 | In-1 | 0.005 | S-1 | 24 |
| Example 69 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 70 | Dispersion liquid 4 | 52 | A-2 | 9.08 | M-2 | 9.71 | I-3 | 2.70 | Ad-3 | 2.50 | Su-1 | 0.008 | In-1 | 0.005 | S-1 | 24 |
| Example 71 | Dispersion liquid 4 | 52 | A-2 | 10.16 | M-2 | 10.88 | I-3 | 2.70 | Ad-1 | 0.25 | Su-1 | 0.008 | In-1 | 0.005 | S-1 | 24 |
| Example 72 | Dispersion liquid 4 | 52 | A-2 | 8.96 | M-2 | 9.58 | I-3 | 2.70 | Ad-1<br>Ad-3 | 0.25<br>2.50 | Su-2 | 0.008 | In-1 | 0.005 | S-1 | 24 |
| Example 73 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-2 | 0.005 | S-1 | 24 |

(continued)

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 74 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-2 | 24 |
| Example 75 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-3 | 24 |

[Table 11]

| | Dispersion liquid | | Resin (binder) | | Polymerizable monomer | | Photosensitive initiator | | Additive | | Surfactant | | Polymerization inhibitor | | Solvent | |
|---|---|---|---|---|---|---|---|---|---|---|---|---|---|---|---|---|
| | Type | Part by mass | Type | Part by mass | Type | Part by mass | Type | Part by mass | Type | Part by mass | Type | Part by mass | Type | Part by mass | Type | Part by mass |
| Example 76 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1<br>S-2 | 12<br>12 |
| Example 77 | Dispersion liquid 4 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1<br>S-3 | 12<br>12 |
| Example 78 | Dispersion liquid 10 | 52 | A-35 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Example 79 | Dispersion liquid 4 | 52 | A-36 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Comparative Example 1 | Dispersion liquid 6 | 52 | A-10 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Comparative Example 2 | Dispersion liquid 7 | 52 | A-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Comparative Example 3 | Dispersion liquid 4 | 52 | B-1 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Comparative Example 4 | Dispersion liquid 4 | 52 | B-2 | 8.96 | M-2 | 9.58 | I-3 | 2.70 | Ad-1<br>Ad-3 | 0.25<br>2.50 | Su-1 | 0.008 | In-1 | 0.005 | S-1 | 24 |
| Comparative Example 5 | Dispersion liquid 4 | 52 | B-3 | 8.96 | M-2 | 9.58 | I-3 | 2.70 | Ad-1<br>Ad-3 | 0.25<br>2.50 | Su-1 | 0.008 | In-1 | 0.005 | S-1 | 24 |

The raw materials shown above in the table are as follows.

[Dispersion Liquid]

• Dispersion Liquids 1 to 21: dispersion liquids 1 to 21 described above

[Resin (binder resin)]

• A-1 to A-36, B-1 to B-3: resins A-1 to A-36 and B-1 to B-3 described above

[Polymerizable monomer]

- M-1: KAYARAD DPHA (manufactured by Nippon Kayaku Co., Ltd., dipentaerythritol hexa(meth)acrylate)
- M-2: KAYARAD RP-1040 (manufactured by Nippon Kayaku Co., Ltd.)
- M-3: NK ESTER A-TMMT (manufactured by Shin-Nakamura Chemical Co., Ltd.)
- M-4: Light Acrylate DCP-A (manufactured by KYOEISHA CHEMICAL Co., Ltd., dimethylol-tricyclodecane diacrylate)
- M-5: NK ESTER A-DPH-12E (manufactured by Shin-Nakamura Chemical Co., Ltd.)
- M-6: EBECRYL 160S (manufactured by DAICEL-ALLNEX LTD.)

[Photopolymerization initiator]

- 1-1: Irgacure OXE01 (manufactured by BASF)
- 1-2: Omnirad 369 (manufactured by IGM Resins B.V.)
- 1-3: Omnirad TPO H (manufactured by IGM Resins B.Y.)

[Additive]

- Ad-1: ADEKA STAB AO-80 (manufactured by Adeka Corporation, anti-coloring agent)
- Ad-2: Irganox 1010 (manufactured by BASF, anti-coloring agent)
- Ad-3: compound having the following structure

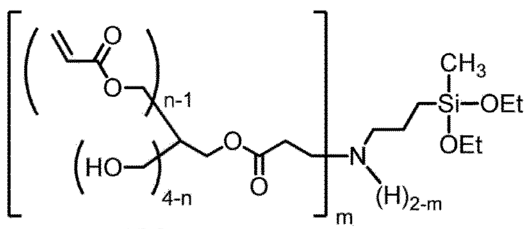

n = 4,3,2
(n=4 main reactant)

m = 2 or 1
(m=2 main product)

(Ad-3)

[Surfactant]

- Su-1: compound shown below ("%" representing the proportion of a repeating unit is mol%; weight-average molecular weight: 14,000)

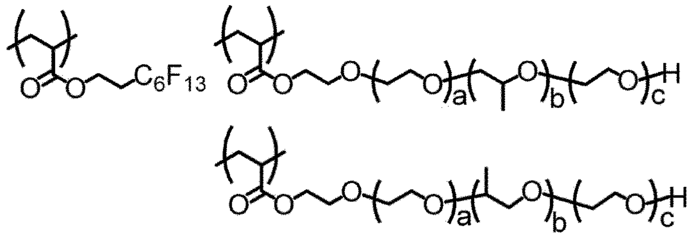

a+c=14
b=17

62% 38%

• Su-2: FTERGENT FTX-218 (manufactured by NEOS COMPANY LIMITED)

[Polymerization inhibitor]

• In-1: p-methoxyphenol
• In-2: 1,4-benzoquinone

[Solvent]

• S-1: propylene glycol monomethyl ether acetate (PGMEA)
• S-2: propylene glycol monomethyl ether (PGME)
• S-3: cyclopentanone

<Evaluation>

[Evaluation of light scattering properties]

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 30 minutes. Next, using an i-ray stepper exposure device FPA-3000 i5+ (manufactured by Canon Corporation), the coating film was exposed to light having a wavelength of 365 nm at an exposure amount of 1000 $mJ/cm^2$. Thereafter, a heating treatment (post-baking) was performed for 5 minutes used a hot plate at 200°C to form a film.

Using a spectrophotometer (manufactured by Hitachi High-Technologies Corporation, U-4100), the light transmittance of the obtained film in a wavelength in a range of 400 to 1,000 nm was measured, and a difference in transmittance between 450 nm and 940 nm was measured. The transmittance difference ΔT% was evaluated according to the following standard. The evaluation results are described in the column of "Light scattering properties" of tables described later.

-Evaluation standard-

5: ΔT% was less than 13%.
4: ΔT% was 13% or more and less than 16%.
3: ΔT% was 16% or more and less than 19%.
2: ΔT% was 19% or more and less than 25%.
1: ΔT% was 25% or more.

[Evaluation of storage stability]

Each composition obtained above was placed in a container having a liquid height of 20 cm and allowed to stand in a refrigerator (4 ± 1°C) for 12 months. After standing, a 1 cm solution from the top and a 1 cm solution from the bottom were sampled, and each sample was applied to an 8-inch (= 203.2 mm) glass wafer with an undercoat layer

(manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 120 minutes.

Next, using an i-ray stepper exposure device FPA-3000 i5+ (manufactured by Canon Corporation), the coating film was exposed to light having a wavelength of 365 nm at an exposure amount of 1,000 mJ/$cm^2$. Thereafter, a heating treatment (post-baking) was performed for 5 minutes used a hot plate at 200°C to form a film.

Using a spectrophotometer (manufactured by Hitachi High-Technologies Corporation, U-4100), the transmittance of the obtained film at a wavelength of 400 to 1,000 nm was measured.

The maximum value (T1) of the transmittance of the film formed of the 1 cm solution from the top at a wavelength of 400 to 1,000 nm, the maximum value (T2) of the transmittance of the film formed of the 1 cm solution from the bottom at a wavelength of 400 to 1,000 nm, and ΔT which is the difference (T1 - T2) were determined, and storage stability was evaluated according to the following evaluation standard. As ΔT is smaller, the storage stability is better. The evaluation results are described in the column of "Storage stability" of tables described later.

-Evaluation standard-

5: ΔT was 3% or less.
4: ΔT was more than 3% and 5% or less.
3: ΔT was more than 5% and 10% or less.
2: ΔT was more than 10% and 20% or less.
1: ΔT was more than 20% and 100% or less.

[Evaluation of foreign matter over time]

Each composition was applied to a silicon substrate using a spin coater (manufactured by Mikasa Co., Ltd.) such that the film thickness after post-baking was 4 μm. As a result, a coating film was formed. Next, using a hot plate, heating (pre-baking) was performed at 100°C for 120 seconds, and then the mixture was allowed to stand for 72 hours. Next, using an i-ray stepper exposure device FPA-3000 i5+ (manufactured by Canon Corporation), after the entire exposure with an exposure amount of 1000 mJ/$cm^2$, heating (post-baking) was performed again at 200°C for 300 seconds using a hot plate to obtain a film. The obtained film was observed using a scanning electron microscope (measurement magnification = 10,000 times), and the number of foreign matters present in a range of 10 μm × 15 μm was measured. The generation of foreign matter over time was evaluated according to the following evaluation standard. As the number of foreign matters is smaller, the generation of the foreign matter over time is more suppressed. The evaluation results are described in the column of "Foreign matter over time" of tables described later.

-Evaluation standard-

5: no foreign matter was present in the range of 10 μm × 15 μm.
4: more than 0 and 5 or less of foreign matters were present in the range of 10 μm × 15 μm.
3: more than 5 and 10 or less of foreign matters were present in the range of 10 μm × 15 μm.
2: more than 10 and 100 or less of foreign matters were present in the range of 10 μm × 15 μm.
1: more than 100 of foreign matters were present in the range of 10 μm × 15 μm.

[Evaluation of adhesiveness]

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the film thickness after post-baking was 4 μm. The coating film was heat-treated (pre-baked) using a hot plate at 110°C for 120 minutes.

Next, using an i-ray stepper exposure device FPA-3000 i5+ (manufactured by Canon Corporation), the coating film was exposed to light having a wavelength of 365 nm (exposure amount: 50 to 1,700 mJ/$cm^2$) through a pattern mask which forms 25 lines with a width of 100 μm and a length of 1,000 μm.

Next, the composition layer after exposure was developed using a developing device (Act8 manufactured by Tokyo Electron Limited.). Shower development was performed at 23°C for 60 seconds using, as a developer, a tetramethylammonium hydroxide (TMAH) 0.3 mass% aqueous solution. Thereafter, the resultant was rinsed by a spin shower using pure water, spin-dried, and then heat-treated (post-baked) for 5 minutes using a hot plate at 200°C to obtain a pattern.

The difference ΔE (E2 - E1) between the minimum exposure amount E1 required to form the pattern with a width of 100 μm and a length of 1,000 μm and the minimum exposure amount E2 required for all the patterns to adhere is obtained, and adhesiveness was evaluated according to the following evaluation standard. The evaluation results are described in the column of "Adhesiveness" of tables described later. As ΔE is smaller, the adhesiveness is better. The close adhesion of the patterns and the size of the patterns were observed using an optical microscope (magnification: 200 times).

-Evaluation standard-

5: ΔE was more than 100 $mJ/cm^2$.
4: ΔE was more than 0 $mJ/cm^2$ and 100 $mJ/cm^2$ or less.
3: ΔE was 0 $mJ/cm^2$.
2: at the exposure amount of 50 to 1,700 $mJ/cm^2$, at least one line pattern with a width of 100 μm and a length of 1,000 μm could be formed, but not all 25 patterns could be formed.
1: at the exposure amount of 50 to 1,700 $mJ/cm^2$, a pattern with a width of 100 μm and a length of 1,000 μm could not be formed.

[Measurement of maximum value of transmittance]

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 30 minutes. Next, using an i-ray stepper exposure device FPA-3000 i5+ (manufactured by Canon Corporation), the coating film was exposed to light having a wavelength of 365 nm at an exposure amount of 1,000 $mJ/cm^2$. Thereafter, a heating treatment (post-baking) was performed for 5 minutes used a hot plate at 200°C to form a film having a thickness of 4 μm.

Using a spectrophotometer (manufactured by Hitachi High-Technologies Corporation, U-4100), the transmittance of the obtained film to light having a wavelength in a range of 400 to 1,000 nm was measured, and the maximum value of the transmittance in the range was measured. The maximum value of the transmittance was evaluated based on the following standard. The evaluation results are described in the column of "Maximum value of transmittance" of tables described later.

5: maximum value of the transmittance was 50% or less.
4: maximum value of the transmittance was more than 50% and 60% or less.
3: maximum value of the transmittance was more than 60% and 70% or less.
2: maximum value of the transmittance was more than 70% and 80% or less.
1: maximum value of the transmittance was more than 80%.

[Confirmation of phase separation state]

Each of the compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 30 minutes. Next, using an i-ray stepper exposure device FPA-3000 i5+ (manufactured by Canon Corporation), the coating film was exposed to light having a wavelength of 365 nm at an exposure amount of 1,000 $mJ/cm^2$. Thereafter, a heating treatment (post-baking) was performed for 5 minutes used a hot plate at 200°C to form a film.

Using a scanning electron microscope (SEM) (S-4800H, manufactured by Hitachi High-Technologies Corporation), a cross section of the obtained film in a thickness direction was observed (magnification: 10000 times), and the uneven distribution state of the white particles was confirmed to check whether a phase separation state was formed. The evaluation results are described in the column of "Phase separation state" of tables described later.

A: phase-separated structure between a first phase including the white particles and a second phase with a lower content of the white particles than the first phase was formed in the film.
B: phase-separated structure was not formed.

[Difference in SP value between dispersant and binder]

In the composition, the difference between the SP value of the resin in the dispersion liquid used as a dispersant and the SP value of the resin in the composition used as a binder is described in the column of "Difference in SP value between dispersant and binder ($MPa^{1/2}$)" of tables.

[Table 12]

| | Light scattering properties | Storage stability | Foreign matter over time | Adhesiveness | Maximum value of transmittance | Phase separation state | Difference in SP value between dispersant and binder ($MPa^{0.5}$) |
|---|---|---|---|---|---|---|---|
| Example 1 | 2 | 5 | 4 | 4 | 2 | A | 0.44 |
| Example 2 | 3 | 4 | 4 | 4 | 3 | A | 0.44 |
| Example 3 | 4 | 4 | 4 | 4 | 4 | A | 0.44 |
| Example 4 | 5 | 4 | 4 | 4 | 5 | A | 0.44 |
| Example 5 | 3 | 5 | 4 | 4 | 3 | A | 0.44 |
| Example 6 | 5 | 4 | 4 | 4 | 5 | A | 0.44 |
| Example 7 | 4 | 3 | 4 | 3 | 4 | A | 0.29 |
| Example 8 | 3 | 3 | 4 | 4 | 3 | A | 0.19 |
| Example 9 | 4 | 4 | 4 | 4 | 4 | A | 0.32 |
| Example 10 | 5 | 4 | 4 | 4 | 5 | A | 0.56 |
| Example 11 | 5 | 5 | 4 | 4 | 5 | A | 0.69 |
| Example 12 | 4 | 3 | 4 | 4 | 4 | A | 0.60 |
| Example 13 | 5 | 5 | 4 | 4 | 5 | A | 0.34 |
| Example 14 | 5 | 5 | 4 | 4 | 5 | A | 0.29 |
| Example 15 | 3 | 3 | 4 | 4 | 3 | A | 0.64 |
| Example 16 | 3 | 3 | 5 | 4 | 3 | A | 0.63 |
| Example 17 | 5 | 4 | 4 | 4 | 5 | A | 0.44 |
| Example 18 | 5 | 4 | 4 | 4 | 5 | A | 0.44 |

(continued)

| | Light scattering properties | Storage stability | Foreign matter over time | Adhesiveness | Maximum value of transmittance | Phase separation state | Difference in SP value between dispersant and binder ($MPa^{0.5}$) |
|---|---|---|---|---|---|---|---|
| Example 19 | 5 | 4 | 4 | 4 | 5 | A | 0.44 |
| Example 20 | 5 | 4 | 4 | 4 | 5 | A | 0.44 |
| Example 21 | 5 | 4 | 3 | 4 | 5 | A | 0.45 |
| Example 22 | 4 | 4 | 5 | 4 | 4 | A | 0.39 |
| Example 23 | 3 | 4 | 5 | 4 | 3 | A | 0.33 |
| Example 24 | 4 | 4 | 4 | 4 | 4 | A | 0.26 |
| Example 25 | 4 | 4 | 5 | 4 | 4 | A | 0.31 |
| Example 26 | 5 | 4 | 3 | 4 | 5 | A | 0.53 |
| Example 27 | 4 | 4 | 4 | 4 | 4 | A | 0.39 |
| Example 28 | 5 | 4 | 4 | 4 | 5 | A | 0.49 |
| Example 29 | 5 | 4 | 4 | 4 | 5 | A | 0.53 |
| Example 30 | 4 | 4 | 4 | 4 | 4 | A | 0.34 |
| Example 31 | 4 | 3 | 4 | 4 | 4 | A | 0.44 |
| Example 32 | 5 | 5 | 4 | 4 | 5 | A | 0.44 |
| Example 33 | 5 | 5 | 4 | 3 | 5 | A | 0.44 |
| Example 34 | 4 | 4 | 4 | 4 | 4 | A | 0.40 |
| Example 35 | 3 | 4 | 5 | 4 | 3 | A | 0.18 |
| Example 36 | 3 | 4 | 2 | 4 | 3 | A | 0.15 |
| Example 37 | 4 | 4 | 5 | 4 | 4 | A | 0.26 |
| Example 38 | 3 | 4 | 2 | 4 | 3 | A | 0.33 |

(continued)

| | Light scattering properties | Storage stability | Foreign matter over time | Adhesiveness | Maximum value of transmittance | Phase separation state | Difference in SP value between dispersant and binder ($MPa^{0.5}$) |
|---|---|---|---|---|---|---|---|
| Example 39 | 5 | 4 | 4 | 4 | 5 | A | 0.45 |
| Example 40 | 5 | 4 | 4 | 4 | 5 | A | 0.44 |
| Example 41 | 5 | 4 | 4 | 4 | 5 | A | 0.44 |

[Table 13]

| | Light scattering properties | Storage stability | Foreign matter over time | Adhesiveness | Maximum value of transmittance | Phase separation state | Difference in SP value between dispersant and binder ($MPa^{0.5}$) |
|---|---|---|---|---|---|---|---|
| Example 42 | 5 | 4 | 4 | 4 | 5 | A | 0.45 |
| Example 43 | 5 | 4 | 4 | 4 | 5 | A | 0.44 |
| Example 44 | 5 | 4 | 4 | 4 | 5 | A | 0.44 |
| Example 45 | 5 | 4 | 4 | 4 | 5 | A | 0.44 |
| Example 46 | 5 | 3 | 4 | 4 | 5 | A | 0.44 |
| Example 47 | 4 | 4 | 4 | 4 | 4 | A | 0.26 |
| Example 48 | 5 | 4 | 4 | 4 | 5 | A | 0.58 |
| Example 49 | 3 | 4 | 4 | 4 | 3 | A | 0.02 |
| Example 50 | 4 | 4 | 4 | 4 | 4 | A | 0.23 |
| Example 51 | 4 | 4 | 4 | 4 | 4 | A | 0.25 |
| Example 52 | 2 | 4 | 5 | 4 | 2 | A | 0.29 |
| Example 53 | 2 | 4 | 3 | 4 | 2 | A | 0.41 |
| Example 54 | 5 | 4 | 4 | 4 | 5 | A | 0.44 |
| Example 55 | 5 | 4 | 4 | 4 | 5 | A | 0.44 |
| Example 56 | 5 | 4 | 4 | 4 | 5 | A | 0.44 |
| Example 57 | 5 | 4 | 4 | 4 | 5 | A | 0.44 |
| Example 58 | 5 | 4 | 4 | 4 | 5 | A | 0.44 |
| Example 59 | 5 | 4 | 4 | 4 | 5 | A | 0.44 |
| Example 60 | 5 | 4 | 4 | 4 | 5 | A | 0.44 |
| Example 61 | 5 | 4 | 4 | 4 | 5 | A | 0.44 |
| Example 62 | 5 | 4 | 4 | 4 | 5 | A | 0.44 |
| Example 63 | 5 | 4 | 4 | 4 | 5 | A | 0.44 |
| Example 64 | 5 | 4 | 4 | 4 | 5 | A | 0.44 |

(continued)

| | Light scattering properties | Storage stability | Foreign matter over time | Adhesiveness | Maximum value of transmittance | Phase separation state | Difference in SP value between dispersant and binder ($MPa^{0.5}$) |
|---|---|---|---|---|---|---|---|
| Example 65 | 5 | 4 | 4 | 4 | 5 | A | 0.44 |
| Example 66 | 5 | 4 | 4 | 4 | 5 | A | 0.44 |
| Example 67 | 5 | 4 | 4 | 4 | 5 | A | 0.44 |
| Example 68 | 5 | 4 | 4 | 4 | 5 | A | 0.44 |
| Example 69 | 5 | 4 | 4 | 4 | 5 | A | 0.44 |
| Example 70 | 5 | 4 | 4 | 4 | 5 | A | 0.44 |
| Example 71 | 5 | 4 | 4 | 3 | 5 | A | 0.44 |
| Example 72 | 5 | 4 | 4 | 4 | 5 | A | 0.44 |
| Example 73 | 5 | 4 | 4 | 4 | 5 | A | 0.44 |
| Example 74 | 5 | 4 | 4 | 4 | 5 | A | 0.44 |
| Example 75 | 5 | 4 | 4 | 4 | 5 | A | 0.44 |
| Example 76 | 5 | 4 | 4 | 4 | 5 | A | 0.44 |
| Example 77 | 5 | 4 | 4 | 4 | 5 | A | 0.44 |
| Example 78 | 4 | 3 | 4 | 3 | 4 | A | 0.40 |
| Example 79 | 2 | 4 | 4 | 4 | 2 | A | 0.59 |
| Comparative Example 1 | 1 | 1 | 4 | 3 | 1 | A | 0.44 |
| Comparative Example 2 | 1 | 4 | 4 | 4 | 1 | A | 0.44 |
| Comparative Example 3 | 1 | 4 | 1 | 1 | 1 | A | 0.15 |
| Comparative Example 4 | 5 | 4 | 4 | 1 | 5 | A | 0.71 |
| Comparative Example 5 | 1 | 4 | 5 | 3 | 1 | B | 0.47 |

From the above results, it can be seen that the composition according to Examples is excellent in storage stability, and the film obtained by the composition according to Examples is excellent in light scattering properties and adhesiveness.

In addition, the evaluation of the light scattering properties, the evaluation of the storage stability, the measurement of the maximum value of the transmittance, and the confirmation of the phase separation state were performed by the same methods as described above, except that, in the evaluation of the light scattering properties, the evaluation of the storage stability, the measurement of the maximum value of the transmittance, and the confirmation of the phase separation state, the operation of "applied using a spin coater such that the thickness after post-baking was 4 μm" was changed to "applied using a spin coater such that the thickness after post-baking was 8 μm". All the evaluation results were the same as the evaluation results in the case of 4 μm.

In addition, the evaluation of the adhesiveness and the evaluation of the foreign matter over time were performed by the same methods as described above, except that, in the evaluation of the adhesiveness and the evaluation of the foreign matter over time, the operation of "such that the film thickness after pre-baking was 4 μm" was changed to "such that the film thickness after pre-baking was 4 μm". All the evaluation results were the same as the evaluation results in

the case of 4 μm.

(Example 101)

An optical sensor was produced with reference to the description of WO2016/091757A (hereinafter, referred to as "Reference A").

In the optical sensor described in Fig. 1 of Reference A, the optical sensor described in Fig. 1 of Reference A was produced with reference to the description of Reference A, except that a diffuser 10 was changed to the film composed of the composition prepared in any of Examples 1 to 78 described above.

The obtained optical sensor operated normally in any case of the composition prepared in any of Examples 1 to 78.

Explanation of References

1, 2: optical sensor
101: photoelectric conversion element
111 to 114: pixels
110: optical filter
121, 122: film
130: transparent support

## Claims

1. A composition comprising:

white particles having a refractive index of 2.0 or more and an average primary particle diameter of 200 nm or less;
a film-forming component including at least one selected from the group consisting of a resin and a polymerizable monomer; and
a solvent,
wherein the film-forming component includes two or more kinds of resins, or includes one or more kinds of resins and one or more kinds of polymerizable monomers,
at least one of the resin is a resin A which contains a constitutional unit A having a formula weight of 1,000 or more and including a constitutional unit GF and a constitutional unit B having an acidic group, and satisfies at least one of the following requirement 1 or the following requirement 2, and
the constitutional unit GF is a constitutional unit selected from the group consisting of a constitutional unit represented by Formula (1-1) and a constitutional unit represented by Formula (1-2),
requirement 1: the constitutional unit A includes a molecular chain containing two or more kinds of the constitutional units GF,
requirement 2: the resin A contains two or more kinds of the constitutional units A having different structures of the constitutional unit GF,

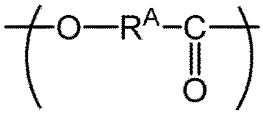 (1-1) 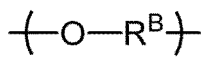 (1-2)

in Formula (1-1) or Formula (1-2), $R^A$ represents a divalent organic group and $R^B$ represents a divalent organic group.

2. The composition according to claim 1, wherein, in a case where the composition is heated to form a film having a thickness of 4 μm, a phase-separated structure between a first phase including the white particles and a second phase with a lower content of the white particles than the first phase is formed in the film.

3. The composition according to claim 1 or 2, wherein, in a case where the composition is heated to form a film having a thickness of 4 μm, a maximum value of a transmittance of the film to light having a wavelength in a range of 400

to 1,000 nm is 80% or less.

4. The composition according to any one of claims 1 to 3, wherein at least one of the resin satisfies the requirement 1.

5. The composition according to any one of claims 1 to 4,

wherein the constitutional unit A contains a constitutional unit L1 represented by Formula (1) and a constitutional unit L2 selected from the group consisting of a constitutional unit represented by Formula (2) and a constitutional unit represented by Formula (3),

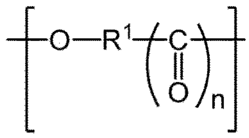 (1) 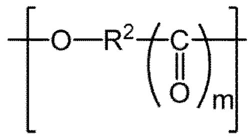 (2)

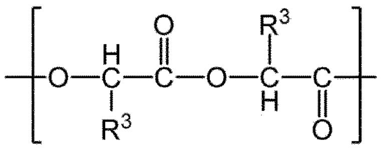 (3)

in Formula (1), $R^1$ represents an alkylene group, and n represents 0 or 1, in Formula (2), $R^2$ represents an alkylene group different from $R^1$, and m represents 0 or 1, in Formula (3), $R^3$'s each independently represent an alkyl group.

6. The composition according to claim 5,

wherein the constitutional unit A is a constitutional unit represented by Formula (A), and
the constitutional unit B is a constitutional unit represented by Formula (B),

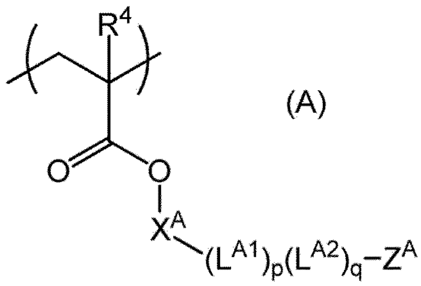 (A) 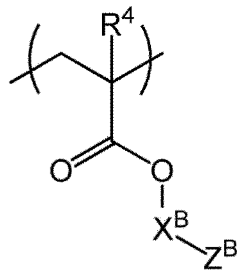 (B)

in Formula (A), $R^4$ represents a hydrogen atom or an alkyl group, $X^A$ represents a single bond or a divalent linking group, p and q each represent an integer of 1 or more, $Z^A$ represents a hydrogen atom or a monovalent organic group, and $L^{A1}$ and $L^{A2}$ each represent the constitutional unit L1 and the constitutional unit L2,
in Formula (B), $R^4$ represents a hydrogen atom or an alkyl group, $X^B$ represents a single bond or a divalent linking group, $Z^B$ represents a hydrogen atom, an acidic group selected from the group consisting of a carboxy group, a phosphoric acid group, a sulfonic acid group, a phenolic hydroxy group, and a thiol group, or a derivative group of these groups, and in a case where $Z^B$ is a hydrogen atom, $X^B$ represents a single bond.

7. The composition according to claim 6, wherein a sum of p and q in Formula (A) is more than 5 and less than 120.

8. The composition according to any one of claims 5 to 7, wherein a mass ratio of the constitutional unit L1 to the constitutional unit L2 is more than 50/50 and less than 95/5.

9. The composition according to any one of claims 5 to 7,

wherein the constitutional unit represented by Formula (2) is included as the constitutional unit L2, and

$R^1$ in Formula (1) and $R^2$ in Formula (2) are each an ethylene group, a propylene group, a 1-ethylethylene group, a trimethylene group, a 1-methyltrimethylene group, a 1-butyltrimethylene group, a tetramethylene group, a 2-methyltetramethylene group, a 1-tridecyltetramethylene group, a pentamethylene group, a 1-methylpentamethylene group, a 3-methylpentamethylene group, a 1-ethylpentamethylene group, or a 1-decylpentamethylene group.

**10.** The composition according to any one of claims 1 to 9, wherein an acid value of the resin A is 20 to 200 mgKOH/g.

**11.** The composition according to any one of claims 1 to 10, wherein the film-forming component further includes a resin B different from the resin A.

**12.** The composition according to claim 11, wherein one of the resin A and the resin B is a dispersant for the white particles and the other is a binder.

**13.** The composition according to claim 11 or 12, wherein a difference in SP value between the resin A and the resin B is 0.20 $MPa^{0.5}$ or more.

**14.** The composition according to any one of claims 11 to 13, wherein the resin B is a star polymer.

**15.** The composition according to any one of claims 11 to 14, wherein a weight-average molecular weight of the resin B is 5,000 or more.

**16.** The composition according to any one of claims 11 to 15, wherein the resin B is included in an amount of 10 to 250 parts by mass with respect to 100 parts by mass of the resin A.

**17.** A film consisting of the composition according to any one of claims 1 to 16.

**18.** A film comprising:

white particles having a refractive index of 2.0 or more and an average primary particle diameter of 200 nm or less; and
a film-forming component including at least one selected from a resin and a polymerizable monomer or a cured substance of the film-forming component,
wherein the film-forming component includes two or more kinds of resins, or includes one or more kinds of resins and one or more kinds of polymerizable monomers,
at least one of the resin is a resin A which contains a constitutional unit A having a formula weight of 1,000 or more and including a constitutional unit GF and a constitutional unit B having an acidic group, and satisfies at least one of the following requirement 1 or the following requirement 2, and
the constitutional unit GF is selected from the group consisting of a constitutional unit represented by Formula (1-1) and a constitutional unit represented by Formula (1-2),
requirement 1: the constitutional unit A includes a molecular chain containing two or more kinds of the constitutional units GF,
requirement 2: the resin A contains two or more kinds of the constitutional units A having different structures of the constitutional unit GF,

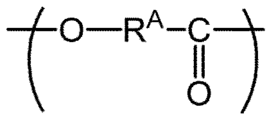 (1-1) 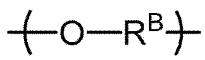 (1-2)

in Formula (1-1) or Formula (1-2), $R^A$ represents a divalent organic group and $R^B$ represents a divalent organic group.

**19.** An optical sensor comprising the film according to claim 17 or 18.

FIG. 1

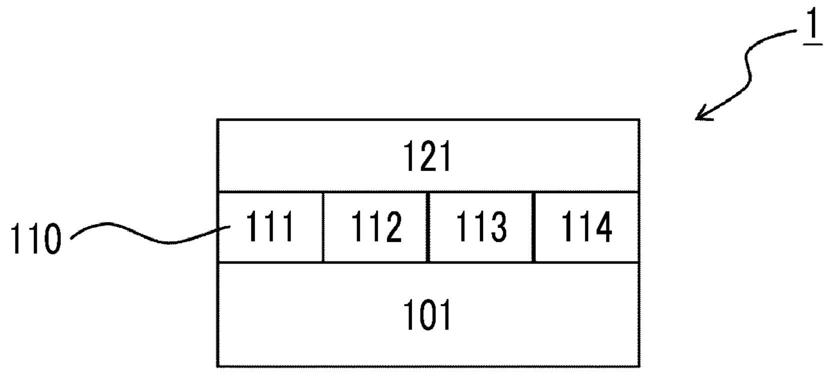


FIG. 2

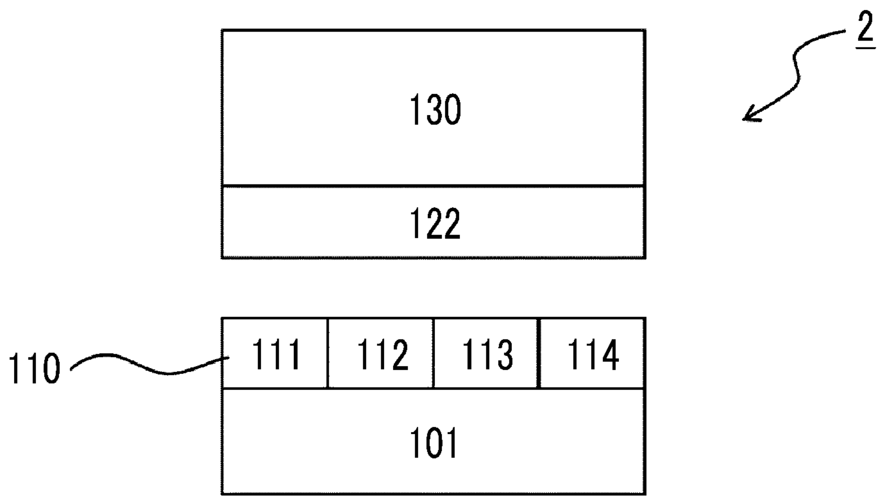

**INTERNATIONAL SEARCH REPORT**

International application No. PCT/JP2021/005797

A. CLASSIFICATION OF SUBJECT MATTER
C08L 33/02(2006.01)i; C08L 33/14(2006.01)i; C09D 133/04(2006.01)i; C09D 201/02(2006.01)i; G02B 5/02(2006.01)i; C08K 3/22(2006.01)i; C09D 7/61(2018.01)i; C09D 7/65(2018.01)i
FI: C09D201/02; C08L33/14; C08K3/22; G02B5/02 B; C08L33/02; C09D7/61; C09D7/65; C09D133/04
According to International Patent Classification (IPC) or to both national classification and IPC

B. FIELDS SEARCHED
Minimum documentation searched (classification system followed by classification symbols)
C08K3/00-13/08; C08L1/00-101/14; C09D1/00-10/00; C09D101/00-201/10; G02B5/00-5/136; G02B5/20-5/28

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/173570 A1 (FUJIFILM CORPORATION) 27 September 2018 (2018-09-27) claims 1, 9-12, 15-19, paragraphs [0001], [0030]-[0031], [0038]-[0048], [0079]-[0124], [0192]-[0194], examples 1-6, 10-12, table 1 | 1-19 |
| A | WO 2018/066296 A1 (FUJIFILM CORPORATION) 12 April 2018 (2018-04-12) claims 1-2, 8-24, paragraphs [0001], [0018]-[0089], [0091]-[0093], [0126]-[0152], [0162]-[0165], [0182]-[0207], examples 2-3, tables 1-3 | 1-19 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 April 2021 (15.04.2021) | 11 May 2021 (11.05.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/005797

C (Continuation). DOCUMENTS CONSIDERED TO BE RELEVANT

| Category* | Citation of document, with indication, where appropriate, of the relevant passages | Relevant to claim No. |
|---|---|---|
| A | WO 2018/056127 A1 (FUJIFILM CORPORATION) 29 March 2018 (2018-03-29) claims 1-4, 13-18, paragraphs [0014], [0054]-[0069], [0084]-[0086], [0101]-[0117], [0120]-[0133], [0200]-[0211], examples 1-9, tables 2-4 | 1-19 |
| A | WO 2019/069609 A1 (FUJIFILM CORPORATION) 11 April 2019 (2019-04-11) claims 1, 10, 14-16, paragraphs [0044]-[0163], [0221]-[0247], examples 1-20, tables 1-3 | 1-19 |
| A | JP 2014-62221 A (FUJIFILM CORPORATION) 10 April 2014 (2014-04-10) claims 1, 3-12, 16-24, paragraphs [0001], [0019]-[0112], [0115]-[0138], [0163]-[0177], [0195]-[0227], examples 1-69, tables 1-4 | 1-19 |
| A | WO 2015/053183 A1 (FUJIFILM CORPORATION) 16 April 2015 (2015-04-16) claims 1-9, 12-16, paragraphs [0001], [0004]-[0005], [0011]-[0070], [0081]-[0114], [0123]-[0128], [0135], examples 1-26, tables 1-4 | 1-19 |

Form PCT/ISA/210 (continuation of second sheet) (January 2015)

**INTERNATIONAL SEARCH REPORT**
Information on patent family members

International application No.
PCT/JP2021/005797

| Patent Documents referred in the Report | Publication Date | Patent Family | Publication Date |
|---|---|---|---|
| WO 2018/173570 A1 | 27 Sep. 2018 | US 2019/0332008 A1 claims 1, 9-12, 15-19, paragraphs [0001], [0067]-[0069], [0083]-[0094], [0135]-[0187], [0277]-[0281], examples 1-6, 10-12, tables 1-3<br>KR 10-2019-0100363 A<br>TW 201835234 A | |
| WO 2018/066296 A1 | 12 Apr. 2018 | (Family: none) | |
| WO 2018/056127 A1 | 29 Mar. 2018 | (Family: none) | |
| WO 2019/069609 A1 | 11 Apr. 2019 | KR 10-2020-0040834 A claims 1, 10, 14-16, paragraphs [0111]-[0349], [0501]-[0572], examples 1-20, tables 1-3 | |
| JP 2014-62221 A | 10 Apr. 2014 | US 2015/0166783 A1 claims 1, 3-12, 16-24, paragraphs [0002], [0065]-[0237], [0257]-[0303], [0355]-[0387], [0422]-[0565], examples 1-69, tables 1-4<br>EP 2891685 A1<br>KR 10-2015-0038379 A<br>CN 104603209 A | |
| WO 2015/053183 A1 | 16 Apr. 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016161859 A
- WO 2017150112 A
- JP 2015067794 A
- JP 2013237593 A
- WO 2007060884 A
- JP 2013249417 A
- JP 2012208494 A
- US 20120235099 A
- JP 2012198408 A
- JP 2010168539 A
- JP 2013029760 A
- JP 2014177613 A
- JP 2013043962 A
- WO 2018163668 A
- JP 2012137564 A
- JP 2017194662 A
- JP 2007269779 A
- JP 2014089408 A
- JP 2010054632 A
- WO 2015166779 A
- JP 2014130173 A
- JP 6301489 B
- JP 2001233842 A
- JP 2000080068 A
- JP 2006342166 A
- JP 2000066385 A
- JP 2004534797 A
- JP 2017019766 A
- JP 6065596 B
- WO 2015152153 A
- WO 2017051680 A
- JP 2017198865 A
- WO 2017164127 A
- WO 2013167515 A
- JP 2012014052 A
- JP 2014137466 A
- WO 2013083505 A
- JP 2010262028 A
- JP 2014500852 A
- JP 2013164471 A
- JP 2013114249 A
- JP 4223071 B
- WO 2015036910 A
- JP 2010527339 A
- JP 2011524436 A
- WO 2015004565 A
- JP 2016532675 A
- WO 2017033680 A
- JP 2013522445 A
- WO 2016034963 A
- JP 2017523465 A
- JP 2017167399 A
- JP 2017151342 A
- JP 2009258603 A
- JP 2011252065 A
- WO 2017159910 A
- JP 2015034961 A
- JP 2012208374 A
- JP 2013068814 A
- JP 2009288703 A
- JP 2009242604 A
- WO 2017159190 A
- JP 2010106268 A
- US 20110124824 A
- JP 2014041318 A
- WO 2014017669 A
- JP 2011132503 A
- JP 2016216602 A
- JP 2010032698 A
- JP 2010164965 A
- JP 2015117327 A
- JP 2015123351 A
- JP 2015157893 A
- JP 2015194521 A
- JP 2012046629 A
- JP 2009145395 A
- JP 2003262716 A
- JP 2003185831 A
- JP 2003261827 A
- JP 2012126830 A
- JP 2006169325 A
- KR 1020170122130 A
- JP 2013064993 A
- WO 2016091757 A

### Non-patent literature cited in the description

- Ultrafine Particles and Materials. SHOKABO Co., Ltd, 1993
- Manufacturing & Application of Microspheres & Powders. CMC Publishing Co., Ltd, 2005

- **A. J. LEO.** Comprehensive Medicinal Chemistry. Pergamon Press, 1990, vol. 4, 295
- **C. HANSCH ; A. J. LEO.** SUbstituent Constants For Correlation Analysis in Chemistry and Biology. John Wiley & Sons
- **A. J. LEO.** Calculating logPoct from structure. *Chem. Rev.,* 1993, vol. 93, 1281-1306
- **TOSHINAO OKITSU.** *The Journal of The Adhesion Society of Japan,* 1993, vol. 29 (5), 204-211
- *J. C. S. Perkin II,* 1979, 1653-1660
- *J. C. S. Perkin II,* 1979, 156-162
- *Journal of Photopolymer Science and Technology,* 1995, 202-232
- Complete Works of Dispersion Technology. Johokiko Co., Ltd, 15 July 2005
- Dispersion Technique focusing on Suspension (Solid/Liquid Dispersion) and Practical Industrial Application, Comprehensive Reference List. Publishing Department of Management Development Center, 10 October 1978